# EUROPEAN PATENT SPECIFICATION

(11) **EP 2 629 540 B1**
(45) Date of publication and mention of the grant of the patent: **01.04.2020**
(21) Application number: 13155194.7
(22) Date of filing: 14.02.2013
(51) Int. Cl.: H04N 21/4363, H04N 21/439

(54) **Data transmission apparatus, data receiving apparatus, data transceiving system, data transmission method and data receiving method**
Datenübertragungsvorrichtung, Datenempfangsvorrichtung, Datensendeempfangssystem, Datenübertragungsverfahren und Datenempfangsverfahren
Appareil de transmission de données, appareil de réception de données, système d'émission-réception de données, procédé de transmission de données et procédé de réception de données

(30) Priority: 15.02.2012 US 201261599154 P; 24.02.2012 US 201261602975 P; 24.02.2012 US 201261602978 P; 29.02.2012 US 201261604892 P; 29.02.2012 US 201261604844 P; 16.03.2012 US 201261611822 P; 21.03.2012 US 201261613629 P; 23.04.2012 US 201261636879 P; 23.04.2012 US 201261636901 P; 02.05.2012 US 201261641580 P; 16.05.2012 US 201261647628 P; 28.12.2012 KR 20120157114
(43) Date of publication of application: 21.08.2013
(73) Proprietor: Samsung Electronics Co., Ltd., Gyeonggi-do 443-742 (KR)
(72) Inventor: Kim, Jong-hwa, Gyeonggi-do, 443-742 (KR); Kim, Soo-young, Gyeonggi-do (KR); Na, Il-ju, Gyeonggi-do (KR); Yun, Suk-jin, Seoul (KR); Lee, Jae-min, Gyeonggi-do (KR); Lee, Kyeong-jae, Seoul (KR)
(74) Representative: Appleyard Lees IP LLP

(56) References cited:
- EP-A1- 2 023 632
- EP-A1- 2 388 688
- EP-A2- 1 617 413
- WO-A2-2011/005056
- US-A1- 2005 220 193
- CEA - Consumer Electronics Association: "A DTV Profile for Uncompressed High Speed Digital Interfaces CEA-861-E", , 31 March 2008 (2008-03-31), pages 1-160, XP055062580, Retrieved from the Internet: URL:http://blogimg.chinaunix.net/blog/upfi le2/090903185624.pdf [retrieved on 2013-05-13]
- "ISO/IEC 23003-1:2006/FDIS, MPEG Surround", 77. MPEG MEETING;17-07-2006 - 21-07-2006; KLAGENFURT; (MOTION PICTUREEXPERT GROUP OR ISO/IEC JTC1/SC29/WG11),, no. N8324, 21 July 2006 (2006-07-21), XP030014816, ISSN: 0000-0337
- STOCKFISCH M W: "Prospective standards for in-home 3D entertainment products", CONSUMER ELECTRONICS (ICCE), 2010 DIGEST OF TECHNICAL PAPERS INTERNATIONAL CONFERENCE ON, IEEE, PISCATAWAY, NJ, USA, 9 January 2010 (2010-01-09), pages 133-134, XP031640946, ISBN: 978-1-4244-4314-7
- Smpte: "Ultra High Definition Television - Audio Characteristics and Audio Channel Mapping for Program Production", , 9 July 2008 (2008-07-09), XP055577651, Retrieved from the Internet: URL:https://ieeexplore.ieee.org/stampPDF/g etPDF.jsp?tp=&arnumber=7291929 [retrieved on 2019-04-04]

## Description

### CROSS-REFERENCE TO RELATED APPLICATIONS

This application claims priority from U.S. Provisional Application Nos. 61/ 604,892, filed on February 29, 2012, in the U.S. Patent and Trademark Office, 61/602,975, filed on February 24, 2012, in the U.S. Patent and Trademark Office, 61/599,154, filed on February 15, 2012, in the U.S. Patent and Trademark Office, 61/602,978, filed on February 24, 2012, in the U.S. Patent and Trademark Office, 61/611,822, filed on March 16, 2012, in the U.S. Patent and Trademark Office, 61/ 613,629, filed on March 21, 2012, in the U.S. Patent and Trademark Office, 61/636,879, filed on April 23, 2012, in the U.S. Patent and Trademark Office, 61/636,901, filed on April 23, 2012, in the U.S. Patent and Trademark Office, 61/641,580, filed on May 2, 2012, in the U.S. Patent and Trademark Office, 61/647,628, filed on May 16, 2012, in the U.S. Patent and Trademark Office, 61/604,844, filed on February 29, 2012, in the U.S. Patent and Trademark Office, and Korean Patent Application No. 10-2012-0157114, filed on December 28, 2012, in the Korean Intellectual Property Office.

### BACKGROUND

### Field

Apparatuses and methods consistent with the exemplary embodiments relate to a data transceiving apparatus and a method, and more particularly, to a data transmission apparatus, a data receiving apparatus, a data transceiving system, a data transmission method, and a data receiving method for transmitting multi-channel audio signal in the wired interface environment.

### Description of the Related Art

As multimedia environments have been implemented, various wired interface environments for variously performing data transmission have been recently proposed. For example, High-Definition Multimedia Interface (HDML) and Mobile High-Definition Link (MHL) define the transmission standard of the video data in various formats, the audio signal, and the control signal. In particular, owing to the development of the multimedia environment, transmitting standards of multi-channel audio signals for transceiving high-quality sound are being actively discussed.

So far, standards for audio channels from two channels up to eight channels havebeen proposed. In a multimedia environment, however, it may be necessary to propose a transmission standard for an audio signal with more than 9 channels. These multi-channel audio signal transmissions should consider the various formats and device environments that have been used from past times.

Cea: "A DTV Profile for Uncompressed High Speed Digital Interfaces CEA-861-E", 31 March 2008, pages 1 - 160 establishes protocols, requirements and recommendations for the utlization of uncompressed digital interfaces by consumer electronics devices such as digital televisions (DTVs), digital cable, satellite or terrestrial set-top boxes (STBs) and relate peripheral devices including, but not limtied to, DVD players/recorders, and other related sources or sinks.

### SUMMARY

According to the present invention there is provided an apparatus and method as set forth in the appended claims. Other features of the invention will be apparent from the dependent claims, and the description which follows. Any embodiment described in this description that does not fall under the scope of the claims shall however not be considered as part of the invention.

The exemplary embodiments are proposed according to the needs described above, and a purpose of the exemplary embodiments is to provide a data transmission apparatus, a data receiving apparatus, a data transceiving system, a data transmission method, and a data receiving method for transmitting audio signal of more than 9 channels.

According to an aspect of the exemplary embodiments, a data transmitting apparatus includes a packet generation unit which generates a metadata packet for multi-channel audio data; and a transmission unit which transmits the generated metadata packet to a receiving apparatus, wherein the generated metadata packet comprises an Audio Channel Allocation Standard Type(ACAT) field which indicates channel allocation standard type information of the multi-channel audio data.

The channel allocation standard type indicates a channel allocation standard type for at least one of a 10.2 channel format, a 22.2 channel format, a 30.2 channel format, a multi-channel format of more than 30.2 channels, and a multi-channel format of less than 10.2 channels.

The generated metadata packet further comprises a channel count field indicating a number of channels of the multi-channel audio data, and the channel count field is 5 bits.

The generated metadata packet further comprises a 3D channel / speaker allocation field indicating channel information of the multi-channel audio data and speaker allocation information.

The generated metadata packet further comprises at least one field among fields indicating stream identification information corresponding to the multi-channel audio data and a number of full streams, if the data receiving apparatus supports the multi-stream audio.

The multi-channel audio data includes an audio signal of more than 9 channels.

According to another aspect of the exemplary embodiments, a data receiving apparatus includes a receiving unit which receives a metadata packet for multi-channel audio data from a data receiving apparatus; and a packet parsing unit which parses the received metadata packet, wherein the received metadata packet comprises an Audio Channel Allocation Standard Type (ACAT) field which indicates channel allocation standard type information of the multi-channel audio data.

The channel allocation standard type indicates a channel allocation standard type for at least one of a 10.2 channel format, a 22.2 channel format, a 30.2 channel format, a multi-channel format of more than 30.2 channels and a multi-channel format of less than 10.2 channels.

The received metadata packet further comprises a channel count field indicating a number of channels of the multi-channel audio data, and the channel count field comprises 5 bits.

The received metadata packet further comprises a 3D channel / speaker allocation field indicating channel information of the multi-channel audio data and speaker allocation information.

The received metadata packet further comprises at least one field among fields indicating the stream identification information corresponding to the multi-channel audio data and a number of full streams, if the data receiving apparatus supports the multi-stream audio.

The multi-channel audio data includes an audio signal of more than 9 channels.

According to additional aspect of the exemplary embodiments, a data transceiving system includes a data transmitting apparatus which generates and transmits a metadata packet for multi-channel audio data; and a data receiving apparatus which receives and parses the transmitted metadata packet, wherein the generated metadata packet comprises an Audio Channel Allocation Standard Type(ACAT) field which indicates channel allocation standard type information of the multi-channel audio data.

According to a further aspect of the exemplary embodiments, a data transmitting method includes: generating a metadata packet for multi-channel audio data; and transmitting the generated metadata packet to a data receiving apparatus, wherein, the generated metadata packet comprises an Audio Channel Allocation Standard Type(ACAT) field which indicates channel allocation standard type information of the multi-channel audio data.

The generated metadata packet further comprises a channel count field indicating a number of channels of the multi-channel audio data, and the channel count field comprises 5 bits.

The generated metadata packet further comprises a 3D channel / speaker allocation field indicating channel information of the multi-channel audio data and speaker allocation information.

The generated metadata packet further comprises at least one field among fields indicating stream identification information corresponding to the multi-channel audio data and a number of full streams, if the data receiving apparatus supports multi-stream audio.

According to still another aspect of the exemplary embodiments, a data receiving method includes the operations of: receiving a metadata packet for multi-channel audio data from a data receiving apparatus; and parsing the received metadata packet; wherein, the received metadata packet comprises an Audio Channel Allocation Standard Type(ACAT) field which indicates channel allocation standard type information of the multi-channel audio data.

The received metadata packet further comprises a channel count field indicating a number of channels of the multi-channel audio data, and the channel count field comprises 5 bits.

The received metadata packet further comprises a 3D channel / speaker allocation field indicating channel information of the multi-channel audio data and speaker allocation information.

According to yet another exemplary embodiment, there is provided a data transmitting apparatus including a packet generation unit which generates metadata packets comprising information related to 3D audio data, the 3D audio data corresponding to video data, and a transmission unit which transmits the generated metadata packets to a receiving apparatus, wherein the transmission unit transmits at least one of the generated metadata packets per two video fields of the video data.

According to various exemplary embodiments as described above, the exemplary embodiments may provide a standard which transmits audio signals of over 9 channels by generating and transceiving the metadata packet containing an Audio Channel Allocation Standard Type(ACAT) field indicating the channel allocation standard type information of multi-channel audio data.

Additional and/or other aspects and advantages of the exemplary embodiments will be set forth in part in the description which follows and, in part, will be obvious from the description, or may be learned by practice of the exemplary embodiments.

### BRIEF DESCRIPTION OF THE DRAWING FIGURES

The above and/or other aspects of the exemplary embodiments will be more apparent by describing certain exemplary embodiments with reference to the accompanying drawings, in which:
Figure 1 is a view illustrating a transmission timing of 3D audio signal;
Figure 2 is a block diagram showing a configuration of a data transceiving system according to an exemplary embodiment;
Figure 3 is a block diagram showing the configuration of a data transmission apparatus of the data transceiving system according to an exemplary embodiment;
Figure 4 is a block diagram showing the configuration of a data receiving apparatus of the data transceiving system according to an exemplary embodiment;
Figure 5 is a view illustrating a transport stream packet of audio samples in accordance with an exemplary embodiment;
Figure 6 is a view illustrating a transport stream packet of audio samples of another exemplary embodiment;
Figure 7 is a view showing a transmission stream format of an exemplary embodiment;
Figure 8 is a view illustrating a transport packet stream of audio samples according to an exemplary embodiment;
Figures 9 and 10 are views illustrating a transmission stream of multi-streams audio sample packets according to an exemplary embodiment;
Figure 11 is a view illustrating a transmission stream of a multi-stream audio sample packet according to an exemplary embodiment;
Figure 12 is a mimetic diagram showing the transmission of the speaker position information using CEC according to an exemplary embodiment;
Figure 13 is a view illustrating an operation in which a 3D audio sample is transmitted from BDP to TV according to an exemplary embodiment;
Figure 14 is a view illustrating an operation in which multi-stream audio is transmitted from BDP to TV according to an exemplary embodiment;
Figure 15 is a view showing the placement of the speakers for 3D audio channels according to an exemplary embodiment; and
Figures 16 and 17 are flow charts illustrating a data transmission method and a data receiving method according to various exemplary embodiments;

### DETAILED DESCRIPTION OF THE EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as a detailed construction and elements, are provided to assist in a comprehensive understanding of the exemplary embodiments. Thus, it is apparent that the exemplary embodiments may be carried out without those specifically defined matters. Also, well-known functions or constructions are not described in detail since they would obscure the exemplary embodiments with unnecessary detail.

Multi-channel audio as used herein refers to an audio signal with multiple audio channels. The multi-channel audio is generally classified into 2D audio channel and 3D audio channel. A 2D audio channel holds audio channels between 2 channels to 8 channels, and refers to the audio channel where the speakers corresponding to each channel are placed on the same plane. On the other hand, a 3D audio channel holds audio channels including more than 9 channels, and speakers corresponding to each channel are arranged in three-dimensional space including the plane. According to exemplary embodiments, 3D audio, for example, uses layout of the channels that are defined in TTA (10.2ch), SMPTE2036-2 (22.2ch) or IEC62574 (30.2ch). 3D audio may include a down-mixed audio stream as defined herein.

A multiple audio stream (also refered to as multi-stream audio) refers to an audio signal including the audio signal identifying and corresponding to each view in a multi-view environment where more than two identical contents may be watched. Audio signals for each view may be a multi-channel audio. For example, the multi-stream audio may be a set of audio streams which are related in a video stream which is transmitted by using a 3D video format when supporting multi-view videos such as a dual view or quad view game.

Exemplary embodiments explained below relate to audio for a high-speed wired interface on the basis of a 3D Audio of 32 channels (or more) and multi-stream audio (Multi-Stream Audio) for multi-view display. In particular, the changes which will be described below are included to support the new audio features according to exemplary embodiments.

Also, the exemplary embodiments may be applied to various high-speed wired interface transmission standards which include High-Definition Multimedia Interface (HDMI) and Mobile High-Definition Link (MHL) standards in the equivalent range of the technical concept of the exemplary embodiments, so the exemplary embodiments may be implemented in accordance with the similar high-speed wired transmission interface standard.

Exemplary embodiments explained below relate to the definition of a new high-speed wired interface packet (3D Audio Sample Packet, 3D One Bit Audio Sample Packet, Audio Metadata Packet, Multi-Stream Audio Sample Packet and Multi-Stream One Bit Audio Sample Packet) transmitted through a data island period, the packetization process for the packet, and the definition of a high-speed wired interface audio data block within Extended Display Identification Data (E-EDID) to support the discovery of abilities in accordance with the new features. The exemplary embodiments will be described using HDMI as an example, so the specifications that are not newly defined in the specification basically conform to the HDMI1.4b and have not been changed from HDMI1.4b.

According to exemplary embodiments, the content that is disposed with HDMI 1.4b maybe replaced by newly disclosed contents, however, the newly disclosed contents are compatible with the content described in HDMI 1.4b. Also the newly disclosed contents may be applied in other high-speed wired interface environments including MHL.

The present disclosure refers to the following.
HDMI, HDMI Licensing, LLC, "High-Definition Multimedia Interface Specification Version 1.4b", October 11, 2011
TTA, TTAK.KO-07.0098, "Audio Signal Formats for Ultra High Definition (UHD) Digital TV", December 21, 2011
SMPTE, SMPTE 2036-2:2008, "UHDTV Audio characteristics and audio channel mapping for program production", 2008
IEC, IEC 62574 ed 1.0, "Audio, video and multimedia systems General channel allocation of multi-channel audio, April 7, 2011
MHL, LLC, "Mobile High-definition Link version 2.0", February, 2012
*TTA : Telecommunications Technology Association
Overview

Basic audio functions include a function related to a linear pulse-code modulation (L-PCM) audio stream of IEC 60958 having a sample rate of 32 kHz, 44.1 kHz, or 48 kHz. This audio stream may accommodate a normal stereo stream. It may be assumed that there is a high-speed wired interface environment which may optionally transmit the audio with audio channels numbering from 3∼32 and having a sample rate of 192 kHz. In addition, exemplary embodiments are available to transmit the audio stream of IEC 61937 compressed format with a bit rate of up to 49.152 Mbps(for example, surround sound). Exemplary embodiments are available to transmit one bit audio in compressed form as 32 audio channels and DST in one bit audio under the high-speed wired interface environment. Also, the speakers according to exemplary embodiments may transmit a 3D audio stream which may be anywhere in 3D space. The 3D audio stream may include audio channels up to 32 and may be transmitted in a data island period through continuous packets. In addition, when supporting the multi-view video streaming, a plurality of audio streams may be transmitted. (eg, in case of a dual- view / quad view game with a plurality of audio per view). In such a case, 4 stereo audio streams may be supported.

### Definition of Packet in Data Island Period

Table 5-8 is replaced with Table below in section 5.3.1 Packet Header of specification HDMI 1.4b.

**Table 1 - Packet Types**

| Packet Type Value | | Packet Type | Described in Section |
|---|---|---|---|
| 0x00 | | Null | 5.3.2 |
| 0x01 | | Audio Clock Regeneration (N/CTS) | 5.3.3 |
| 0x02 | | Audio Sample(L-PCM and IEC 61937 compressed formats) | 5.3.4 |
| 0x03 | | General Control | 5.3.6 |
| 0x04 | | ACP Packet | 5.3.7 |
| 0x05 | | ISRC1 Packet | 5.3.8 |
| 0x06 | | ISRC2 Packet | " |
| 0x07 | | One Bit Audio Sample Packet | 5.3.9 |
| 0x08 | | DST Audio Packet | 5.3.10 |
| 0x09 | | High Bitrate(HBR) Audio Stream Packet (IEC 61937) | 5.3.11 |
| 0x0A | | Gamut Metadata Packet | 5.3.12 |
| 0x0B | | 3D Audio Sample Packet | 5.3.13 |
| 0x0C | | 3D One Bit Audio Sample Packet | 5.3.14 |
| 0x0D | | Audio Metadata Packet | 5.3.15 |
| 0x0E | | Multi-Stream Audio Sample Packet | 5.3.16 |
| 0x0F | | Multi-Stream One Bit Audio Sample Packet | 5.3.17 |
| 0x80+InfoFrame Type | | InfoFrame Packet | 5.3.5 |
| | 0x81 | Vendor-Specific InfoFrame | 8.2.3 |
| | 0x82 | AVI InfoFrame | 8.2.1 |
| | 0x83 | Source Product Descriptor InfoFrame | - |
| | 0x84 | Audio InfoFrame | 8.2.2 |
| | 0x85 | MPEG Source InfoFrame | - |

| | | | |
|---|---|---|---|
| * For the layout of packets for the InfoFrames, Section 8.2 of the specification HDMI 1.4b should be referred to. | | | |

As illustrated in Table 1, the new packet is defined in section from 0x0B to 0x0F. At 0x0B, a 3D Audio Sample Packet is defined and a 3D One bit Audio Sample Packet is defined at 0x0C. Also, an Audio Meta Data Packet is defined at 0x0D, a Multi-Stream Audio Sample Packet is defined at 0x0E, and a Multi-Stream One bit Audio Sample Packet is defined at 0x0F. The present disclosure will describe the newly defined packets in detail.

In addition, other various alternatives that do not newly define the packet as above will also be described in the present disclosure. The packet definitions of Table 1 are referred to as the first exemplary embodiment. Various alternatives will be referred to as the second exemplary embodiment, the third exemplary embodiment, and so on. Various alternatives will be described based on differences with the first exemplary embodiment.

### 1.1. 3D Audio Sample Packet

### First Exemplary Embodiment

In the first exemplary embodiment, 3D audio in an L-PCM audio format is transmitted using 3D audio sample packets that are newly defined. As described above, the 3D audio is defined as audio where speakers may be disposed at a position each determined by the 3D audio standards (eg 10.2ch, 22.2ch, such 30.2ch) in 3D space.

A 3D audio stream includes up to audio channel 32(or more) and is transmitted via continuous packets in the data island period. Each packet contains up to 8 audio channels. To indicate the position of the packet within the 3D audio sample, the packet header contains a sample start and a sample_present bit. This will be explained later. The following table shows the 3D audio sample packet header.

**Table 2 - 3D Audio Sample Packet Header**

| Byte/Bit # | 7 | 6 | 5 | 4 | 3 | 2 | 1 | 0 |
|---|---|---|---|---|---|---|---|---|
| HB0 | 0 | 0 | 0 | 0 | 1 | 0 | 1 | 1 |
| HB1 | Rsvd (0) | Rsvd (0) | Rsvd (0) | sample_start | sample_present sp3 | Sample_present sp2 | Sample_present sp1 | Sample_present sp0 |
| HB2 | B3 | B2 | B1 | B0 | sample_flat sp3 | sample_flat sp2 | sample_flat sp1 | sample_flat sp0 |

Each field contains the following information.

In table 2, sample_start:[1 bit] indicates that, if sample start is 1, a current packet is the first packet of 3D audio samples. In other words, sample_start indicates the start (beginning) of the 3D audio stream. Sink identifies the beginning part of the sample using sample_start sink.

Besides indicating that the current 3D audio sample packet is the first packet of the 3D audio sample, sample_start = 1 also indicates that the current 3D audio sample packet has been completely packetized as the 8 audio channels. However, when transmitting the down mixed 3D audio below the 8 audio channels, the current 3D audio sample packet may be packetized below 8 audio channels.

Also, sample_start = 0 indicates that the current 3D audio sample packet is the middle or the last packet of the 3D audio sample and that the current 3D audio sample packet contains 8 or less audio channels. Only setting of 5 valid sample_present bits for 3D audio sample packet may be present.

In addition, sample_present.spX: [4 fields, 1 bit each] indicates whether a sub-packet X contains the audio sample or not. One piece of 3D audio sample data may be included in more than two 3D audio sample packets, and each 3D audio sample packet includes four sub-packets. Therefore, each 3D audio sample packet header includes a total of four sample_present bits corresponding to each sub-packet. Each sample_present bit indicates whether a corresponding sub-packet contains a part of the 3D audio or not.

Further, sample_flat.spX: [4 fields, 1 bit each] indicates whether a sub-packet X represents a sample of a flatline. It is only valid, if sample_present.spX is set. If there is no useful audio data that are available in sources, four sample_flat.spX bits are set. This situation may occur when there are changes in a sample rate or temporary stream interruptions. When sample_flat. spX is set, the sub-packet X still represents a sample period, but does not contain useful audio data. Sample_flat.spX bit is only valid if the corresponding sample_present.spX bit is set.

Adjacent 3D audio samples packets may be used to transmit single 3D audio samples including 32 channels of the L-PCM audio 9. (Ie, frames of 5 ∼16 IEC 60958).

Table 3 shows the valid values of Sample_Present Bit.

**Table 3 - Valid Sample_Present Bit Configurations for 3D Audio transmission**

| SP0 | SP1 | SP2 | SP3 | Description |
|---|---|---|---|---|
| 0 | 0 | 0 | 0 | No Subpackets contain parts of the audio sample |
| 1 | 0 | 0 | 0 | Only Subpacket 0 contains one part of the audio sample |
| 1 | 1 | 0 | 0 | Subpackets 0 and 1 contain two contiguous parts of the audio sample |
| 1 | 1 | 1 | 0 | Subpackets 0, 1 and 2 contain three contiguous parts of the audio sample |
| 1 | 1 | 1 | 1 | Subpackets 0, 1 and 3 contain four contiguous parts of the audio sample |

In table 3, B.X : [4 fields, 1 bit each] indicates that when sub-packet X includes the first frame among 192 frames that constitute the IEC 60958 block, it becomes B.X = 1. Otherwise B.X = 0.

The 3D audio sample packet includes an audio samples packet header shown in Table 2 and four sub-packets. Each sub-packet of the 3D audio sample packet includes a 3D audio sample data that is defined according to IEC 60958.

If the source requests a 3D down mixed audio stream, the down-mixed audio stream may be transmitted using the 3D audio sample packet. If Sink does not support the 3D audio, the source may not transmit the 3D audio sample packets. Converting the 3D audio into legacy audio format is beyond the range of the disclosure. A number of different sub-packet layouts exist based on the number of channels. Table 4∼6 below each show an example of the 3D audio packet layout for 12, 24, and 32 channels.

**Table 4 - Example of 3D Audio Sample Packet Layout for 12 channels**

| Packet # | sample_start Value | Num Channels | Samples | Subpkt 0 | Subpkt 1 | Subpkt 2 | Subpkt3 |
|---|---|---|---|---|---|---|---|
| 0 | 1 | 12 | 1 | Chnl 1,2 (sample 0) | Chnl 3,4 (sample 0) | Chnl 5,6 (sample 0) | Chnl 7,8 (sample 0) |
| 1 | 0 | | | Chnl 9, 10 (sample 0) | Chnl 11,12 (sample 0) | empty | empty |

**Table 5 - Example of 3D Audio Sample Packet Layout for 24 channels**

| Packet # | Sample_start Value | Num Channels | samples | Subpkt 0 | Subpkt 1 | Subpkt 2 | Subpkt 3 |
|---|---|---|---|---|---|---|---|
| 0 | 1 | 24 | 1 | Chnl 1,2 (sample 0) | Chnl 3,4 (sample 0) | Chnl 5,6 (sample 0) | Chnl 7,8 (sample 0) |
| 1 | 0 | | | - | - | - | - |
| 2 | 0 | | | Chnl 17,18 (sample 0) | Chnl 19,20 (sample 0) | Chnl 21,22 (sample 0) | Chnl 23,24 (sample 0) |

**Table 6 - Example of 3D Audio Sample Packet Layout for 32 channels (Max)**

| Packet # | Sample_start Value | Num Channels | samples | Subpkt 0 | Subpkt 1 | Subpkt 2 | Subpkt 3 |
|---|---|---|---|---|---|---|---|
| 0 | 1 | 32 (Max) | 1 | Chnl 1,2 (sample 0) | Chnl 3,4 (sample 0) | Chnl 5,6 (sample 0) | Chnl 7,8 (sample 0) |
| 1 | 0 | | | - | - | - | - |
| 2 | 0 | | | - | - | - | - |
| 3 | 0 | | | Chnl 25,26 (sample 0) | Chnl 27,28 (sample 0) | Chnl 9,30 (sample 0) | Chnl 31,32 (sample 0) |

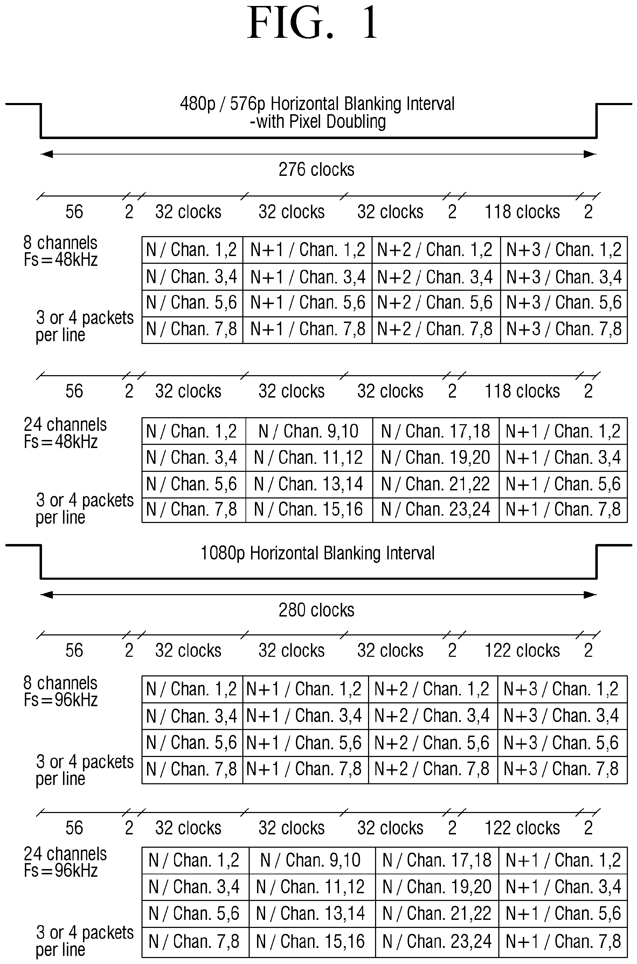

Figure 1 is a diagram illustrating a transmission timing of a 3D audio signal.

Figure 1 shows that, in a horizontal blanking interval, three 2D audio signal samples of 8 channels each are transmitted. In a 3D audio signal of 24 channels, one sample is transmitted in the same period of time used in transmitting the three 2D audio signal samples.

### Video Dependency

Table 7 shows sample rates that are available for transmission of 3D audio in the timing of the various video formats that are specified in CEA-861-F (D or E is available). Here, it is assumed that a 58 TMDS clock period of a horizontal blanking interval is necessary for content protection re-synchronization. 3D audio transmission may be supported by the 3D audio sample packets.

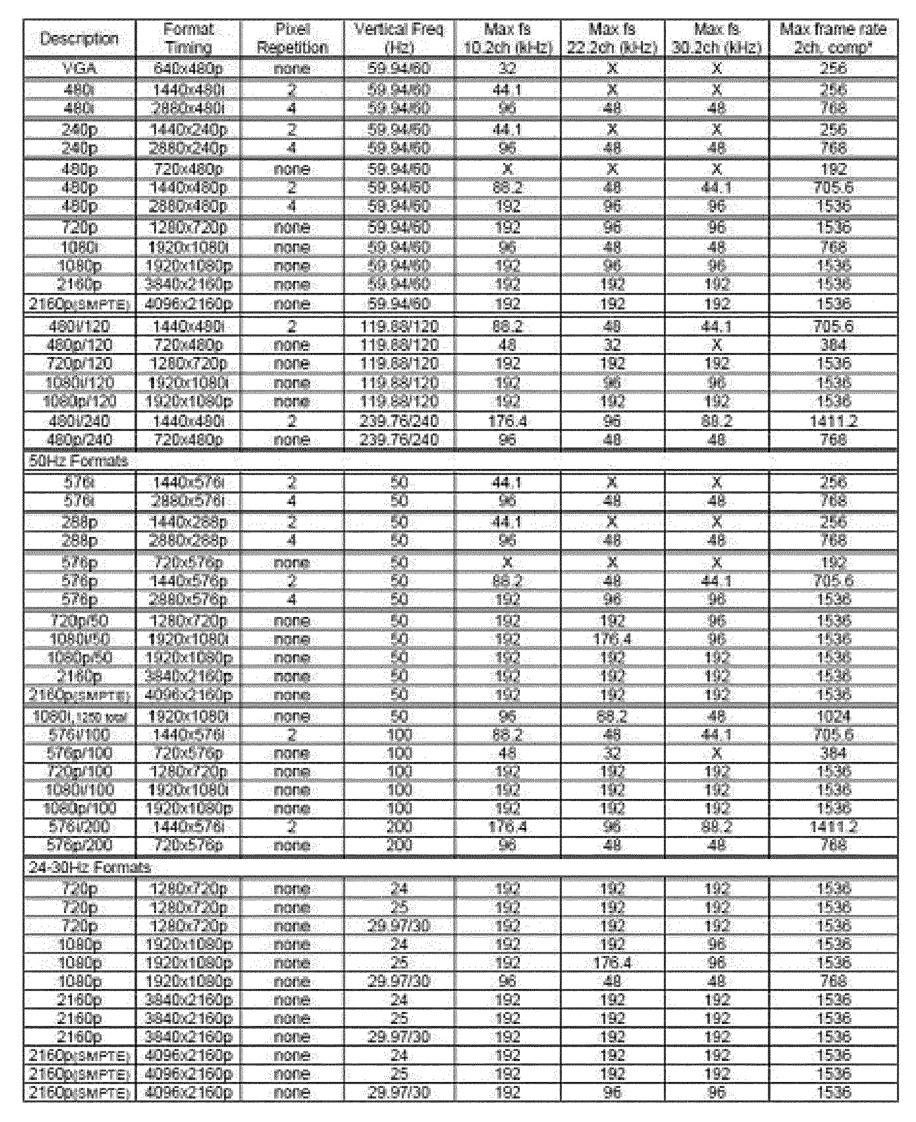

### Second Exemplary Embodiment

Unlike the first exemplary embodiment, the second exemplary embodiment modifies and uses the conventional audio sample packet format.

As shown below in Table 8, the reserved area of a conventional audio sample packet may be used as a segment_indicator. According to an exemplary embodiment, the segment indicator may be expressed as two bits. If segment indicator = 00, it represents the starting packet, if segment indicator = 01, it represents an odd packet among middle packets, if segment indicator = 10, it represents an even packet among middle packets, and if segment indicator = 11, it represents the last packet. Of course, these examples are exemplary only, and packets matched with bits may vary.

This structure makes it is available to figure out whether the segment is lost or not. If there is a loss in the segment, exemplary techniques include dropping the entire "sample Nth" which contains the corresponding segment or just discarding the lost Audio Sample Packet. Here, a segment is a term referring to an individual Audio Sample Packet which includes the group when more than one Audio Sample Packet is grouped.

The layout in HDMI 1.4b displays the information on the number of channels and samples. For example, one audio sample packet may include four audio samples of 2 channels or one audio sample of 8 channels. The exemplary embodiments may extend the layout and leave layout_ext field in the conventional reserved area and display the information about whether to provide 3D audio along with the layout or not.

For example, if lay out_ext = 0 & layout = 0, 1, it represents the number of channels and 2D audio samples, but if layout_ext = 1 & layout = 0, it represents the 3D audio samples. If layout_ext = 1 & layout = 1, multi-stream audio samples are represented.

Fields other than the fields described specifically above with respect to the second exemplary embodiment may be the same as the first exemplary embodiment.

**Table 8 - Modified Audio Sample Packet**

| Bit 7 | Bit 6 | Bit 5 | Bit 4 | Bit 3 | Bit 2 | Bit1 | Bit 0 |
|---|---|---|---|---|---|---|---|
| Packet type - 0x02 (Audio Sample Packet) | | | | | | | |
| Segment_indictaor | | Layout_ext | layout | Sample_present.sp3 | Sample_present.sp2 | Sample_present.sp1 | Sample_present.sp0 |
| B.3 | B.2 | B.1 | B.0 | Sample_flat.sp3 | Sample_flat.sp2 | Sample_flat.sp1 | Sample_flat.sp0 |
| Audio Sample Subpacktet 0 (7Bytes) | | | | | | | |
| Audio Sample Subpacktet 1 (7Bytes) | | | | | | | |
| Audio Sample Subpacktet 2 (7Bytes) | | | | | | | |
| Audio Sample Subpacktet 3 (7Bytes) | | | | | | | |

**Table 8-1 segment_indicator field**

| Segment_indicator | Description |
|---|---|
| 00 | Start_segment |
| 01 | mid_segment(odd) |
| 10 | mid_segment(even) |
| 11 | End_segment |

**Table 8-2 retation between layout and layout exit : refer to table7-6 HDMI 1.4b**

| Layout_exit | layout | Description |
|---|---|---|
| 0 | 0 | 2ch / 4 samples |
| 0 | 1 | 8ch / 1 samples |
| 1 | 0 | 3D Audio |
| 1 | 1 | Reserved |

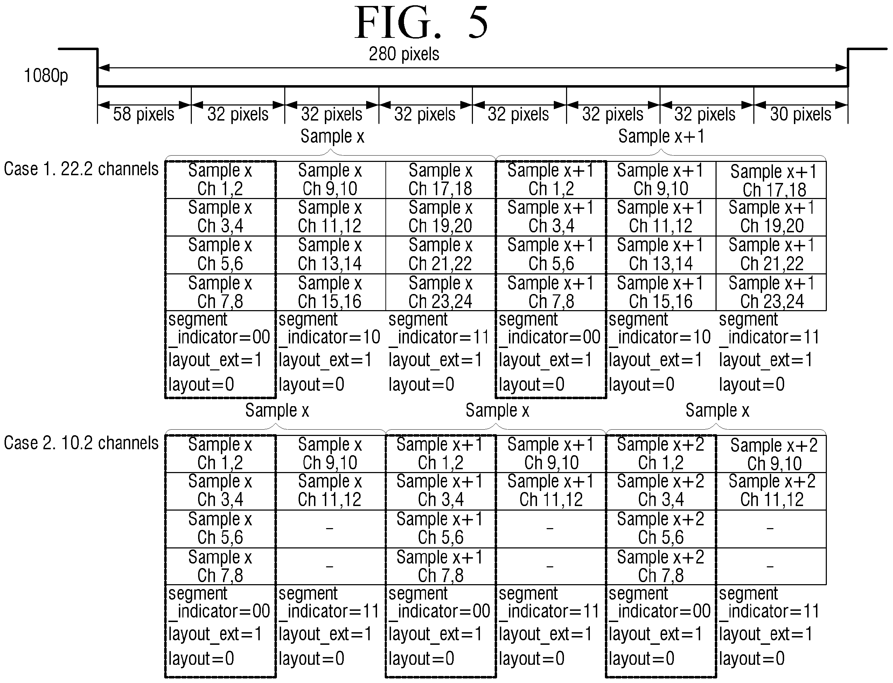

Figure 5 is a view illustrating a transmission stream of an audio sample packet according to the second exemplary embodiment.

Figure 5 shows settings of values for each field when transmitting two sample packets in the horizontal blanking interval in the case of 3D audio of 22.2 channels. The first packet is segment_indicator = 00, the second packet is segment_indicator = 10, and the last packet is segment indicator = 11. Since all of the above example are 3D audio signals, layout_ext = 1, and layout = 0. Similar field values are used in 3D audio of 10.2 channels.

### Third Exemplary Embodiment

The third exemplary embodiment also modifies and uses the conventional audio sample packet format and yet displays less information compared to the second exemplary embodiment.

As shown below in Table 9, a reserved area of the conventional audio sample packet may be used as a multi-channel_indicator. The multi-channel_indicator displays only the information on 3D audio of an audio sample packet, unlike the segment_indicator of the second exemplary embodiment. The information that the layout field shows is different depending on the bit information of the multi-channel_indicator.

Therefore, the multi-channel_indicator may be expressed with one bit. If multi-channel_indicator = 0, layout field refers to the channel / sample layout that has been defined in the existing HDMI 1.4b standard. If multi-channel_indicator = 1, layout field refers to the layout that transmits multi-channel audio sample data of more than 8 channels. The layout field is used to refer to the start of a sample at this time. If layout = 1, this indicates that a current audio sample packet comprises the beginning part of a sample. If layout (start) = 0, this indicates that a current audio sample packet does not comprise the beginning part of a sample. Of course, this is only an exemplary embodiment, and packets matching the bits may vary. Fields other than the fields specifically described above with reference to the third exemplary embodiment may be the same as the first exemplary embodiment.

**Table 9 - Modified Audio Sample Packet Header**

| Bit 7 | Bit 6 | Bit 5 | Bit 4 | Bit 3 | Bit 2 | Bit1 | Bit 0 |
|---|---|---|---|---|---|---|---|
| Packet type = 0x02 (Audio Sample Packet) | | | | | | | |
| reserved | | Multichannel_indicator | Layout/start | Sample_present.sp3 | Sample_present.sp2 | Sample_present.sp1 | Sample_present.sp0 |
| B.3 | B.2 | B.1 | B.0 | Sample_flat.sp3 | Sample_flat.sp2 | Sample_flat.sp1 | Sample_flat.sp0 |
| Audio sample subpacket 0 (7Bytes) | | | | | | | |
| Audio sample subpacket 1 (7Bytes) | | | | | | | |
| Audio sample subpacket 2 (7Bytes) | | | | | | | |
| Audio sample subpacket 3 (7Bytes) | | | | | | | |

This structure has the advantage of having a simple packet structure compared to the second exemplary embodiment since the structure minimizes the changes of the reserved area in an existing audio sample packet, and may indicate at the same time information whether the audio sample packe comprises 3D audio or not.

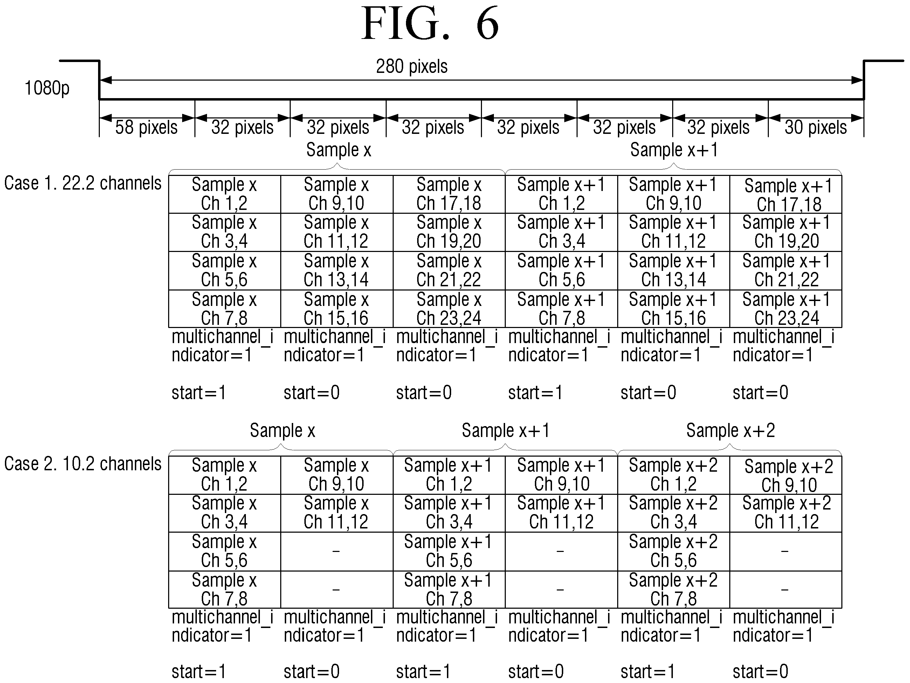

Figure 6 is a diagram representing a transmission stream of an audio sample packet of the third exemplary embodiment.

Figure 6 shows settings of values for each field when transmitting two sample packets in the horizontal blanking interval in the case of 3D audio of 22.2 channels. The first packet is layout=l, the second and third packets are layout=0. Since all packets are 3D audio signals, multi-channel_indicator=1. Similar values of fields are shown in 3D audio of 10.2 channels.

### Fourth Exemplary Embodiment

Similarly, the fourth exemplary embodiment modifies and uses the conventional audio sample packet format, and provides more information whether multi-stream audio is provided, compared to the second exemplary embodiment.

As shown below in Table 10, a reserved area of the conventional audio sample packets may be used as a Stream_ID, and a multiASP_layout. The multiASP_layout has same function as the multi-channel_indicator in the third exemplary embodiment. That is, the multiASP_layout shows whether 3D audio is provided or not. Information that the layout field shows is different depending on the bit information of the multiASP_layout.

Stream_ID indicates the stream number when multi-stream audio is provided. In an exemplary embodiment, one bit may be used in Stream_ID, and the first stream is displayed when it is 0. Of course, this is an example only, and packets matching bits may vary.

When assuming that one view of multi-stream audio holds an audio signal under 8 channels, Stream_ID and multiASP _layout may not be 1 at the same time with respect to a single audio sample packet.

**Table 10 - Modified Audio Sample Packet Header**

| | Bit7 | Bit6 | Bit5 | Bit4 | Bit3 | Bit2 | Bit1 | Bit0 |
|---|---|---|---|---|---|---|---|---|
| HB0 | Packet type = 0x02 | | | | | | | |
| HB1 | Stream_ID | multiASP_layout | reserved | Layout/start | Sample_present.sp3 | Sample_present.sp2 | Sample_present.sp1 | Sample_present.sp0 |
| HB2 | B.3 | B.2 | B.1 | B.0 | Sample_flat.sp3 | Sample_flat.sp2 | Sample_flat.sp1 | Sample-flat.sp0 |
| SP0 | Audio Sample Subpacktet 0 (7Bytes) | | | | | | | |
| SP1 | Audio Sample Subpacktet 1 (7Bytes) | | | | | | | |
| SP2 | Audio Sample Subpacktet 2 (7Bytes) | | | | | | | |
| SP3 | Audio Sample Subpacktet 3 (7Bytes) | | | | | | | |

**Table 10-1 -Description of Stream_ID**

| Stream_ID | description |
|---|---|
| 0 | 1^{st} stream |
| 1 | 2^{nd} stream |

In terms of being able to display all the information about the 3D multi-stream audio and 3D audio using a single data sample packet, this structure has the advantage of compatibility. Also, since each identification becomes available when transmitting a plurality of streams when placing Stream_ID field and stream identifier, multi-stream audio sample data exceeding the size of one packet may be transmitted. Fields other than the fields specifically described above with reference to the fourth exemplary embodiment are the same as the first exemplary embodiment.

An audio data transmission stream in accordance with a combination of the values of the Stream_ID field, multiASP_layout field, and layout / start field may be considered. If multiASP _layout = 1, it represents the transmission stream of 3D audio, and at this time, the layout / start field displays the starting position information of the packet. If Stream_ID = 1, it displays the multi-stream, and the number of samples and the channels are set based on the layout/start field. For example, Sink which received the packet of Stream_ID = 1 recognizes that multi-stream audio data is transmitted, and at the same time recognizes the currently received packet as the second stream of audio data out of two pieces of multi-stream audio data.

### Fifth Exemplary Embodiment

Likewise, the fifth exemplary embodiment modifies and uses the conventional audio sample packet format.

As shown below in Table 11, a reserved area of the conventional audio sample packets may be used as fields of Supports_Multistream and a multiASP_layout. The multiASP_layout has the same function as the multiASP_layout in the fourth exemplary embodiment. That is, the multiASP_layout shows whether3D audio is provided or not. Information that the layout field shows differs depending on the bit information of the multiASP_layout.

The Supports_Multistream shows information about whether the multi-stream audio is provided or not. In an exemplary embodiment, one bit may be used in Supports_Multistream, and the multi-stream audio is provided when the one bit is 0, Of course, this is an example only, and packets matching bits may vary.

An audio sample packet in accordance with the fifth exemplary embodiment may comprise at most four 2 channel multi-stream audio samples in one audio sample packet, and audio sample for each view may be transmitted corresponding to each of four sub-packets.

If one view of the multi-stream audio holds audio signals less than 8 channels, Supports_Multistream and multiASP_layout would not be 1 at the same time with respect to one audio sample packet.

**Table 11 - Modified Audio Sample Packet He ader**

| | Bit7 | Bit6 | Bit5 | Bit4 | Bit3 | Bit2 | Bit1 | Bit0 |
|---|---|---|---|---|---|---|---|---|
| HB0 | Packet type = 0x02 | | | | | | | |
| HB1 | Supports_Multistream | multiA SP_layout | reserved | Layout/start | Sample_present.sp3 | Sample_present.sp2 | Sample_present.sp1 | Sample_present.sp0 |
| HB2 | B.3 | B.2 | B.1 | B.0 | Sample_flat.sp3 | Sample_flat.sp2 | Sample_flat.sp1 | Sample-flat.sp0 |
| SP0 | Audio Sample Subpacktet 0 (7Bytes) : Reserved for 1^{st} stream | | | | | | | |
| SP1 | Audio Sample Subpacktet 1 (7Bytes) : Reserved for 2^{nd} stream | | | | | | | |
| SP2 | Audio Sample Subpacktet 2 (7Bytes) : Reserved for 3^{rd} stream | | | | | | | |
| SP3 | Audio Sample Subpacktet 3 (7Bytes) : Reserved for 4^{th} stream | | | | | | | |

In terms of being able to display all the information about the multi-stream audio and 3D audio using a single data sample packet, this structure has the advantage of compatibility. In addition, there is an advantage that this structure is available to describe all the features that are supported in one audio sample packet. Fields other than the fields specifically described above with reference to the fifth exemplary embodiment may be the same as the first exemplary embodiment.

Feature of an audio data transmission stream in accordance with a combination of the values of the Supports_Multistream field, multiASP_layout field, and layout / start field may be considered. If Supports_Multistream = 0 and multiASP_layout=1, it represents the transmission stream of 3D audio, and at this time, the layout / start field displays the starting position information of the packet. If Supports_Multistream = 1, it displays the multi-stream, and the number of samples and the channel is set based on the layout/start.

### Sixth Exemplary Embodiment

The sixth exemplary embodiment provides a format that has modified the conventional audio sample packet format, similar to the fourth exemplary embodiment.

Therefore, as shown below in Table 12, a reserved area of the conventional audio sample packets may be used as a Stream_ID and a multiASP_layout. The Stream_ID and the multiASP_layout each have the same functions as the Stream_ID and the multiASP_layout in the fourth exemplary embodiment. Information that the layout field shows differs depending on the bit information of the multiASP_layout.

However, four stream numbers may be shown when multi-stream audio is provided since Stream_ID is expressed as 2 bits. Each combination of different bits corresponds to the view of the different contents.

If one view of the multi-stream audio holds audio signals less than 8 channels, Stream_ID may not be more than 1 and at the same time multiASP_layout be 1 in terms of one audio sample packet.

**Table 12 - Modified Audio Sample Packet Header**

| | Bit7 | Bit6 | Bit5 | Bit4 | Bit3 | Bit2 | Bit1 | Bit0 |
|---|---|---|---|---|---|---|---|---|
| HB0 | Packet type = 0x02 (Audio Sample packet) | | | | | | | |
| HB1 | Stream_ID | | multiASP_layout | Layout / start | Sample_present.sp3 | Sample_present.sp2 | Sample_present.sp1 | Sample_present.sp0 |
| HB2 | B.3 | B.2 | B.1 | B.0 | Sample_flat.sp3 | Sample_flat.sp2 | Sample_flat.sp1 | Sample-flat.sp0 |
| SP0 | Audio Sample Subpacktet 0 (7Bytes) | | | | | | | |
| SP1 | Audio Sample Subpacktet 1 (7Bytes) | | | | | | | |
| SP2 | Audio Sample Subpacktet 2 (7Bytes) | | | | | | | |
| SP3 | Audio Sample Subpacktet 3 (7Bytes) | | | | | | | |

**Table 12-1 - Description of Stream_ID**

| Stream_ ID | description |
|---|---|
| 00 | 1^{st} stream |
| 01 | 2^{nd} stream |
| 10 | 3^{rd} stream |
| 11 | 4^{th} stream |

In terms of being able to display all the information about the multi-stream audio and 3D audio using a single data sample packet, this structure has the advantage of compatibility. In particular, more multi-streams may be identified compared to the fourth exemplary embodiment. Fields other than the fields specifically described above with reference to the sixth exemplary embodiment may be the same as the first exemplary embodiment.

Table 13 displays a feature of an audio data transmission stream in accordance with a combination of the values of the Stream_ID field, multiASP_layout field, and layout / start field. If multiASP_layout=l, it represents the transmission stream of 3D audio, and at this time, layout / start displays the starting position information of the packet. If Stream_ID = 01∼11, the number of samples and the channel is set based on the layout/start.

**Table 13 - Capability to deal with proposed features according to exemplary embodiments**

| ASP header fields | | | Description |
|---|---|---|---|
| Stream_ID | multiASP_layout | Layout/start | |
| 00b | 0 | Layout=0 | 24bits-sample + default (2ch/4sample) |
| 00b | 0 | Layout=1 | 24bits-sample + default (8ch/1sample) |
| 00b | 1 | Start=0 | 24bits-sample + 3D audio-channel non-start ('N'ch/1 sample) |
| 00b | 1 | Start=1 | 24bits-sample + 3D audio-channel start ('N'ch/1 sample) |
| 00b∼11b | 0 | Layout=0 | 24bits-sample + Multi-stream (2ch/4 sample) |
| 00b∼11b | 0 | Layout=1 | 24bits-sample + Multi-stream (8ch/1 sample) |
| 1 | 1 | 0 | Not supported |
| 1 | 1 | 1 | |

### Seventh Exemplary Embodiment

The seventh exemplary embodiment uses 3D audio sample packets which are newly defined in the first exemplary embodiment to transmit the 3D audio sample packets and multi-stream audio sample packets.

The seventh exemplary embodiment is similar to the first exemplary embodiment, but has more ext_layout fields indicating whether the multi-stream is transmitted or not. That is, if the ext_layout = 0, it indicates transmission of the multi-stream audio, and if ext_layout = 1, it indicates transmission of the 3D audio.

Sample_start field, sample_present.spX field, and sample_flat.spX field are the same as the first exemplary embodiment, so an overlapping description is omitted. Table 16 shows the structure of the audio sample packet according to the seventh exemplary embodiment.

### Table 14 - Extended Audio Sample Packet

**Table 14 - Extended Audio Sample Packet (24Channels Fs=96kHz)**

| | | | |
|---|---|---|---|
| N / Chan 1, 2 | N / Chan 9, 10 | N / Chan 17, 18 | N+1 / Chan 1,2 |
| N / Chan 3, 4 | N / Chan 11, 12 | N / Chan 19, 20 | N+1 / Chan 3, 4 |
| N / Chan 5, 6 | N / Chan 13, 14 | N / Chan 21, 22 | N+1 / Chan 5, 6 |
| N / Chan 7, 8 | N / Chan 15, 16 | N / Chan 23, 24 | N+1 / Chan 7, 8 |

**Table 14-1 - Example of Extended Audio Sample Packet**

| Byte / Bit# | 7 | 6 | 5 | 4 | 3 | 2 | 1 | 0 |
|---|---|---|---|---|---|---|---|---|
| HB0 | 0 | 0 | 0 | 0 | 1 | 0 | 1 | 1 |
| HB1 | 0 | 0 | Sample_start=**1** | Ext_layout=**1** | Sample_present.sp3 | Sample_present.sp2 | Sample_present.sp1 | Sample_present.sp0 |
| HB2 | B.3 | B.2 | B.1 | B.0 | Sample_flat.sp3 | Sample_flat.sp2 | Sample_flat.sp1 | Sample-flat.sp0 |
| PB0∼PB6 | Channel 1, 2 audio data / sample N | | | | | | | |
| PB7∼PB13 | Channel 3, 4 audio data / sample N | | | | | | | |
| PB14∼PB2 | Channel 5, 6 audio data / sample N | | | | | | | |
| PB21∼PB27 | Channel 7, 8 audio data / sample N | | | | | | | |

Table 15 shows the body structure of a packet which follows the field values of ext_layout field. As illustrated, in the case of multi-stream, an audio signal corresponding to one view may be included in 2 channels, and therefore a single packet may comprise audio signals for four views. For a 3D audio signal, the audio signal for a plurality of channels may be displayed. Though 32 channels are shown in various exemplary embodiments described above, the exemplary embodiments are not limited to that and may comprise audio signals of more or less than 32 channels.

**Table 15 - EASP packetization**

| Ext_layout Value | Sample_start Value | Max Num Channels | samples | Subpkt 0 | Subpkt 1 | Subpkt 2 | Subpkt 3 |
|---|---|---|---|---|---|---|---|
| 0 | X | 2 | 4 | Chnl 1,2 Stream 0 (Sample M) | Chnl 1,2 Stream 1 (Sample M) | Chnl 1,2 Stream 2 (Sample M) | Chnl 1,2 Stream 2 (Sample M) |
| 1 | 1 | N | 1 | Chnl 1,2 Stream 0 (Sample M) | Chnl 3,4 Stream 0 (Sample M) | Chnl 5,6 Stream 0 (Sample M) | Chnl 7,8 Stream 0 (Sample M) |
| 1 | 0 | | | - | - | - | - |
| 1 | 0 | | | Chnl N-7,N-6 Stream 0 (Sample M) | Chnl N-5,N-4 Stream 0 (Sample M) | Chnl N-3,N-2 Stream 0 (Sample M) | Chnl N-1,N Stream 0 (Sample M) |

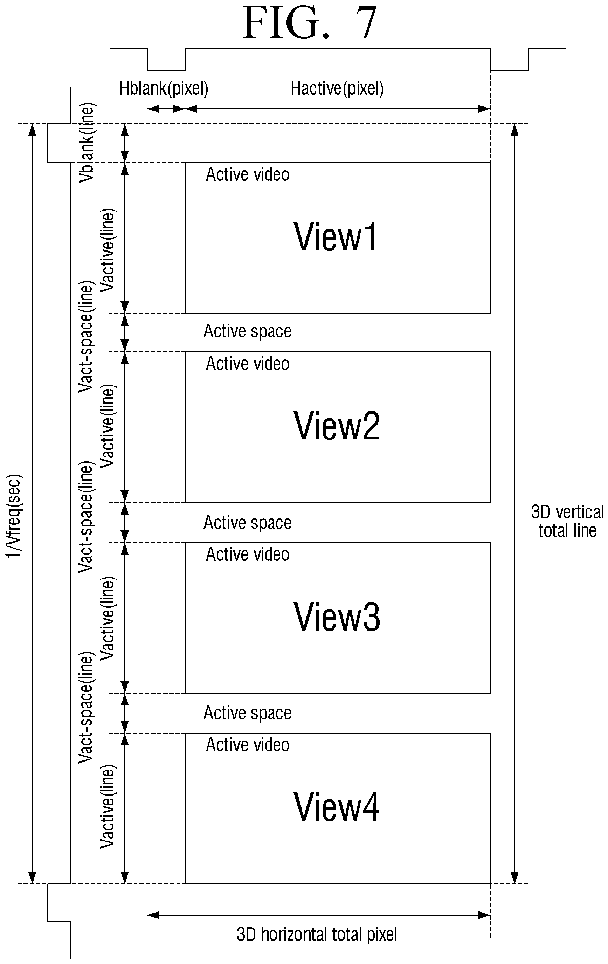

Meanwhile, in the alternatives described above, a multi-stream audio signal may be transmitted by being included in the area corresponding to the area where video data of each view is located in the vertical synchronization blanking period. Figure 7 is a diagram illustrating a transmission stream format of such a case. The audio signal corresponding to the left area of a video signal of each view may be structured as shown in Figure 7.

### 1.2. 3D One Bit Audio Sample Packet

### First Exemplary Embodiment

In the first exemplary embodiment, 3D audio of a one bit audio format is transmitted by using 3D one bit audio sample packets that are newly defined. As described above, 3D audio is defined as audio in which speakers may be located anywhere in 3D space.

The 3D one bit audio stream comprises 32 audio channels (or more) and is transmitted via continuous packets in a data island period. To indicate the position of a packet within the one bit audio sample as shown below in Table 16, a packet header comprises a sample_start and a sample_present bit.

**Table 16 - One bit 3D Sample Packet Header**

| Byte/Bit# | 7 | 6 | 5 | 4 | 3 | 2 | 1 | 0 |
|---|---|---|---|---|---|---|---|---|
| HB0 | 0 | 0 | 0 | 0 | 1 | 1 | 0 | 0 |
| HB1 | Rsvd (0) | Rsvd (0) | Rsvd (0) | sample_start | samples_present sp3 | Samples_present sp2 | Samples_present sp1 | Samples_present sp0 |
| HB2 | Rsvd (0) | Rsvd (0) | Rsvd (0) | Rsvd (0) | Samples_invaild.sp3 | Samples_invalid.sp2 | Samples_invalid.sp1 | Samples_invalid.sp0 |

In "sample_start: [1 bit]", if sample_start = 1, the current packet is the first packet of 3D one bit audio samples. The sample_start is the same as what was described in the first exemplary embodiment of the 3D audio packets, so an overlapping description is omitted.

In "samples_present.spX: [4 fields, 1 bit each]", Sub packet X indicates whether a sub packet X comprises an invalid audio sample or not. If samples_invalid=1, samples of the sub-packet are not valid. If samples_invalid=0, samples are valid. These bits are valid only when samples_present.spX is set. If there is no useful audio data that is available in the source, four samples_invalid.spX bits are set. When samples_invalid.spX is set, sub-packet X continues to indicate the sample period, but does not comprise any useful data.

Sample frequency information in 3D one bit audio is transmitted by being included in Audio InfoFrame. (Refer to the HDMI 1.4b Section 8.2.2)

A 3D one bit audio sample packet includes a one bit audio sample packet header and four sub-packets that are listed in Table 16. Each sub-packet may comprise a one bit audio bit for up to four audio channels.

Adjacent 3D one bit audio sample packets may be utilized to be transmitted between 9 audio channels to 32 audio channels of a 3D one bit audio sample. Available combinations of samples_present bits for 3D one bit audio sample packets are determined by channel allocation. The reason why a 3D one bit audio sample packet does not hold B0∼B3 fields, unlike the 3D audio sample packet, is that the 3D one bit audio sample packet does not follow IEC 60958 block format.

### Various alternatives

Meanwhile, 3D one bit audio sample packets corresponding to each of the exemplary embodiments of the 3D audio sample packets described above may be defined. That is, besides the samples_invalid.spX, 3D one bit audio sample packets may be defined in the same manner as 3D audio sample packets, and only B0∼B3 fields may be excluded in the 3D audio sample packets. A detailed description of the overlapping description will therefore be omitted.

### 1.3. Multi-stream Audio Sample Packet

The following describes the structure of a multi-stream audio sample packet that has been newly proposed. First, the first exemplary embodiment will be described, and various alternatives focusing on differences from the first exemplary embodiment will be described.

### First Exemplary Embodiment

In the first exemplary embodiment, a plurality of audio streams of L-PCM and IEC 61937 audio compression formats are transmitted by using a multi-stream audio sample packet. Each audio stream that is included in the multi-stream audio sample comprises 2 audio channels (or more). The setting of a sub-packet is determined by stream_present bit of a packet header. Table 17 shows the structure of the packet header of the multi-stream audio sample packet.

**Table 17 Multi-Stream Audio Sample Packet Header**

| Byte/Bit# | 7 | 6 | 5 | 4 | 3 | 2 | 1 | 0 |
|---|---|---|---|---|---|---|---|---|
| HB0 | 0 | 0 | 0 | 0 | 1 | 1 | 1 | 0 |
| HB1 | Rsvd (0) | Rsvd (0) | Rsvd (0) | Rsvd (0) | stream_present sp3 | stream_present sp2 | stream_present sp1 | stream_present sp0 |
| HB2 | B.3 | B.2 | B.1 | B.0 | Stream_flat.sp3 | Stream_flat.sp2 | Stream_flat.sp1 | Stream_flat.sp0 |

In "stream_present.spX: [4 fields, 1 bit each]", sub packet X indicates whether a sub packet X comprises an audio sample of stream X or not. Four stream_present bits exist in the multi-stream audio sample packet header, and each bit is for sub-packets. Stream_present bit indicates whether the corresponding sub-packet comprises audio stream or not.

Since stream_present.spX has substantially the same function as the sample_present.spX of 3D audio sample packets described above, a detailed description thereof will be omitted.

In "stream_present.spX: [4 fields, 1 bit each] ", sub packet X indicates whether a sub packet X shows a flatline sample of stream X. It is valid only when stream_present.spX is established. That is, four stream_flat.spX bits are set when useful audio data that is available in the source is not available. This occurs when a sample rate changes or when there is a temporary stream interruption. Once stream_flat.spX is set, a sub-packet X continues to indicate the sample period, but does not comprise useful audio data. Since stream_flat.spX is substantially the same as sample_flat.spX of the 3D audio sample packet described above, a detailed description thereof will be omitted.

When sub-packet X comprises the first frame among 192 frames that includess IEC 60958 block, B.X=1. Otherwise B.X=0.

A -stream audio sample packet according to an exemplary embodiment uses a packet header and four sub-packets that are shown in Table 17. All sub-packets have the same structure.

The high-speed wired interface environment allows the source to transmit four audio streams at the same time if the environment supports multi-view video streaming. (For example, dual view / Quad view games with different audio for each view). Each audio stream that is included in the multi-channel audio sample is related to one single view, and comprises 2 audio channels. Sub-packets of each multi-stream audio sample packet may comprise IEC 61937 block frame or IEC 60958 block frame that is defined with zero or one IEC 60958. Three sub-packet layouts are defined. The table below shows an example of the multi-stream audio packet layout for two, three and four audio streams.

**Table 18 Example of Multi- Stream Audio Sample Packet Layout for 2 audio streams**

| Num Streams | Packet # | Max Num Channels | samples | Subpkt 0 | Subpkt 1 | Subpkt 2 | Subpkt 3 |
|---|---|---|---|---|---|---|---|
| 2 | 0 | 2 ch/stream | 1 sample/stream | Chnl 1,2 Stream 0 (Sample a) | Chnl 1,2 Stream 1 (Sample b) | Empty | empty |
| | 1 | 2 ch/stream | 1 sample/stream | Chnl 1,2 Stream 0 (Sample a+1) | Chnl 3,4 Stream 1 (Sample b+1) | empty | empty |
| | | | | - | - | - | |
| | N | 2 ch/stream | 1 sample/stream | Chnl 1,2 Stream 0 (Sample a+N) | Chnl 1,2 Stream 1 (Sample b+N) | empty | empty |

**Table 19 Example of Multi-Stream Audio Sample Packet Layout for 3 audio streams**

| Num Streams | Packet # | Max Num Channels | samples | Subpkt 0 | Subpkt 1 | Subpkt 2 | Subpkt 3 |
|---|---|---|---|---|---|---|---|
| 3 | 0 | 2 ch/stream | 1 sample/stream | Chnl 1,2 Stream 0 (Sample a) | Chnl 1,2 Stream 1 (Sample b) | Chnl 1,2 Stream 2 (Sample c) | empty |
| | 1 | 2 ch/stream | 1 sample/stream | Chnl 1,2 Stream 0 (Sample a+1) | Chnl 1,2 Stream 1 (Sample b+1) | Chnl 1,2 Stream 2 (Sample c+1) | empty |
| | | | | - | - | - | |
| | N | 2 ch/stream | 1 sample/stream | Chnl 1,2 Stream 0 (Sample a+N) | Chnl 1,2 Stream 1 (Sample b+N) | Chnl 1,2 Stream 2 (Sample c+N) | empty |

**Table 20 Example of Multi-Stream Audio Sample Packet Layout for 4 audio streams**

| Num Streams | Packet # | Max Num Channels | samples | Subpkt 0 | Subpkt 1 | Subpkt 2 | Subpkt 3 |
|---|---|---|---|---|---|---|---|
| 4 | 0 | 2 ch/stream | 1 sample/stream | Chnl 1,2 Stream 0 (Sample a) | Chnl 1,2 Stream 1 (Sample b) | Chnl 1,2 Stream 2 (Sample c) | Chnl 1,2 Stream 2 (Sample d) |
| | 1 | 2 ch/stream | 1 sample/stream | Chnl 1,2 Stream 0 (Sample a+1) | Chnl 1,2 Stream 1 (Sample b+1) | Chnl 1,2 Stream 2 (Sample c+1) | Chnl 1,2 Stream 3 (Sample d+1) |
| | | | | - | - | - | |
| | N | 2 ch/stream | 1 sample/stream | Chnl 1,2 Stream 0 (Sample a+N) | Chnl 1,2 Stream 1 (Sample b+N) | Chnl 1,2 Stream 2 (Sample c+N) | Chnl 1,2 Stream 3 (Sample d+N) |

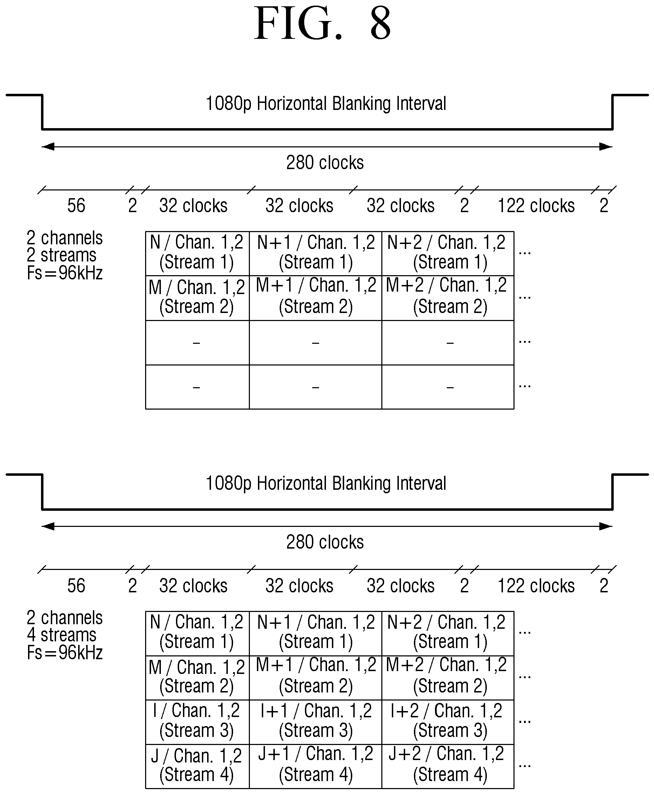

Figure 8 is a diagram representing a transmission stream of an audio sample packet of the first exemplary embodiment.

Figure 8 illustrates that one sample packet comprises two samples and may be transmitted in a horizontal blanking interval in case of a 2 channel audio sample packet for dual-view. In case of a 2 channel audio sample packet for quad-view, one sample packet comprises four samples and may be transmitted in a horizontal blanking interval. In the drawing, a maximum of 2 channels of a multi-stream audio sample transmission is described as an example, but a multi-stream audio sample with multi-channels of more than 2 channels may be transmitted through one multi-stream audio sample packet.

In short, according to exemplary embodiments, audio for each view is transmitted through a corresponding sub-packet, also, multi-stream audio sample data configured as multi-channel (more than 2 channels) data may be transmitted via more than one sequential multi-stream audio sample packet.

According to exemplary embodiments, a multi-stream audio sample packet transmits four stereo audio samples. Each sample corresponds to a separate audio stream. For example, when a high-speed wired interface source transmits two different audio streams, sub-packet 0 may be used to transmit an audio sample of stream 0, and sub-packet 1 may be used to transmit an audio sample of stream 1.

### Second Exemplary Embodiment

The second exemplary embodiment modifies and uses the conventional audio sample packet format, and provides more information regarding whether multi-stream audio is provided or not. As shown below in Table 21, the conventional audio sample packet of a reserved area may be used as stream_identifier. Stream_ID displays a stream number when multi-stream audio is provided. Two bits may be used in Stream_ID in one exemplary embodiment and a first stream may be displayed when Stream_ID is 00, and a second stream may be displayed when Stream_ID is 01. Each stream corresponds to a view for different contents. Of course, these are examples only, and packets matching bits may vary.

Layout displays the information on the number of samples and channels under a high-speed wired interface. For example, one audio sample packet may comprise four samples of 2 channel audio or one sample of 8 channel audio.

**Table 21 - Modified Audio Sample Packet Header**

| | Bit7 | Bit6 | Bit5 | Bit4 | Bit3 | Bit2 | Bit1 | Bit0 |
|---|---|---|---|---|---|---|---|---|
| HB0 | Packet type = 0x02 (Audio Sample Packet) | | | | | | | |
| HB1 | **Stream_Identifier** | | reserved | Layout | Sample_present.sp3 | Sample_present.sp2 | Sample_present.sp1 | Sample_present.sp0 |
| HB2 | B.3 | B.2 | B.1 | B.0 | Sample_flat.sp3 | Sample_flat.sp2 | Sample_flat.sp1 | Sample-flat.sp0 |
| SP0 | Audio Sample Subpacktet 0 (7Bytes) | | | | | | | |
| SP1 | Audio Sample Subpacktet 1 (7Bytes) | | | | | | | |
| SP2 | Audio Sample Subpacktet 2 (7Bytes) | | | | | | | |
| SP3 | Audio Sample Subpacktet 3 (7Bytes) | | | | | | | |

**Table 21-1 - Description of Stream_Identifer**

| Stream_Identifer | Description |
|---|---|
| 00 | Stream_1 |
| 01 | Stream_2 |
| 10 | Stream_3 |
| 11 | Stream_4 |

These structures have the advantage of being able to provide a multi-stream ID easily by using the existing reserved area.

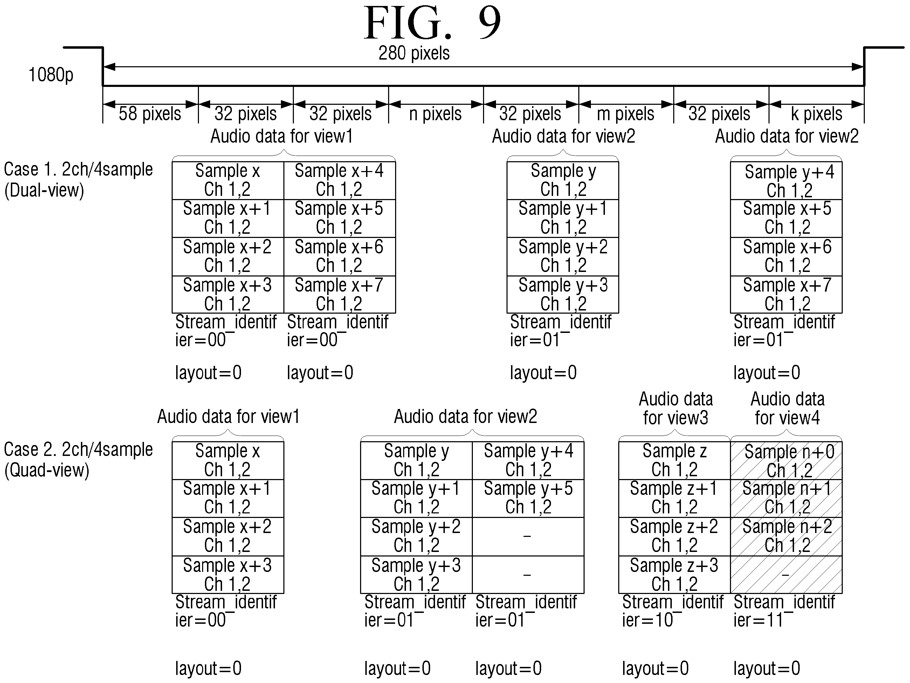

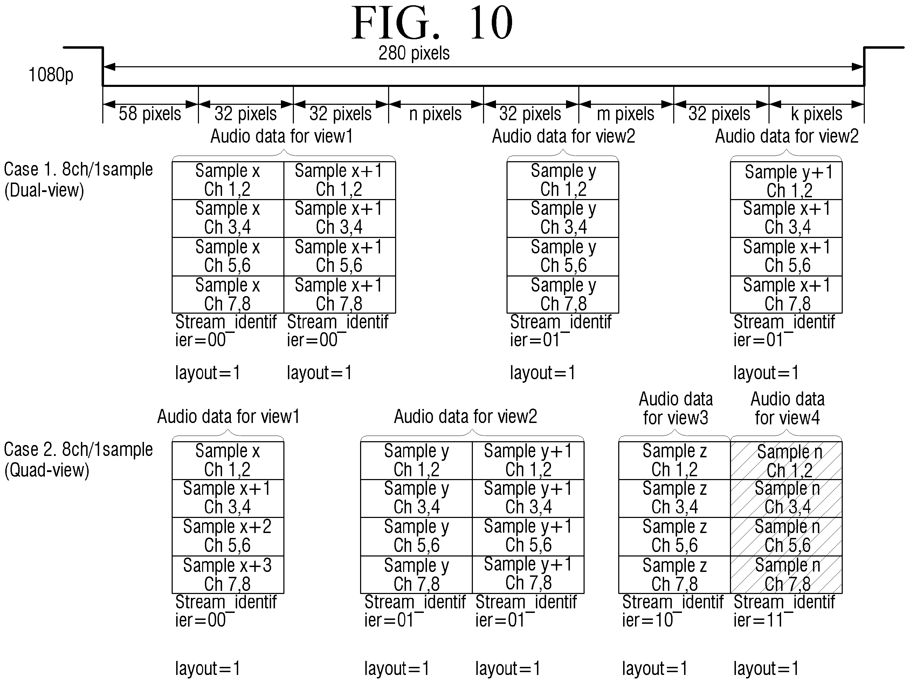

Figures 9 and 10 are views representing a transmission stream of a multi-stream audio sample packet of the second exemplary embodiment.

Figure 9 shows that one sample packet comprises four pieces of sample data on identical contents and may be transmitted in a horizontal blanking interval in case of a 2 channel audio sample packet for dual-view.

That is, one sample packet comprises audio signals of one view. Four sample packets of four views are transmitted in a horizontal blanking interval in case of 2 channel audio sample packets for quad-view. In addition, sample packets of any view may be transmitted in a row, similar to the exemplary embodiment of view 2, or may be transmitted in turns with other views. In the drawing, a 2 channel audio sample packet has been described as an example, but exemplary embodiments may also be implemented as a multi-channel audio sample packet of more than 2 channels. In addition,sample data may be transmitted by comprising a fixed number of sample data for each view as illustrated, but is not limited thereo, and may also be transmitted using different numbers of sample data.

Figure 10 illustrates an example of transmitting two sample packets comprising sample data indicating 8 channels in a horizontal blanking interval in case of an 8 channel audio sample packet for dual-view. Transmission of sample data on one view is completed through one sample packet. Sample packets of each view may be transmitted in a row, or may be transmitted in turns with sample packets of other views. For 8 channel audio sample packets for quad view, one sample packet may include sample data of one content and may be transmitted in horizontal blanking interval, but each sample packet of four views should be transmitted.

When Stream_Identifier is used as described in the second exemplary embodiment, Stream_Identifier becomes available to synchronize video and audio more efficiently if this information is included in an audio clock regeneration packet. The following table is a table showing the structure of a modified audio clock regeneration packet for the second exemplary embodiment.

### Table 22 - Audio Clock Regeneration Packet Header and Sub-packet

**Table 22-1 Audio Clock Regeneration Packet Header**

| Byte/Bit# | 7 | 6 | 5 | 4 | 3 | 2 | 1 | 0 |
|---|---|---|---|---|---|---|---|---|
| HB0 | 0 | 0 | 0 | 0 | 1 | 0 | 1 | 1 |
| HB1 | 0 | 0 | 0 | 0 | 0 | 0 | 0 | 0 |
| HB2 | 0 | 0 | 0 | 0 | 0 | 0 | 0 | 0 |

**Table 22 -2 Audio clock Regeneration subpacket**

| Byte/Bit# | 7 | 6 | 5 | 4 | 3 | 2 | 1 | 0 |
|---|---|---|---|---|---|---|---|---|
| SB0 | 0 | 0 | 0 | 0 | 0 | 0 | Stream identifier | |
| SB1 | 0 | 0 | 0 | 0 | CTS 19 | - | - | CTS 16 |
| SB2 | CTS 15 | - | - | - | - | - | - | CTS 8 |
| SB3 | CTS 7 | - | - | - | - | - | - | CTS 0 |
| SB4 | 0 | 0 | 0 | 0 | N 19 | - | - | N 16 |
| SB5 | N 15 | - | - | - | - | - | - | N 8 |
| SB6 | N 7 | - | - | - | - | - | - | N 0 |

**Table 22- 3 Description of Stream_Identifer**

| Stream_Identifer | Description |
|---|---|
| 00 | Stream_1 |
| 01 | Stream_2 |
| 10 | Stream_3 |
| 11 | Stream_4 |

As shown in the Table above, synchronization between video and audio of a multi-view system may be efficiently performed by comprising information on an index of multi-stream in a reserved area of an audio clock regeneration packet. In particular, in case of a system where multi-views are not displayed at the same time, this packet structure may be useful.

### Third Exemplary Embodiment

The third exemplary embodiment is similar to the fourth exemplary embodiment of a 3D audio sample packet, and modifies and uses the conventional audio sample packet format, and comprises a function that may provide multi-stream identification information.

As shown below in Table 23, the reserved area of the conventional audio sample packet may be used as Stream_ID and multiASP_layout. In terms of Stream_ID and multiASP_layout, these features may be the same as described above in the fourth exemplary embodiment of the 3D audio sample packet.

**Table 23 - Modified Audio Sample Packet Header**

| | Bit7 | Bit6 | Bit5 | Bit4 | Bit3 | Bit2 | Bit1 | Bit0 |
|---|---|---|---|---|---|---|---|---|
| HB0 | Packet type = 0x02) | | | | | | | |
| HB1 | Stream_ID | multiASP_layout | reserved | Layout / start | Sample_present.sp3 | Sample_present.sp2 | Sample_present.sp1 | Sample_present.sp0 |
| HB2 | B.3 | B.2 | B.1 | B.0 | Sample_flat.sp3 | Sample_flat.sp2 | Sample_flat.sp1 | Sample-flat.sp0 |
| SP0 | Audio Sample Subpacktet 0 (7Bytes) | | | | | | | |
| SP1 | Audio Sample Subpacktet 1 (7Bytes) | | | | | | | |
| SP2 | Audio Sample Subpacktet 2 (7Bytes) | | | | | | | |
| SP3 | Audio Sample Subpacktet 3 (7Bytes) | | | | | | | |

**Table 23 -1 - Description of Stream_Identifer**

| Stream_Identifer | Description |
|---|---|
| 0 | 1^{st} Stream |
| 01 | 2^{nd} Stream |

This structure has the advantage of compatibility in terms of being able to display all the information about multi-stream audio and 3D audio through one data sample packet.

Feature of an audio data transmission stream in accordance with a combination of the values of Stream_ID field, multiASP_layout field, and layout / start field are the same as described above in the fourth exemplary embodiment of a 3D audio sample packet.

Fourth Exemplary EmbodimentLikewise, the fourth exemplary embodiment modifies and uses a conventional audio sample packet format. The fourth exemplary embodiment corresponds to the fifth exemplary embodiment of the 3D audio sample packet.

As shown in Table 24 below, the reserved area of the conventional audio sample packet may be used as Supports_Multistream and multiASP_layout. Supports_Multistream, and multiASP_layout are the same as described above in the fifth exemplary embodiment of the 3D audio sample packet.

**Table 24 - Modified Audio Sample Packet Header**

| | Bit7 | Bit6 | Bit5 | Bit4 | Bit3 | Bit2 | Bit1 | Bit0 |
|---|---|---|---|---|---|---|---|---|
| HB0 | Packet type = 0x02) | | | | | | | |
| HB1 | Supports_Multistream | multiASP_layout | reserved | Layout / start | Sample_present.sp3 | Sample_present.sp2 | Sample_present.sp1 | Sample_present.sp0 |
| HB2 | B.3 | B.2 | B.1 | B.0 | Sample_flat.sp3 | Sample_flat.sp2 | Sample_flat.sp1 | Sample-flat.sp0 |
| SP0 | Audio Sample Subpacktet 0 (7Bytes) : Reserved for 1^{st} stream | | | | | | | |
| SP1 | Audio Sample Subpacktet 1 (7Bytes) : Reserved for 2^{nd} stream | | | | | | | |
| SP2 | Audio Sample Subpacktet 2 (7Bytes) : Reserved for 3^{rd} stream | | | | | | | |
| SP3 | Audio Sample Subpacktet 3 (7Bytes) : Reserved for 4^{th} stream | | | | | | | |

This structure has the advantage of compatibility in terms of being able to display all the information about multi-stream audio and 3D audio through one data sample packet. In addition, the structure has the advantage of being able to list all features that are supported in one audio sample packet.

The feature of audio data transmission stream in accordance with a combination of the values of Supports_Mutistream field, multiASP_layout field and layout/start field may be considered. The contents of each field value are the same as described in Table 13 in connection with an 3D audio sample packet.

As an alternative, a multi-stream audio signal may be transmitted by being included in the area corresponding to the area where video data of each view is located in the vertical synchronization blanking period. This feature is described above in connection with Figure 7.

### Fifth Exemplary Embodiment

The fifth exemplary embodiment provides a format that modifies the conventional audio sample packet format, similar to the third exemplary embodiment.

As shown in Table 25 below, the reserved area of the conventional audio sample packet may be used as Stream_ID and multiASP_layout. Stream_ID and multiASP_layout each have the same function as Stream_ID and multiASP_layout of the third exemplary embodiment.

However, four stream numbers may be shown when multi-stream audio is provided since Stream_ID is represented with two bits. Each of the different bit combinations corresponds to a view of different contents.

If one view of multi-stream audio holds audio signal less than 8 channels, Stream_Id may not be more than 1 and multiASP_layout may be 1 at the same time, in terms of one audio sample packet.

**Table 25 - Modified Audio Sample Packet Header**

| | Bit7 | Bit6 | Bit5 | Bit4 | Bit3 | Bit2 | Bit1 | Bit0 |
|---|---|---|---|---|---|---|---|---|
| HB0 | Packet type = 0x02 (Audio Sample Packet) | | | | | | | |
| HB1 | Stream_ID | | multiASP_layout | Layout / start | Sample_present.sp3 | Sample_present.sp2 | Sample_present.sp1 | Sample_present.sp0 |
| HB2 | 8.3 | 8.2 | 8.1 | 8.0 | Sample_flat.sp3 | Sample_flat.sp2 | Sample_flat.sp1 | Sample-flat.sp0 |
| SP0 | Audio Sample Subpacktet 0 (7Bytes) | | | | | | | |
| SP1 | Audio Sample Subpacktet 1 (7Bytes) | | | | | | | |
| SP2 | Audio Sample Subpacktet 2 (7Bytes) | | | | | | | |
| SP3 | Audio Sample Subpacktet 3 (7Bytes) | | | | | | | |

**Table 25-1 - Description of Stream_Identifer**

| Stream_Identifer | Description |
|---|---|
| 00 | 1^{st} stream |
| 01 | 2^{nd} stream |
| 10 | 3^{rd} stream |
| 11 | 4^{th} stream |

This structure has the advantage of compatibility in terms of being able to display all the information about multi-stream audio and 3D audio through one data sample packet. In particular, this structure may identify a greater number of multi-streams compared to the third exemplary embodiment.

Table 26 shows a feature of the audio data transmission stream in accordance with a combination of the values of Stream_ID field, multiASP_layout field, and layout / start field. If multiASP_layout = 1, multiASP_layout represents the transmission stream of 3D audio, and at this time, layout / start displays a starting position of the packet. If Stream_ID = 01 ∼ 11, a multi-stream is displayed, and the number of samples and channels is set based on the layout / start.

**Table 26 - Capability to deal with proposed features according to exemplary embodiments**

| ASP header fields | | | Description |
|---|---|---|---|
| Stream_ID | multiASP_layout | Layout/start | |
| 00b | 0 | Layout=0 | 24bits-sample+default (2ch/4sample) |
| 00b | 0 | Layout=1 | 24bits-sample+default (8ch/1sample) |
| 00b | 1 | Start=0 | 24bits-sample+3D-audio-channel non-start('N'ch/1sample) |
| 00b | 1 | Start=1 | 24bits-sample+3D-audio-channel start('N'ch/1sample) |
| 00b∼11b | 0 | Layout=0 | 24bits-sample+Multi-stream(2ch/4sample) |
| 00b∼11b | 0 | Layout=1 | 24bits-sample+Multi-stream(8ch/1sample) |
| 1 | 1 | 0 | Not supported |
| 1 | 1 | 1 | |

### Sixth Exemplary Embodiment

The sixth exemplary embodiment provides a feature that adds Stream_ID in an audio sample packet in accordance with the first exemplary embodiment. Stream_ID is the same as described above, and other fields are the same as described in the first exemplary embodiment. Table 27 indicates an audio sample packet header in accordance with the sixth exemplary embodiment. However, Stream_ID is set as 4 bits in the following table, but it is available to be set as 1∼3bits or more than 5 bits. Here, the packet type refers to the packet type that is newly defined.

Since Stream_ID is used to identify audio of each stream, unlike the first exemplary embodiment, audio sample data for one stream is comprised in one multi-stream audio sample packet.

**Table 27 - Extension audio Sample Packet**

| | Bit7 | Bit6 | Bit5 | Bit4 | Bit3 | Bit2 | Bit1 | Bit0 |
|---|---|---|---|---|---|---|---|---|
| HB0 | Packet type = 0x02 (Multi-Stream Audio Sample Packet) | | | | | | | |
| HB1 | Stream_ID | | | | Sample_present.sp3 | Sample_present.sp2 | Sample_present.sp1 | Sample_present.sp0 |
| HB2 | B.3 | B.2 | B.1 | B.0 | Sample_flat.sp3 | Sample_flat.sp2 | Sample_flat.sp1 | Sample-flat.sp0 |
| SP0 | Audio Sample Subpacktet 0 (7Bytes) | | | | | | | |
| SP1 | Audio Sample Subpacktet 1 (7Bytes) | | | | | | | |
| SP2 | Audio Sample Subpacktet 2 (7Bytes) | | | | | | | |
| SP3 | Audio Sample Subpacktet 3 (7Bytes) | | | | | | | |

### Seventh Exemplary Embodiment

The seventh exemplary embodiment uses a 3D audio sample packet that is newly defined in the first exemplary embodiment of section 1.1 of the present specification to indicate a 3D audio sample packet and a multi-stream audio sample packet.

The seventh exemplary embodiment is similar to the first exemplary embodiment, but has more ext_layout fields indicating whether multi-stream is transmitted or not. That is, if ext_layout = 0, this indicatestransmitting the multi-stream audio, and if ext_layout = 1, this indicates transmitting the 3D audio.

Since other fields including sample_start field, sample_present.spX field, and sample_flat.spX field are identical as the first exemplary embodiment, an overlapping description thereof will be omitted. Table 28 shows the audio sample packet structure in accordance with the seventh exemplary embodiment.

**Table 28 - Extended Audio Sample Packet(2channels 2streams Fs=96kHz)**

| | | |
|---|---|---|
| N/chan 1,2 | N/chan 1,2 | N/chan 1,2 |
| (Stream 1) | (Stream 1) | (Stream 1) |
| N/chan 1,2 | N/chan 1,2 | N/chan 1,2 |
| (Stream 1) | (Stream 1) | (Stream 1) |
| - | - | - |
| - | - | - |

**Table 28 -1 Example of extended audio sample packet**

| Byte / Bit# | 7 | 6 | 5 | 4 | 3 | 2 | 1 | 0 |
|---|---|---|---|---|---|---|---|---|
| HB0 | 0 | 0 | 0 | 0 | 1 | 0 | 1 | 1 |
| HB1 | 0 | 0 | Sample_start=X | Ext_layout=0 | Sample_present.sp3=0 | Sample_present.sp2=0 | Sample_present.sp1=1 | Sample_present.sp0=1 |
| HB2 | B.3 | B.2 | B.1 | B.0 | Sample_flat.sp3 | Sample_flat.sp2 | Sample_flat.sp1 | Sample-flat.sp0 |
| PB0∼PB6 | Channel 1, 2 audio data / sample N(Stream 1) | | | | | | | |
| PB7∼PB13 | Channel 1, 2 audio data / sample M(Stream 2) | | | | | | | |
| PB14∼PB20 | - | | | | | | | |
| PB21∼PB27 | - | | | | | | | |

Table 29 shows the body structure of a packet according to the value of the ext_layout field. As illustrated, in the case of multi-stream, an audio signal corresponding to one view may be formed by 2 channels, and therefore, one packet may comprise audio signals of four views. On the other hand, audio signals of multi-channel may be displayed for a 3D audio signal. Various exemplary embodiments describe a 3D audio of up to 32 channels, but the exemplary embodiments are not limited to this, and may be applied to more than 32 channels of audio signal.

**Table 29 - EASP packetization**

| Ext_layout Value | Sample_start Value | Max Num Channels | Samples | Subpkt 0 | Subpkt 1 | Subpkt 2 | Subpkt 3 |
|---|---|---|---|---|---|---|---|
| 0 | X | 2 | 4 | Chnl 1,2 Stream 0 (Sample M) | Chnl 1,2 Stream 1 (Sample M) | Chnl 1,2 Stream 2 (Sample M) | Chnl 1,2 Stream 3 (Sample M) |
| 1 | 1 | N | 1 | Chnl 1,2 Stream 0 (Sample M) | Chnl 3,4 Stream 0 (Sample M) | Chnl 5,6 Stream 0 (Sample M) | Chnl 7,8 Stream 0 (Sample M) |
| 1 | 0 | | | - | - | - | - |
| 1 | 0 | | | Chnl N-7,N-6 Stream 0 (Sample M) | Chnl N-5,N-4 Stream 0 (Sample M) | Chnl N-3,N-2 Stream 0 (Sample M) | Chnl N-1,N Stream 0 (Sample M) |

Table 30 shows the valid values of Sample_Present Bit.

**Table 30 - Valid Sample_Present Bit Configurations for Multiple Audio Stream transmission**

| SP0 | SP1 | SP1 | SP3 | Description |
|---|---|---|---|---|
| 0 | 0 | 0 | 0 | No Subpackets contain audio samples. |
| 1 | 0 | 0 | 0 | Only Subpacket 0 contains audio samples for stream 0 |
| 1 | 1 | 0 | 0 | Subpackets 0 and 1 contain audio samples for stream 0 and 1 |
| 1 | 1 | 1 | 0 | Subpackets 0, 1 and 2 contain audio samples for stream 0,1 and 2 |
| 1 | 1 | 1 | 1 | All subpackets contain audio samples for stream 0,1,2, and 3 |

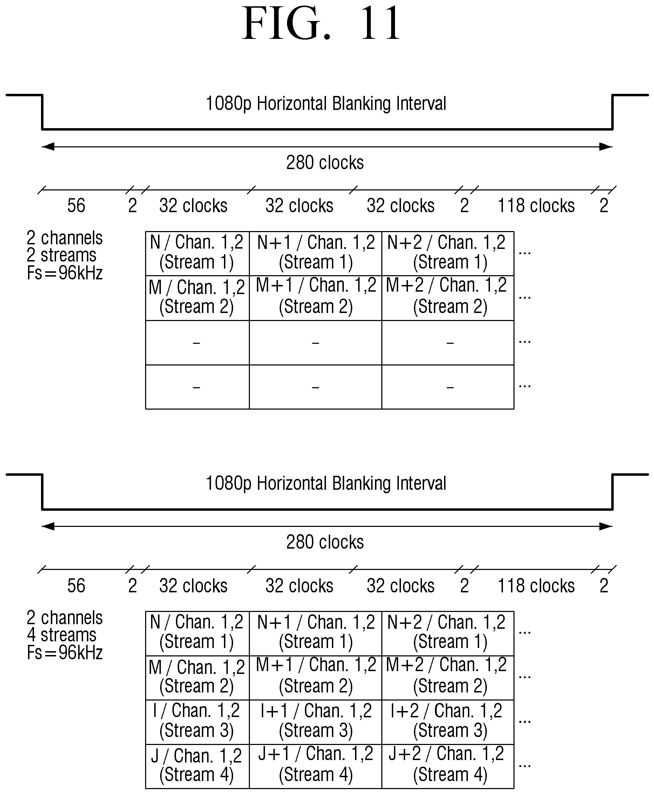

Figure 11 is a view representing a transmission stream of a multi-stream audio sample packet of the seventh exemplary embodiment.

Figure11 shows that data may be transmitted by including a sample of two views in one sample packet in a horizontal blanking interval in case of a 2 channel audio sample packet for dual-view. The data may be transmitted by including samples of four views in one sample packet in a horizontal blanking interval in case of 2 channel audio sample packets for quad-view. That is, data is transmitted by including samples of 4 views in one sample packet. In the drawing, 2 channel audio sample packet has been illustrated as an example, but multi-channel audio sample packets of more than 2 channels may also be used.

In the various exemplary embodiments, a multi-stream audio signal may be transmitted by being included in the area corresponding to the area where video data of each of the views is located in a vertical synchronization blanking period. Figure 7 described above is a view illustrating a transmission stream format in such a case. Audio signals corresponding to the left area of the video signal of each view in Figure 7 may be configured according to exemplary embodiments.

### 1.4 Multi-Stream One Bit Audio Packet

### First Exemplary Embodiment

A new packet for a multi-stream one bit audio may be defined. The new packet corresponds to a 3D audio sample packet.

When transmitting multi-stream one bit audio, each sub-packet may comprise a one bit audio bit for zero, one, or two (or more) audio channels. A multi-stream one bit audio sample comprises four stream_present bits, and each stream_present bit is for a sub-packet.

If a sub-packet comprises audio samples of each individual stream, a corresponding bit will be set. Four stream_invalid.spX bits are set when there is no useful audio data that is available in the source. When stream_invalid.spX is set, sub-packet X continues to indicate the sample period, but it does not contain any useful data.

**Table 31 - Multi-Stream One Bit Audio Packet Header**

| Byte/Bit# | 7 | 6 | 5 | 4 | 3 | 2 | 1 | 0 |
|---|---|---|---|---|---|---|---|---|
| HB0 | 0 | 0 | 0 | 0 | 1 | 1 | 1 | 1 |
| HB1 | Rsvd (0) | Rsvd (0) | Rsvd (0) | Rsvd (0) | samples_present sp3 | Samples_present sp2 | Samples_present sp1 | Samples_present sp0 |
| HB2 | Rsvd (0) | Rsvd (0) | Rsvd (0) | Rsvd (0) | Samples_invaild.sp3 | Samples_invalid.sp2 | Samples_invalid.sp1 | Samples_invalid.sp0 |

In stream_present.spX: [4 fields, 1 bit each], sub-packet X indicates whether it comprises an audio sample of stream X. Since stream_present.spX has substantially the same function as sample_present.spX of the 3D audio sample packets described above, a detailed description thereof will be omitted.

In stream_invalid.spX: [4 fields, 1 bit each], sub-packet X indicates whether it comprises an invalid sample of stream X. Stream_invalid = 1, if samples comprised in the sub-packet X are not valid. Otherwise Stream_invalid = 0. The bit is valid only when relevant stream_present.spX is set. Since stream_present.spX has substantially the same function as sample_present.spX of the 3D audio sample packet described above, a detailed description thereof will be omitted.

According to exemplary embodiments, sample frequency information about multi-stream one bit audio is transmitted by being included in an audio InfoFrame (Reference to section 8.2.2 of HDMI 1.4b).

A multi-stream one bit audio sample packet uses four sub-packets that are identical with a one bit audio sample sub-packet shown in Table 31. The reason that a one bit multi-stream audio sample packet does not hold B0 ∼ B3 fields, unlike the multi-stream audio sample packet, is because it does not follow IEC 60958 block format.

### Various alternatives

One bit multi-stream audio sample packets corresponding to various exemplary embodiments of the multi-stream audio sample packets described above may be defined. That is, a one bit multi-stream audio sample packet may be defined identically as the multi-stream audio sample packet besides the samlpes_invalid.spX field described above, and only B0∼B3 fields may be excluded in the multi-stream audio sample packet. A detailed description thereof will be omitted since other contents may overlap.

### 2.1. Infoframe for 3D Audio / Meta data packet

### First Exemplary Embodiment

In the first exemplary embodiment, additional information related to 3D audio instead of the info frame as described above may be transmitted by using a newly defined audio metadata packet. The source transmits audio Meta data at least once per two video fields, and may transmit the audio Meta data when a 3D audio stream is transmitted.

Audio Meta data comprises the number of channels, ACAT (an Audio Channel Allocation Standard Type), and information regarding the channel/speaker layout used with a 3D audio stream. The table below shows the header of the audio Meta data packets that are newly defined.

**Table 32 - Audio Metadata Packet Header**

| Byte/Bit# | 7 | 6 | 5 | 4 | 3 | 2 | 1 | 0 |
|---|---|---|---|---|---|---|---|---|
| HB0 | 0 | 0 | 0 | 0 | 1 | 1 | 0 | 1 |
| HB1 | Rsvd (0) | Rsvd (0) | Rsvd (0) | Rsvd (0) | Rsvd (0) | Rsvd (0) | Rsvd (0) | Rsvd (0) |
| HB2 | Rsvd (0) | Rsvd (0) | Rsvd (0) | Rsvd (0) | Rsvd (0) | Rsvd (0) | Rsvd (0) | Rsvd (0) |

**Table 33 - Audio Meta data Packet contents**

| Byte/Bit# | 7 | 6 | 5 | 4 | 3 | 2 | 1 | 0 |
|---|---|---|---|---|---|---|---|---|
| PB0 | Rsvd (0) | Rsvd (0) | Rsvd (0) | 3D_CC4 | 3D_CC3 | 3D_CC2 | 3D_CC1 | 3D_CC0 |
| PB1 | Rsvd (0) | Rsvd (0) | Rsvd (0) | Rsvd (0) | ACAT3 | ACAT2 | ACAT1 | ACAT0 |
| PB2 | 3D_CA7 | 3D_CA6 | 3D_CA5 | 3D_CA4 | 3D_CA3 | 3D_CA2 | 3D_CA1 | 3D_CA0 |
| PB2 PB27 | Reserved (0) | | | | | | | |

Each field of the packet is defined as follows.

3D_CC: [5 bits] indicates a channel count of the transmitted 3D audio. If an audio channel count (CC0.. CC2) in an audio infoframe does not match a 3D audio channel count (3D_CC0 ... 3D_CC4) of an audio Meta data packet, the channel count of the audio infoframe will be ignored. Table 34 shows the audio channel in accordance with the values of 3D_CC.

ACAT: [4 bits] indicates ACAT that is provided by the source. Table 35 below shows the value of the ACAT fields. Table 36 describes the allocation of the position of the speakers, when ACAT is set to 0x01 (10.2 channels), Similarly, Table 37 and Table 38 illustrate information for 22.2 channels and 30.2 channels, respectively.

3D_CA: [8bits] shows the channel/speaker allocation for 3D audio. Detailed contents will be illustrated in Table 36∼ Table 38. A 3D_CA field is not valid for an IEC 61937 compressed audio stream.

**Table 34 3D_CC field**

| 3D_CC4 | 3D_CC3 | 3D_CC2 | 3D_CC1 | 3D_CC0 | Audio Channel Count |
|---|---|---|---|---|---|
| 0 | 0 | 0 | 0 | 0 | Refer to Stream Header |
| 0 | 0 | 0 | 0 | 1 | 2 channels |
| 0 | 0 | 0 | 1 | 0 | 3 channels |
| 0 | 0 | 0 | 1 | 1 | 4 channels |
| 0 | 0 | 1 | 0 | 0 | 5 channels |
| 0 | 0 | 1 | 0 | 1 | 6 channels |
| 0 | 0 | 1 | 1 | 0 | 7 channels |
| 0 | 0 | 1 | 1 | 1 | 8 channels |
| 0 | 1 | 0 | 0 | 0 | 9 channels |
| 0 | 1 | 0 | 0 | 1 | 10 channels |
| 0 | 1 | 0 | 1 | 0 | 11 channels |
| 0 | 1 | 0 | 1 | 1 | 12 channels |
| - | - | - | - | - | |
| 1 | 1 | 1 | 1 | 1 | 32 channels |

**Table 35 - Audio Channel Allocation Standard Type field**

| ACAT3 | ACAT2 | ACAT1 | ACAT0 | Description |
|---|---|---|---|---|
| 0 | 0 | 0 | 0 | Reserved |
| 0 | 0 | 0 | 1 | Refer to 10 2 channels (TTA Standard) |
| 0 | 0 | 1 | 0 | Refer to 22 2 channels (SMPTE2036-2) |
| 0 | 0 | 1 | 1 | Refer to 30 2 channels (IEC62574/Ed 1) |
| 0 | 1 | 0 | 0 | reserved |
| | | | | |
| 1 | 1 | 1 | 1 | |

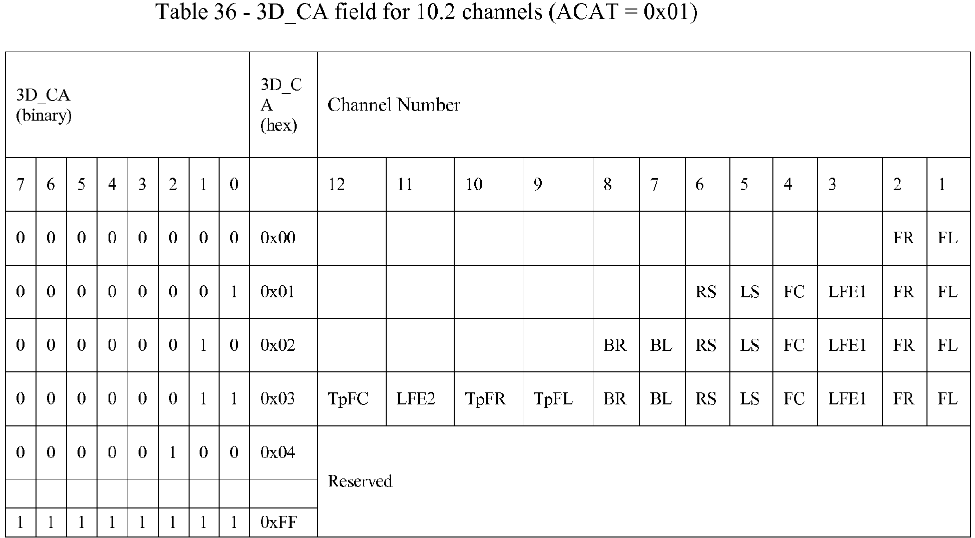

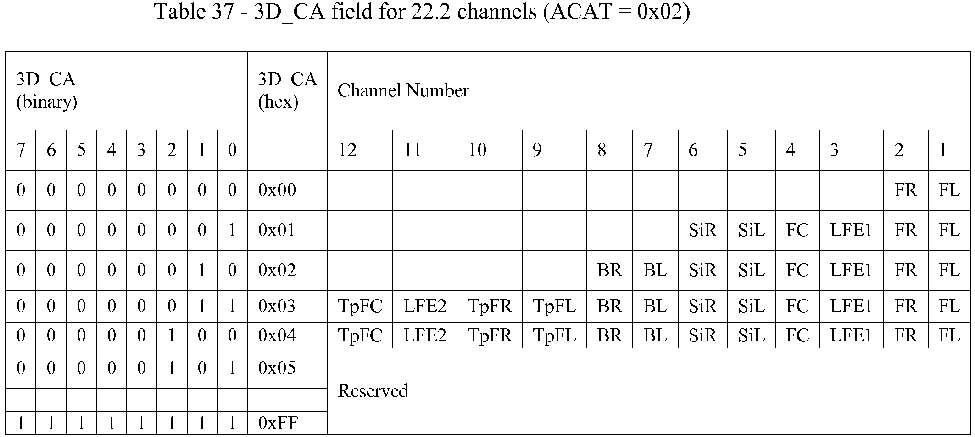

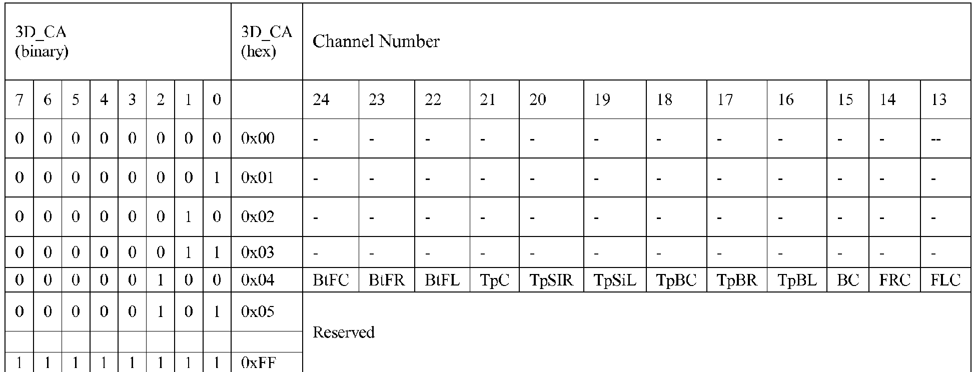

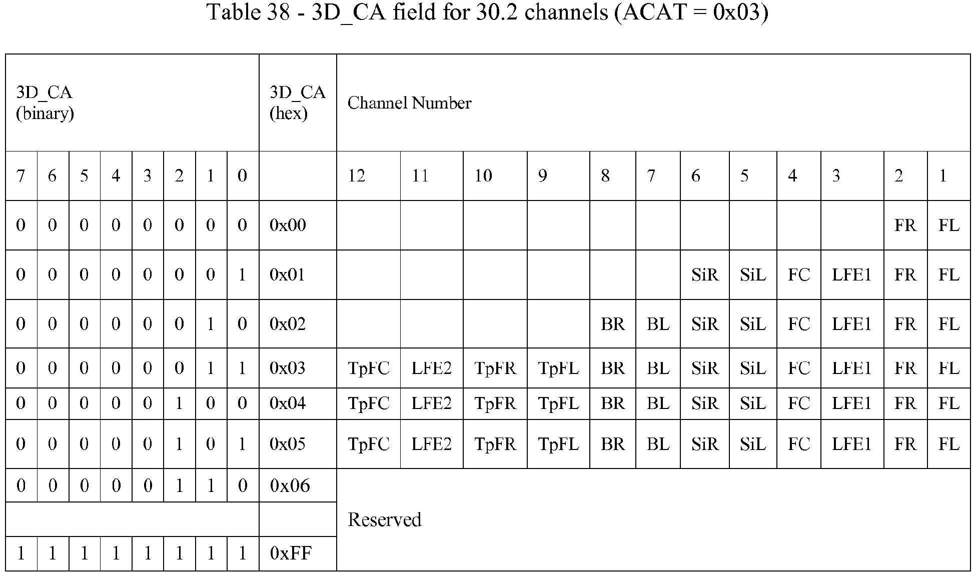

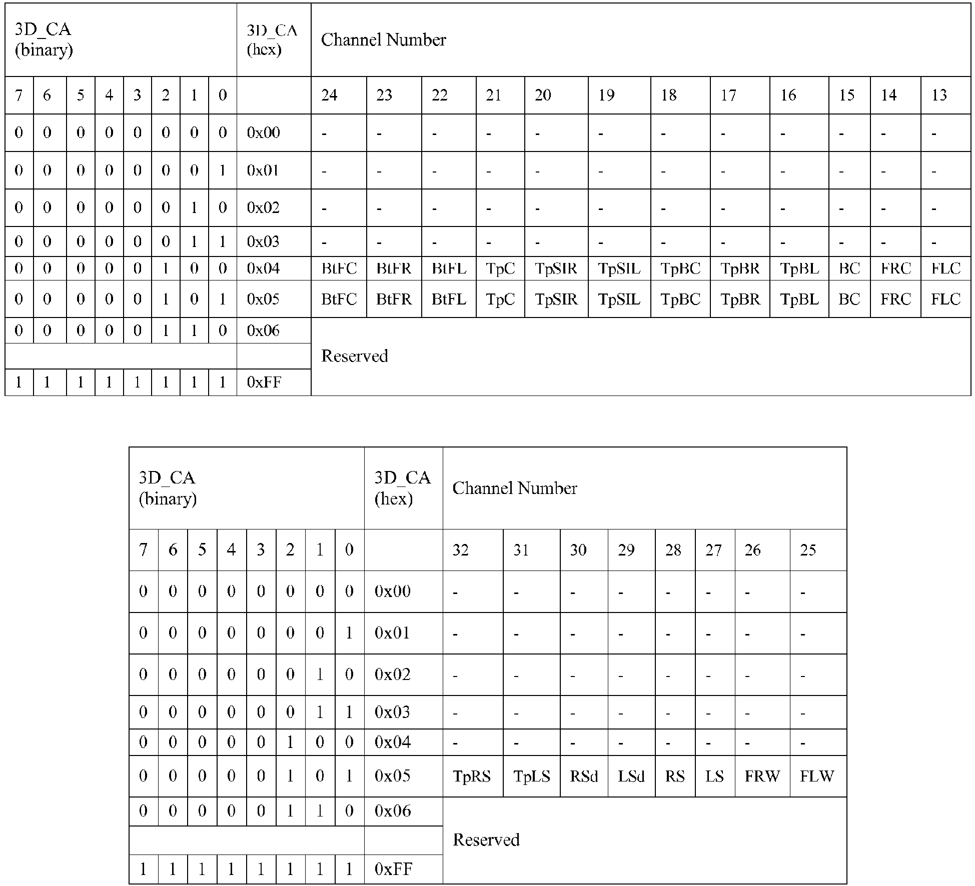

Whenever an active 3D audio stream is transmitted, an accurate audio metadata packet may be transmitted for two video fields at least once. If there is a start of a new 3D audio stream or there is a change included in a 3D audio stream which may be displayed by an audio metadata packet and an audio infoframe, modified and accurate audio metadata packet may be transmitted no later than one video frame following the first affected non-silent audio sample. This may occur just before the first audio sample that is affected is transmitted. In terms of a 3D one bit audio stream, audio metadata may be transmitted before the first affected sample. Transmission of an audio metadata packet may be performed at any time including the vertical blanking period or horizontal blanking period within a data island period. When 3D audio is streamed, sink ignores the CC and CA fields included in the audio infoframe and instead refers to 3D_CC and 3D_CA fields that are included in the audio metadata.

However, when transmitting the audio metadata described above, the existing Audio Info Frame is still available. In other words, in case audio metadata is newly used for the channel allocation for 3D audio, the audio infoframe is used for channel allocation for 2D audio.

In addition, the ACAT in the exemplary embodiment described above has been described in connection with 10.2 channels, 22.2 channels, and 30.2 channels, but the technical concept of the exemplary embodiments may be applied to other cases as well, for example, channels less than 10.2 channels, more than 30.2 channels, or between 10.2 channels and 30.2 channels.

Further, although a metadata packet field is not illustrated in the Tables above, a metadata packet field may be implemented as at least one more field among fields indicating the number of fields and an entire stream that represent stream identification information corresponding to the multi-channel audio data.

The following describes a data transceiving system 1000 in accordance with the first exemplary embodiment described above.

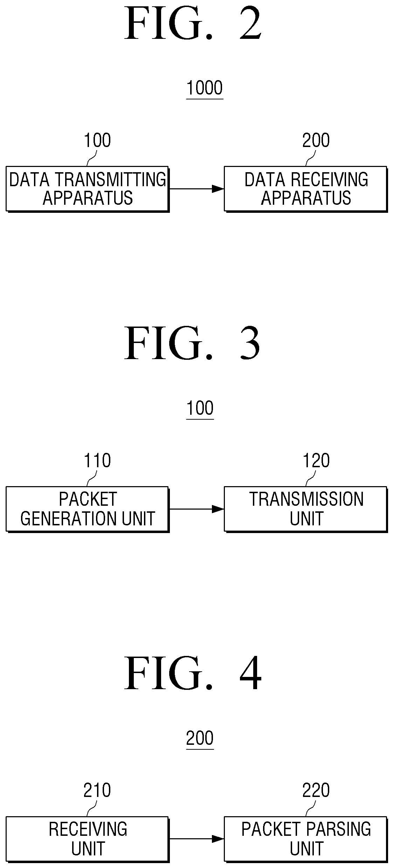

Figure 2 is a block diagram illustrating a configuration of a data transceiving system 1000 in accordance with an exemplary embodiment, Figure 3 is a block diagram illustrating a configuration of a data transmitting apparatus 100 of the data transceiving system 1000, and Figure 4 is a block diagram illustrating a configuration of a data receiving apparatus 200 of the data transceiving system 1000.

As illustrated in Figure 2, the data transceiving system 1000 in accordance with an exemplary embodiment includes a data transmitting apparatus 100 and a data receiving apparatus 200.

As illustrated in Figure 3, the data transmitting apparatus 100 includes a packet generation unit 110 and a transmission unit 120.

The packet generating unit 110 generates a metadata packet for the multi-channel audio data. The metadata packet that has been generated may comprise an ACAT (Audio Channel Allocation Standard Type) field showing ACAT information of the multi-channel audio data.

The transmission unit 120 transmits the generated metadata packet to a data receiving apparatus, such as the data receiving apparatus 200.

The metadata packet 100 generated by the data transmitting apparatus 100 is configured as described above in the first exemplary embodiment above.

As shown in Figure 4, the data receiving apparatus 200 in accordance with an exemplary embodiment includes a receiving unit 210 and a packet parsing unit 220.

The receiving unit 210 receives a metadata packet on multi-channel audio data from a data receiving apparatus. The received metadata packet may comprise an ACAT (Audio Channel Allocation Standard Type) field indicating an ACAT type of the multi-channel audio data.

The packet parsing unit 220 parses the received metadata packets.

The metadata packet that the data receiving apparatus 200 has received is configured as described above in the first exemplary embodiment.

### Second Exemplary Embodiment

Unlike the first exemplary embodiment, the second exemplary embodiment considers a plan to change an Audio Infoframe that is defined by the conventional high-speed wired interface standards. Table 39 shows the audio info frame structure in such a case. The CC field indicates the channel count of transmitted audio, and the CA field indicates channel/speaker allocation information.

A conventional CC field has been represented as three bits, whereas the second exemplary embodiment uses two more bits of a reserved area. In other words, channel count information is displayed by using five bits of CC0, CC1, CC2, CC3, and CC4.

Meanwhile, according to CEA861-D, channel/speaker allocation information is added to the reserved area of Table 20. Unlike the first exemplary embodiment, the second exemplary embodiment does not comprise the ACAT field.

### Table 39 - Modified Audio Infoframe

**Table 39-1 - Modified Audio InfoFrame Packet Header**

| Byte/Bit# | 7 | 6 | 5 | 4 | 3 | 2 | 1 | 0 |
|---|---|---|---|---|---|---|---|---|
| HB0 | Packet type = 0x84 | | | | | | | |
| HB1 | Version Number = 0x01 | | | | | | | |
| HB2 | 0 | 0 | 0 | Length = 10(0x0A) | | | | |

**Table 39-2 Audio infoframe Packet contents**

| Packet Byte # | CEA-861-D Byte # | 7 | 6 | 5 | 4 | 3 | 2 | 1 | 0 |
|---|---|---|---|---|---|---|---|---|---|
| PB0 | n. a | Checksum | | | | | | | |
| PB1 | Data Byte 1 | CT3 | CT2 | CT1 | CT0 | Rsvd | CC2 | CC1 | CC0 |
| PB2 | Data Byte 2 | CC4 | CC3 | | SF2 | SF1 | SF0 | SS1 | SS0 |
| PB3 | Data Byte 3 | Format depends on coding type (i.e. CT0....CT3) | | | | | | | |
| PB4 | Data Byte 4 | CA7 | CA6 | CA5 | CA4 | CA3 | CA2 | CA1 | CA0 |
| PB5 | Data Byte 5 | DM_INH | LSV3 | LSV2 | LSV1 | LSV0 | Rsvd(0) | LFEPBL1 | LFEPBL0 |
| PB6 | Data Byte 6 | Reserved(0) | | | | | | | |
| PB7 | Data Byte 7 | Reserved(0) | | | | | | | |
| PB8 | Data Byte 8 | Reserved(0) | | | | | | | |
| PB9 | Data Byte 9 | Reserved(0) | | | | | | | |
| PB10 | Data Byte 10 | Reserved(0) | | | | | | | |
| PB11-PB27 | n. a | Reserved(0) | | | | | | | |

Third Exemplary EmbodimentThe third exemplary embodiment modifies an audio infoframe that is defined by the conventional high-speed wired interface standard by extending the second exemplary embodiment. Table 40 shows the audio info frame structure in such a case. Similar to the second exemplary embodiment, the CC field indicates a channel count of transmitted audio, and the CA field indicates channel/speaker allocation information.

The third exemplary embodiment is basically similar to the second exemplary embodiment, but more significantly expands the CA field. When one bit of a reserved area is set as channel_extension bit and channel_extension = 0, CC# and CA# fields that are defined in CEA861 are used. In other words, a 2D audio mode is supported. On the other hand, in the case of channel_extension = 1, PB2 [7:6] is used as extension bits (CC4, CC3) of CC, and the reserved area of PB6 is used as a CA_ext field. An extension bit for 3D audio is used.

In this case, a conventional CC field is represented as three bits as described above in the second exemplary embodiment, and the second exemplary embodiment uses two more bits of a reserved area. In other words, channel count information is displayed by using five bits of CC0, CC1, CC2, CC3, and CC4.

In addition, the third exemplary embodiment uses a PB6 field in existing CA bits (PB4). The definition of channel/speaker allocation information for audio having more than 10.2ch is added in the reserved area of CEA861-D and Table 20. An extra table may be defined by standards. Consequently, a multi-channel audio transmission may be available since the CA field is expanded to 16 bits.

However, a new 8-bit field may be defined and used by replacing the existing CA field. For example, a new CA bit may be defined by using a PB6 field or PB7 field. A new CA bit PB7 field and PB6 field may be defined, for example.

### Table 40 - Modified Audio Infoframe 2

**Table 40-1 Audio info frame Pocket Header**

| Byte/Bit# | 7 | 6 | 5 | 4 | 3 | 2 | 1 | 0 |
|---|---|---|---|---|---|---|---|---|
| HB0 | Packet type = 0x84 | | | | | | | |
| HB1 | Version Number = 0x01 | | | | | | | |
| HB2 | 0 | 0 | 0 | Length = 10(0x0A) | | | | |

**Table 40-2 Audio info frame Pocket contents**

| Packet Byte # | CEA-861-D Byte # | 7 | 6 | 5 | 4 | 3 | 2 | 1 | 0 |
|---|---|---|---|---|---|---|---|---|---|
| PB0 | n. a | Checksum | | | | | | | |
| PB1 | Data Byte 1 | CT3 | CT2 | CT1 | CT0 | Rsvd | CC2 | CC1 | CC0 |
| PB2 | Data Byte 2 | CC4 | CC3 | | SF2 | SF1 | SF0 | SS1 | SS0 |
| PB3 | Data Byte 3 | Format depends on coding type (i.e. CT0....CT3) | | | | | | | |
| PB4 | Data Byte 4 | CA 7 | CA6 | CA5 | CA4 | CA3 | CA2 | CA1 | CA0 |
| PB5 | Data Byte 5 | DM_INH | LSV3 | LSV2 | LSV1 | LSV0 | Rsvd(0) | LFEPBL1 | LFEPBL0 |
| PB6 | Data Byte 6 | CA ext | | | | | | | |
| PB7 | Data Byte 7 | Reserved(0) | | | | | | | |
| PB8 | Data Byte 8 | Reserved(0) | | | | | | | |
| PB9 | Data Byte 9 | Reserved(0) | | | | | | | |
| PB10 | Data Byte 10 | Reserved(0) | | | | | | | |
| PB11-PB27 | n. a | Reserved(0) | | | | | | | |

Fourth Exemplary EmbodimentThe fourth exemplary embodiment combines the second exemplary embodiment and the third exemplary embodiment. In the fourth exemplary embodiment, the conventional audio infoframe comprises 3D_CH_present field, CA field of PB4, and 3D_CC field of PB6.

3D_CH_present field performs the same function as channel_extension in the third exemplary embodiment. In other words, if 3D_CH_present = 0, CC # and CA # fields that are defined in the CEA861-D are used as they are. That is, 2D audio mode is supported. On the other hand, when 3D_CH_present = 1, PB6[4:0] is used as an extension bit (CC4, CC3, CC2, CC1, CC0), and the reserved area of PB4 is used as a CA field, as in the second exemplary embodiment. An extension bit for 3D audio is used. Like the second and third exemplary embodiments, the ACAT field is not being defined. Other contents that are not specifically described above may be the same as the first to third exemplary embodiments described above.

### Table 41 - Modified Audio Infoframe 3

**Table 41-1 - Modified Audio InfoFrame Packet Header**

| Byte/Bit# | 7 | 6 | 5 | 4 | 3 | 2 | 1 | 0 |
|---|---|---|---|---|---|---|---|---|
| HB0 | Packet type = 0x84 | | | | | | | |
| HB1 | Version Number = 0x01 | | | | | | | |
| HB2 | 0 | 0 | 0 | Length = 10(0x0A) | | | | |

**Table 41-2 - Modified Audio InfoFrame Packet Contents**

| Packet Byte # | CEA-861-D Byte # | 7 | 6 | 5 | 4 | 3 | 2 | 1 | 0 |
|---|---|---|---|---|---|---|---|---|---|
| PB0 | n. a | Checksum | | | | | | | |
| PB1 | Data Byte 1 | CT3 | CT2 | CT1 | CT0 | 3D_CH_present=1 | CC2 | CC1 | CC0 |
| PB2 | Data Byte 2 | Reserved (0) | | | SF2 | SF1 | SF0 | SS1 | SS0 |
| PB3 | Data Byte 3 | Format depends on coding type (i.e. CT0....CT3) | | | | | | | |
| PB4 | Data Byte 4 | CA 7 | CA6 | CA5 | CA4 | CA3 | CA2 | CA1 | CA0 |
| PB5 | Data Byte 5 | DM _INH | LSV3 | LSV2 | LSV1 | LSV0 | Rsvd(0) | LFEPBL1 | LFEPBL0 |
| PB6 | Data Byte 6 | Reserved (0) | | | 3D_CC4 | 3D_CC3 | 3D_CC2 | 3D_CC1 | 3D_CC0 |
| PB7 | Data Byte 7 | Reserved(0) | | | | | | | |
| PB8 | Data Byte 8 | Reserved(0) | | | | | | | |
| PB9 | Data Byte 9 | Reserved(0) | | | | | | | |
| PB10 | Data Byte 10 | Reserved(0) | | | | | | | |
| PB11-PB27 | n. a | Reserved(0) | | | | | | | |

### 2.2 Infoframe for Multi-stream Audio

For multi-stream audio, a new metadata packet is not defined and an infoframe that is defined by an existing high-speed wired interface standard is used. If a plurality of active audio streams is transmitted by using multi-stream audio sample packets, accurate audio infoframe may be transmitted at least once per two video fields. In this case, the audio infoframe may be used to describe the audio features of all active audio streams.

If there are some changes that are included in an audio stream that may be displayed by the start of a new audio stream, and a plurality of new audio streams, or an audio infoframe, a modified accurate audio infoframe may be transmitted no later than one video field following the first non-silent audio sample that is affected. This may occur just before the first audio sample that is affected is transmitted. The audio infoframe may be transmitted before the first affected sample in terms of a one bit audio stream.

### Modification of infoframe

In the cases of certain exemplary embodiments (the fourth and sixth exemplary embodiments of a 3D audio sample packet, the second, third, fifth, and sixth exemplary embodiments of a multi-stream audio sample packet) using stream_ID unlike the exemplary embodiment described above, stream_ID may be comprised in the audio infoframe as shown below in Table 42.

In Table 42, stream_ID indicates a stream ID of a current audio infoframe, and stream_count indicates the entire number of transmitting audio streams. In the exemplary embodiment described above, an infoframe is not modified as the way of transmitting samples in four sub-packets composing the body of multi-stream audio sample packet, instead of using stream identifier.

### Table 42 - Modified Info Frame

**Table 42-1 Audio InfoFrame Packet Header**

| Byte/Bit# | 7 | 6 | 5 | 4 | 3 | 2 | 1 | 0 |
|---|---|---|---|---|---|---|---|---|
| HB0 | Packet type = 0x84 | | | | | | | |
| HB1 | Version Number = 0x01 | | | | | | | |
| HB2 | 0 | 0 | 0 | Length = 10(0x0A) | | | | |

**Table 42-2 Audio InfoFrame Packet contents**

| Packet Byte # | CEA-861-D Byte # | 7 | 6 | 5 | 4 | 3 | 2 | 1 | 0 |
|---|---|---|---|---|---|---|---|---|---|
| PB0 | n. a | Checksum | | | | | | | |
| PB1 | Data Byte 1 | CT3 | CT2 | CT1 | CT0 | 3D_CH_present | CC2 | CC1 | CC0 |
| PB2 | Data Byte 2 | Reserved (0) | | | SF2 | SF1 | SF0 | SS1 | SS0 |
| PB3 | Data Byte 3 | Format depends on coding type (i.e. CT0....CT3) | | | | | | | |
| PB4 | Data Byte 4 | CA 7 | CA6 | CA5 | CA4 | CA3 | CA2 | CA1 | CA0 |
| PB5 | Data Byte 5 | DM_INH | LSV3 | LSV2 | LSV1 | LSV0 | Rsvd(0) | LFEPBL1 | LFEPBL0 |
| PB6 | Data Byte 6 | Reserved(0) | | | 3D_CC4 | 3D_CC3 | 3D_CC2 | 3D_CC1 | 3D_CC0 |
| PB7 | Data Byte 7 | Reserved(0) | | | | **Stream_count-1** | | **Stream_ID** | |
| PB8 | Data Byte 8 | Reserved(0) | | | | | | | |
| PB9 | Data Byte 9 | Reserved(0) | | | | | | | |
| PB10 | Data Byte 10 | Reserved(0) | | | | | | | |
| PB11-PB27 | n. a | Reserved(0) | | | | | | | |

### 3.1. EDID (Extended Display Identification Data) for 3D Audio

Information related to an audio feature and speaker allocation of 3D audio may be included in EDID using one of the following methods (1) by modifying a conventional short audio descriptor and speaker allocation data block, (2) by defining new data blocks in a reserved area for audio-related blocks from Extended Tag Codes, and (3) by defining one new data block in a reserved area of an HDMI Audio Data Block from Extended Tag Codes.

For example, an EDID data block written in CEA-861-F (or D or E) may be used to indicate all of sink's audio features and speaker allocation support. Sink's audio feature and speaker allocation support are displayed on a series of short audio descriptors located in a data block collection of a CEA Extension. These data comprise parameters that are related to each encoding which is the same as an audio encoding list supported by sink and as the number of channels supporting a format thereof. A speaker allocation descriptor may be comprised in a data block collection, and may be required in sink supporting multi-channel (up to 8 channels) L-PCM for 2D audio or multi-channel (up to 8 channels) one bit audio.

First Exemplary Embodiment When sink supports multi-stream audio and/or 3D audio transmission according to exemplary embodiments, an HDMI audio data block (High Speed Cable Interface Audio Data Block) with an extended tag code 18 may be used to indicate 3D audio features, 3D speaker allocation, and multi-stream audio features.

If sink supports 3D audio transmission, an HDMI audio data block comprises more than one HDMI 3D audio descriptor (HDMI_3D_AD) with four bytes. An HDMI audio data block may comprise one HDMI 3D speaker allocation descriptor (HDMI_3D_SAD) followed by a last HDMI 3D audio descriptor.

When sink supports multi-steam audio transmission but does not support 3D audio transmission, an HDMI audio data block may comprise more than one CEA short audio descriptor (CEA_SAD) following 3 bytes. A CEA short audio descriptor is displayed in CEA-861-F (D or E).

When sink supports multi-stream audio transmission and 3D audio transmission, an HDMI audio data block comprises more than one CEA short audio descriptor following an HDMI 3D speaker allocation descriptor. For more information, see Table 43.

The above-mentioned HDMI 3D audio descriptor indicates the support for audio encoding that is defined in CEA-861-F (Also D or E). A high-speed wired interface apparatus may support a 3D audio format following TTA (10.2ch), SMPTE2036-2 (22.2ch), and IEC62574 (30.2ch). A more detailed description of the content of Table 49 will be described in Table 45. These tables are categorized by the audio format code that is specified in Table 24 and Table 26 of CEA-861-F (also D or E).

An HDMI 3D speaker allocation descriptor as described above may be comprised in an HDMI audio data block, and may be required in a sink supporting 3D audio. The structure of an HDMI 3D speaker allocation descriptor is shown in Table 50. Sink shows audio ability by indicating a pair of speakers, and sets a corresponding flag. An HDMI 3D speaker allocation descriptor may comprise 4 bits in an ACAT field, and these four bits indicate a type of audio channel allocation standard. Detailed content of Table 52 will be described in Table 50. CEA short audio descriptors may also be comprised in an HDMI audio data block, and may be required in sink supporting multi-stream audio transmission. These descriptors describe audio features of each audio stream. A maximum channel count may be limited to 2 channels on each audio stream, but it may be more according to various other exemplary embodiments.

**Table 43 - HDMI Audio Data Block**

| Byte/Bit # | 7 | 6 | 5 | 4 | 3 | 2 | 1 | 0 |
|---|---|---|---|---|---|---|---|---|
| 1 | Tag cod=7(Use Extended Tag) | | | L*=Length of following data block payload (in bytes) | | | | |
| 2 | Extended Tag Code = 18 (0x12) | | | | | | | |
| 3 | NUM_HDML_3D_AD(=X) | | | NUM_CEA_SAD(=Y) | | | Max_Stream_coun | |
| (4)∼(7) | (if NUM_HDMI_3D_AD>0) | | | | | | | |
| | HDMI_3D_AD_1 | | | | | | | |
| ... | ... | | | | | | | |
| (3^{∗}X+1)∼(3^{∗}X+4) | (if NUM_HDMI_3D_AD>0) | | | | | | | |
| | HDMI_3D_AD_X | | | | | | | |
| (N**)∼(n+3) | (if NUM_HDMI_3D_AD>0) HDMI_3D_SAD | | | | | | | |
| (N+4)∼(N+6) | (if Max_Stream_Count-1>0 and NUM_CEA_SAD>0) | | | | | | | |
| | CEA_SAD_1 | | | | | | | |
| ... | ... | | | | | | | |
| (N+(3^{∗}y+1))∼(N+(3^{∗}Y+3) ) | (if Max_Stream_Count-1>0 and NUM_CEA_SAD>0) | | | | | | | |
| | CEA_SAD_Y | | | | | | | |

| | | | | | | | | |
|---|---|---|---|---|---|---|---|---|
| * The length following a data block payload (in bytes), 2+ 4^{∗}X + 4 + 3^{∗}Y ** 3 + 4^{∗}X+ 1 | | | | | | | | |

The following describes each field of the HDMI audio data blocks that have been illustrated in Table 43 above.
NUM_HDMI_3D_AD: [3 bits] indicates the number of HDMI 3D audio descriptors.
NUM_CEA_SAD:[3 bits] indicates the number of CEA Short Audio Descriptors.
Max_Stream_Count-1: [2 bits] indicates a number resulting by subtracting 1 from the transmitted streams. Refer to Table 44.
HDMI_3D_AD: HDMI 3D Audio Descriptor.
HDMI_3D_SAD: HDMI 3D Speaker Allocation Descriptor.
CEA_SAD CEA: CEA Short Audio Descriptor).

**Table 44 Max_Stream_Count-1 field**

| Max_Stream_Count-1' | Description |
|---|---|
| 00 | Do not support Multi-Stream Audio |
| 01 | 2 audio streams |
| 10 | 3 audio streams |
| 11 | 4 audio streams |

**Table 45 HDMI 3D Audio Descriptor for Audio Format Code = 1 (LPCM)**

| Byte/Bit# | 7 | 6 | 5 | 4 | 3 | 2 | 1 | 0 |
|---|---|---|---|---|---|---|---|---|
| 1 | 0 | 0 | 0 | 0 | Audio Format Code = 0001b | | | |
| 2 | 0 | 0 | 0 | Max Number of channels-1 | | | | |
| 3 | 0 | 192 kHz | 176.4kHz | 96 kHz | 88.2 kHz | 48 kHz | 44.1 kHZ | 32 kHz |
| 4 | 0 | 0 | 0 | 0 | 0 | 24 bit | 20 bit | 16 bit |

**Table 46 HDMI 3D Audio Descriptor for Audio Format Codes 2 to 8**

| Byte/Bit# | 7 | 6 | 5 | 4 | 3 | 2 | 1 | 0 |
|---|---|---|---|---|---|---|---|---|
| 1 | 0 | 0 | 0 | 0 | Audio Format Code | | | |
| 2 | 0 | 0 | 0 | Max Number of channels-1 | | | | |
| 3 | 0 | 192 kHz | 176.4kHz | 96 kHz | 88.2 kHz | 48 kHz | 44.1 kHZ | 32 kHz |
| 4 | Maximum bit rate divided by 8kHz | | | | | | | |

**Table 47 HDMI 3D Audio Descriptor for Audio Format Codes 9 to 13**

| Byte/Bit# | 7 | 6 | 5 | 4 | 3 | 2 | 1 | 0 |
|---|---|---|---|---|---|---|---|---|
| 1 | 0 | 0 | 0 | 0 | Audio Format Code | | | |
| 2 | 0 | 0 | 0 | Max Number of channels-1 | | | | |
| 3 | 0 | 192 kHz | 176.4kHz | 96 kHz | 88.2 kHz | 48 kHz | 44.1 kHZ | 32 kHz |
| 4 | Audio Format Code dependent value | | | | | | | |

**Table 48 HDMI 3D Audio Descriptor for Audio Format Code 14 (WMA Pro)**

| Byte/Bit# | 7 | 6 | 5 | 4 | 3 | 2 | 1 | 0 |
|---|---|---|---|---|---|---|---|---|
| 1 | 0 | 0 | 0 | 0 | Audio Format Code= 1110b | | | |
| 2 | 0 | 0 | 0 | Max Number of channels-1 | | | | |
| 3 | 0 | 192 kHz | 176.4kHz | 96 kHz | 88.2 kHz | 48 kHz | 44.1 kHZ | 32 kHz |
| 4 | Reserved (0) | | | | | Profile | | |

**Table 49 HDMI 3D Audio Descriptor for Audio Format Code 15 (extension)**

| Byte/Bit# | 7 | 6 | 5 | 4 | 3 | 2 | 1 | 0 |
|---|---|---|---|---|---|---|---|---|
| 1 | 0 | 0 | 0 | 0 | Audio Format Code = 1111b | | | |
| 2 | 0 | 0 | 0 | Max Number of channels-1 | | | | |
| 3 | 0 | 192 kHz | 176.4kHz | 96 kHz | 88.2 kHz | 48 kHz | 44.1 kHZ | 32 kHz |
| 4 | Audio Format Code Extension | | | | | 0 | 0 | 0 |

**Table 50 HDMI 3D Speaker Allocation Descriptor for 10.2 channels (TTA Standard)**

| Byte/Bit # | 7 | 6 | 5 | 4 | 3 | 2 | 1 | 0 |
|---|---|---|---|---|---|---|---|---|
| PB1 | FLW/FRW | BLC/BRC | FLC/FRC | BC | **BL/BR** | **FC** | **LFE1** | **FL/FR** |
| PB2 | TpSIL/TpSiR | SiL/SiR | **TpBC** | **LFE2** | **LS/RS** | TpFC | TpC | **TpFL/TpFR** |
| PB3 | 0 | 0 | 0 | LSd/LRd | TpLS/TpRS | BtFL/BtFR | BtFC | TpBL/TpBR |
| PB4 | ACAT (=0X01) | | | | 0 | 0 | 0 | 0 |

Bits presented in bold letter in Table 50 above indicate the specified speaker associated with the 10.2.channels.

**Table 51 HDMI 3D Speaker Allocation Descriptor for 22.2 channels (SMPTE2036-2)**

| Byte/Bit # | 7 | 6 | 5 | 4 | 3 | 2 | 1 | 0 |
|---|---|---|---|---|---|---|---|---|
| PB1 | FLW/FRW | BLC/BRC | **FLC/FRC** | **BC** | **BL/BR** | **FC** | **LFE1** | **FL/FR** |
| PB2 | **TpSiL/TpSiR** | **SiL/SiR** | **TpBC** | **LFE2** | **LS/RS** | **TpFC** | **TpC** | **TpFL/TpFR** |
| PB3 | 0 | 0 | 0 | LSd/LRd | TpLS/TpRS | **BtFL/BtFR** | **BtFC** | **TpBL/TpBR** |
| PB4 | ACAT (=0X02) | | | | 0 | 0 | 0 | 0 |

Bits persented in bold letter in Table 51 above indicate the specified speaker associated with the 22.2.channels.

**Table 52 HDMI 3D Speaker Allocation Descriptor for 30.2 channels (IEC62574/Ed.1)**

| Byte/Bit # | 7 | 6 | 5 | 4 | 3 | 2 | 1 | 0 |
|---|---|---|---|---|---|---|---|---|
| PB1 | **FLW/FRW** | BLC/BRC | **FLC/FRC** | **BC** | **BL/BR** | **FC** | **LFE1** | **FL/FR** |
| PB2 | **TpSIL/TpSiR** | **SiL/SiR** | **TpBC** | **LFE2** | **LS/RS** | **TpFC** | **TpC** | **TpFL/TpFR** |
| PB3 | 0 | 0 | 0 | **LSd/LRd** | **TpLS/TpRS** | **BtFL/BtFR** | **BtFC** | **TpBL/TpBR** |
| PB4 | ACAT (=0X03) | | | | 0 | 0 | 0 | 0 |

Bits persented in bold letter in Table 52 above indicate the specified speaker associated with the 30.2. channels.

In the first exemplary embodiment, a speaker allocation of multi-channel 3D audio data is described with 3 bytes, but this is merely an example. More speaker allocation information may be needed for 3D audio data of more than 30.2 channels, and 3D speaker allocation descriptors may display speaker allocation by using more than 4 bytes in this case.

**Table 53 Audio Channel Allocation Type (ACAT) field**

| ACAT3 | ACAT2 | ACAT1 | ACAT0 | Description |
|---|---|---|---|---|
| 0 | 0 | 0 | 0 | Reserved |
| 0 | 0 | 0 | 1 | Refer to 10 2 channels (TTA Standard) |
| 0 | 0 | 1 | 0 | Refer to 22 2 channels (SMPTE2036-2) |
| 0 | 0 | 1 | 1 | Refer to 30 2 channels (IEC62574/Ed 1) |
| 0 | 1 | 0 | 0 | Reserved |
| | | | | |
| 1 | 1 | 1 | 1 | |

The remaining values of bits of an ACAT field may be used by being allocated in various channel types (e.g., Dolby, USC, or a format of ITU-R which will be standardized in the future) in accordance with the needs of the manufacturer.

### Second Exemplary Embodiment

Unlike the first exemplary embodiment, the second exemplary embodiment modifies the audio data block. In particular, a reserved area of a CEA Short Audio Descriptor may be used to extend and display a max number of channel. For example, it may be extended by using Byte1 [7] and Byte2 [7] as shown in Table 54 below. Thus, 3D audio may be represented. A CEA Short Audio Descriptor may hold different field areas in accordance with the audio format.

### Table 54 - CEA Short Audio Descriptor

**Table 54-1 CEA Short Audio Descriptor for Audio Code=1 (LPCM)**

| | Bits | | | | | | | |
|---|---|---|---|---|---|---|---|---|
| Byte# | 7 | 6 | 5 | 4 | 3 | 2 | 1 | 0 |
| 1 | **F17=0** | Audio Format Code = 0001 | | | | Max Number of channels - 1 | | |
| 2 | **F27=0** | 192 kHz | 176.4 kHz | 96 kHz | 88.2 kHz | 48 kHz | 44.1 kHz | 32 kHZ |
| 3 | **F37=0** | **F36=0** | **F35=0** | **F34=0** | **F33=0** | 24 bit | 20 bit | 16 bit |

**Table 54-2 CEA Short Audio Descriptor for Audio Codes 2 to 8**

| | Bits | | | | | | | |
|---|---|---|---|---|---|---|---|---|
| Byte# | 7 | 6 | 5 | 4 | 3 | 2 | 1 | 0 |
| 1 | **F17=0** | Audio Format Code | | | | **Max Number of channels - 1** | | |
| 2 | **F27=0** | 192 kHz | 176.4 kHz | 96 kHz | 88.2 kHz | 48 kHz | 44.1 kHz | 32 kHZ |
| 3 | Maimum bit rate divided by 8 kHz | | | | | | | |

**Table 54-3 CEA Short Audio Descriptor for Audio Codes 9 to 15**

| | bits | | | | | | | |
|---|---|---|---|---|---|---|---|---|
| Byte# | 7 | 6 | 5 | 4 | 3 | 2 | 1 | 0 |
| 1 | **F17=0** | Audio Format Code | | | | **Max Number of channels - 1** | | |
| 2 | **F27=0** | 192 kHz | 176.4 kHz | 96 kHz | 88.2 kHz | 48 kHz | 44.1 kHz | 32 kHZ |
| 3 | [Default=0, unless Defined by Audio Codex Vendor] | | | | | | | |

ACAT (Audio Channel Allocation Standard Type) may be set by modifying a speaker allocation data block independently from the second exemplary embodiment. ACAT may be identified by using Byte3 [7:4], which is a reserved area of a speaker allocation data block payload, and a speaker allocation data block for each type may be defined as a separate new table. The position of the ACAT field may be defined in different positions within the range of Byte2 [7:3] ∼ Byte3 [7:0].

As illustrated in Table 55 below, ACAT=0001 may indicate 10.2 channels of TTA standard, and ACAT=0010 may indicate 22.2 channels.

**Table 55 - Speaker Allocation Data Block Payload (Refer to CEA861-E)**

| | bits | | | | | | | |
|---|---|---|---|---|---|---|---|---|
| Byte# | 7 | 6 | 5 | 4 | 3 | 2 | 1 | 0 |
| 1 | FLW/FRW | RLC/RRC | FLC/FRC | RC | RL/RR | FC | LFE | FL/FR |
| 2 | F27=0 | F26=0 | F25=0 | F24=0 | F23=0 | FCH | TC | FLH/FRH |
| 3 | F37=0 | F36=0 | F35=0 | F34=0 | F33=0 | F32=0 | F31=0 | F30=0 |

**Table 55-1 ACAT Field**

| ACAT | description |
|---|---|
| 0000 | Refer to CEA861-D(E,F) |
| 0001 | Refer to 10.2 channel (TTA Standard) |
| 0010 | Refer to 22.2 channel (SMPTE2036-2) |
| 0011∼1111 | Reserved |
| 0011∼1111 | Reserved |

**Table 55-2 Speaker Allocation Data Block Payload (for 22.2 channel)**

| Byte#/bit | 7 | 6 | 5 | 4 | 3 | 2 | 1 | 0 |
|---|---|---|---|---|---|---|---|---|
| 1 | LFE2 | SIL/SIR | FLC/FLR | BC | BL/BR | FC | LFE1 | FL/FR |
| 2 | BtFC | BtFL/BtFR | TpBC | TpSIL/TpSIR | TpBL/TpBR | TpC | TpFC | TpFL/TpFR |
| 3 | ACAT = 0010b | | | | 0 | 0 | 0 | 0 |

**Table 55-3 Speaker Allocation Data Block Payload (for 10.2 channel)**

| Byte#/bit | 7 | 6 | 5 | 4 | 3 | 2 | 1 | 0 |
|---|---|---|---|---|---|---|---|---|
| 1 | CH | LC/RC | LB/RB | LS/RS | LFE2 | LFE1 | C | L/R |
| 2 | 0 | 0 | 0 | 0 | 0 | 0 | 0 | 0 |
| 3 | ACAT = 0010b | | | | 0 | 0 | 0 | 0 |

However, the allocation data block of a speaker may be defined differently in accordance with the needs of the manufacturer. In this case, a plan of enhancing compatibility may be considered by utilizing a common speaker placement in accordance with the needs of the manufacturer. The table below shows the SMPTE2036-2 standard for 3D audio of 22.2 channels. Bits presented in bold letter correspond to common speaker placement of several manufacturers.

**Table 56 - Speaker Allocation Data Block Payload 2 (Refer to CEA861-E)**

| | Bits | | | | | | | |
|---|---|---|---|---|---|---|---|---|
| Byte# | 7 | 6 | 5 | 4 | 3 | 2 | 1 | 0 |
| 1 | FLW/FRW | RLC/RRC | FLC/FRC | RC | RL/RR | FC | LFE | FL/FR |
| 2 | F27=0 | F26=0 | F25=0 | F24=0 | F23=0 | FCH | TC | FLH/FRH |
| 3 | F37=0 | F36=0 | F35=0 | F34=0 | F33=0 | F32=0 | F31=0 | F30=0 |

**Table 56-1 ACAT Field**

| ACAT | Description |
|---|---|
| 0000 | Refer to CEA861-D(E,F) |
| 0001 | Refer to 10.2 channel (TTA Standard) |
| 0010 | Refer to 22.2 channel (SMPTE2036-2) |
| 0011∼1111 | Reserved |

**Table 56-2 Speaker Allocation Data Block Payload (for 22.2 channel)**

| Byte#/bit | 7 | 6 | 5 | 4 | 3 | 2 | 1 | 0 |
|---|---|---|---|---|---|---|---|---|
| 1 | FLW/FRW | RLC/RRC | **FLC/FRC** | **RC** | **RL/RR** | **FC** | **LFE** | **FL/FR** |
| 2 | **TpBC** | **TpSIL/TpSIR** | **TpBL/TpBR** | **LFE2** | **SIL/SIR** | **FCH** | **TC** | **FLH/FRH** |
| 3 | ACAT = 0010b | | | | 0 | 0 | **BtFC** | **BtFL/BtFR** |

**Table 56-3 Speaker Allocation Data Block Payload (for 10.2 channel)**

| Byte#/bit | 7 | 6 | 5 | 4 | 3 | 2 | 1 | 0 |
|---|---|---|---|---|---|---|---|---|
| 1 | FLW/FRW | **RLC/RRC (LB/RB)** | FLC/FRC | RC | **RL/RR (LS/RS)** | **FC** | **LFE** | **FL/FR** |
| 2 | TpBC | TpSIL/TpSIR | TpBL/TpBR | **LFE2** | SIL/SIR | FCH | **TC** | **FLH/FRH** |
| 3 | ACAT = 0010b | | | | 0 | 0 | BtFC | BtFL/BtFR |

However, the ACAT field is not defined separately in the exemplary embodiment of the speaker allocation data block payload described above, and classification of each type (e.g., 10.2ch (TTA), 22.2ch (SMPTE2036-2), 13.1ch (Dolby), etc.) may be available in the source after checking the position and types of bits that are set in a speaker allocation data block payload. This is because the number of channels may be known through the modified audio data block.

Third Exemplary EmbodimentThe third exemplary embodiment does not define an HDMI audio data block, but newly defines an "Extended Speaker Allocation Data Block" type in an Extended Tag Code of EDID without having to define a new data block from the HDMI audio. The size of the new data block will be available up to a maximum of 32 bytes. Table 57 gives an example of a case of 4 bytes. The size of the ACAT may be modified according to the needs of the manufacturers or other parties.

ACAT is identified by using a reserved area (Byte3 [7:4]), and a speaker allocation data block for each type is defined. The configuration of the payload may be the same as the exemplary embodiment described above. Of course, the ACAT field may be located in a different area other than the reserved area as described above.

A remaining bit value of an ACAT field may be used by being allocated to various channel types (e.g. , Dolby , USC, or an ITU-R format that will be standardized in the future) in accordance with the manufacturer.

**Table 57 - Modified Speaker Allocation Data Block**

| Extended Tag Codes | Type of Data Block |
|---|---|
| 0 | Video Capability Data Block |
| 1 | Vendor-Specific Video Data Block |
| 2 | Reserved for VESA Video Display Device Information Data Block |
| 3 | Reserved for VESA Video Data Block |
| 4 | Reserved for HDMI Video Data Block |
| 5 | Colorimetry Data Block |
| 6... 15 | Reserved for video=released blocks |
| 16 | CEA Miscellaneous Audio Fields |
| 17 | Vendor -Specific Audio Data Block |
| 18 | Reserved for HDMI Audio Data Block |
| 19 | **Extended Speaker Allocation Data Block** |
| 20... 31 | Reserved for audio-related blocks |
| 32... 255 | Reserved for general |

**Table 57-1 - ACAT Description**

| ACAT | description |
|---|---|
| 0000 | CEA861-D(E,F) |
| 0001 | 10.2 channel |
| | (TTA Standard) |
| 0010 | 22.2 channel |
| | (SMPTE2036-2) |
| 0011∼1111 | Reserved |

**Table 57-2 - Extended Speaker Allocation Data Block Payload(for 10 .2channel)**

| Byte#/bit | 7 | 6 | 5 | 4 | 3 | 2 | 1 | 0 |
|---|---|---|---|---|---|---|---|---|
| 1 | FLW/FRW | **RLC/RRC** | FLC/FRC | RC | **RL/RR** | **FC** | **LFE** | **FL/FR** |
| 2 | TpBC | TpSIL/TpSIR | TpBL/TpBR | **LFE2** | SIL/SIR | FCH | **TC** | **FLH/FRH** |
| 3 | 0 | 0 | 0 | LSd/RSd | LS/RS | TpLS/TpRS | BtFC | BtFL/BtFR |
| 4 | ACAT = 0001b | | | | 0 | 0 | 0 | 0 |

**Table 57-3 - Extended Speaker Allocation Data Block Payload(for 22.2channel)**

| Byte#/bit | 7 | 6 | 5 | 4 | 3 | 2 | 1 | 0 |
|---|---|---|---|---|---|---|---|---|
| 1 | FLW/FRW | RLC/RRC | **FLC/FRC** | **RC** | **RL/RR** | **FC** | **LFE** | **FL/FR** |
| 2 | **TpBC** | **TpSIL/TpSIR** | **TpBL/TpBR** | **LFE2** | **SIL/SIR** | **FCH** | **TC** | **FLH/FRH** |
| 3 | 0 | 0 | 0 | LSd/RSd | LS/RS | TpLS/TpRS | **BtFC** | **BtFL/BtFR** |
| 4 | ACAT = 0010b | | | | 0 | 0 | 0 | 0 |

**Table 57-4 - Extended Speaker Allocation Data Block Payload(for 30.2channel)**

| Byte#/bit | 7 | 6 | 5 | 4 | 3 | 2 | 1 | 0 |
|---|---|---|---|---|---|---|---|---|
| 1 | **FLW/FRW** | RLC/RRC | **FLC/FRC** | **RC** | **RL/RR** | **FC** | **LFE** | **FL/FR** |
| 2 | **TpBC** | **TpSIL/TpSIR** | **TpBL/TpBR** | **LFE2** | **SIL/SIR** | **FCH** | **TC** | **FLH/FRH** |
| 3 | 0 | 0 | 0 | **LSd/RSd** | **LS/RS** | **TpLS/TpRS** | **BtFC** | **BtFL/BtFR** |
| 4 | ACAT = 0011b | | | | 0 | 0 | 0 | 0 |

Fourth Exemplary EmbodimentThe fourth exemplary embodiment is similar to the third exemplary embodiment, but it has a difference in that the fourth exemplary embodiment adds data blocks for a type in an extended tag code after defining a data block for a speaker allocation standard type (e.g.. 10.2ch(TTA), 22.2ch(NHK), 13.1ch(Dolby)).

For example, the block tag code 19 may indicate a speaker allocation data block for TTA10.2 channels, the data block tag code 20 may indicate a speaker allocation data block for NHK 22.2 channels, and data block tag code 21 may indicate a speaker allocation data block for Dolby 13.1 channels.

**Table 58 - Modified Speaker Allocation Data Block**

| Extended Tag Codes | Type of Data Block |
|---|---|
| 0 | Video Capability Data Block |
| 1 | Vendor-Specific Video Data Block |
| 2 | Reserved for VESA Video Display Device Information Data Block |
| 3 | Reserved for VESA Video Data Block |
| 4 | Reserved for HDMI Video Data Block |
| 5 | Colorimetry Data Block |
| 6... 15 | Reserved for video=released blocks |
| 16 | CEA Miscellaneous Audio Fields |
| 17 | Vendor -Specific Audio Data Block |
| 18 | Reserved for HDMI Audio Data Block |
| **19** | **HDMI Speaker Allocation Data Block for 10.2ch(TTA)** |
| **20** | **HDMI Speaker Allocation Data Block for 22.2ch(NHK)** |
| **21** | **HDMI Speaker Allocation Data Block for 13.1ch(Dolby)** |
| 22... 31 | Reserved for audio-related blocks |
| 32... 255 | Reserved for general |

**Table 58-1 Speaker Allocation Data Block payload(for multi-channel)**

| Byte#/bit | 7 | 6 | 5 | 4 | 3 | 2 | 1 | 0 |
|---|---|---|---|---|---|---|---|---|
| 1 | Pos.7 | - | - | - | - | - | - | Pos.0 |
| 2 | Pos.15 | - | - | - | - | - | - | Pos.8 |
| 3 | Pos.23 | - | - | - | - | - | - | Pos.16 |
| 4 | Pos.31 | - | - | - | - | - | - | Pos.24 |

### Fifth Exemplary Embodiment

The fifth exemplary embodiment defines an extended audio data block. The extended audio data block corresponds to the value of an extended tag code. The extended audio data block comprises more than one extension CEA short audio descriptor. Each extension CEA short audio descriptor comprises information on the number of channels. In this case, the size or the format of each field may be the same as a short audio descriptor of an audio data block, or may be defined differently.

**Table 59 - Extended Audio Data Block**

| Extended Tag Codes | Type of Data Block |
|---|---|
| 0 | Video Capability Data Block |
| 1 | Vendor-Specific Video Data Block |
| 2 | Reserved for VESA Video Display Device Information Data Block |
| 3 | Reserved for VESA Video Data Block |
| 4 | Reserved for HDMI Video Data Block |
| 5 | Colorimetry Data Block |
| 6... 15 | Reserved for video=released blocks |
| 16 | CEA Miscellaneous Audio Fields |
| 17 | Vendor -Specific Audio Data Block |
| 18 | Reserved for HDMI Audio Data Block |
| 19 | **Extended Audio Data Block (includes one or more Extended Short Audio Descriptors)** |
| 20 | Extended Speaker Allocation Data Block |
| 21 | Multiple Audio Stream Data Block |
| 22... 31 | Reserved for audio-related blocks |
| 32... 255 | Reserved for general |

**Table 59-1 Extended Audio Data Block**

| Byte#/bit | 7 | 6 | 5 | 4 | 3 | 2 | 1 | 0 |
|---|---|---|---|---|---|---|---|---|
| PB1 | Tag Code=7 (USE Extended Tag) | | | Length = total number of extension audio bytes following chis byte | | | | |
| PB2 | Extended data Block Tag Code =13h | | | | | | | |
| PB3 | Extended CEA Short Audio Descriptor 1 (Refer to table 59-2) | | | | | | | |
| PB4 | | | | | | | | |
| PB5 | | | | | | | | |
| ... | - | | | | | | | |
| PB N-2 | **Extended CEA Short Audio Descriptor X (Refer to table 59-2)** | | | | | | | |
| PBN-1 | | | | | | | | |
| PB N | | | | | | | | |

**Table 59-2 Extended CEA Short Audio Descriptor**

| Byte#/bit | 7 | 6 | 5 | 4 | 3 | 2 | 1 | 0 |
|---|---|---|---|---|---|---|---|---|
| PB1 | 0 | Uncompressed Audio Format Code = 00 or 01 | | Max number of channels - 1 | | | | |
| PB2 | 0 | 192kHz | 176.4kHz | 96kHz | 88.2kHz | 48kHz | 44.1kHz | 32kHz |
| PB3 | 0 | 0 | 0 | 0 | 0 | 24bit | 20bit | 16bit |

An extension CEA short audio descriptor may comprise uncompressed audio format code as illustrated in Table 59 above. The uncompressed audio format code may be defined as follows.

**Table 60 - Uncompressed Audio Format Code**

| Uncompressed Audio Format Code | Description |
|---|---|
| 00 | FCM |
| 01 | One Bit Audio |
| 10 | |
| 11 | Reserved |

An extended speaker allocation data block may be defined as the value of an extended tag code. An extended speaker allocation data block may comprise an ACAT field according to the following table 61. A reserved area may be used for extension. Or, a remaining value of the bit may be allocated according to various channel types (e.g., Dolby, USC, or ITU-R format which will be standardized in the future) in accordance with the manufacturer.

**Table 61 - Extended Speaker Allocation Data Block**

| Extended Tag Codes | Type of Data Block |
|---|---|
| 0 | Video Capability Data Block |
| 1 | Vendor-Specific Video Data Block |
| 2 | Reserved for VESA Video Display Device Information Data Block |
| 3 | Reserved for VESA Video Data Block |
| 4 | Reserved for HDMI Video Data Block |
| 5 | Colorimetry Data Block |
| 6... 15 | Reserved for video=released blocks |
| 16 | CEA Miscellaneous Audio Fields |
| 17 | Vendor -Specific Audio Data Block |
| 18 | Reserved for HDMI Audio Data Block |
| 19 | Extended Audio Data Block (includes one or more Extended Short Audio Descriptors) |
| **20** | **Extended Speaker Allocation Data Block** |
| 21 | Multiple Audio Stream Data Block |
| 22... 31 | Reserved for audio-related blocks |
| 32... 255 | Reserved for general |

**Table 61-1 Extended Speaker Allocation Data Block**

| Byte#/bit | 7 | 6 | 5 | 4 | 3 | 2 | 1 | 0 |
|---|---|---|---|---|---|---|---|---|
| PB1 | Tag Code=7 (USE Extended Tag) | | | Length = total number of extension audio bytes following chis byte (=5 byte) | | | | |
| PB2 | Extended data Block Tag Code =13h | | | | | | | |
| PB3 | FLw/FRw | RLC/RRC | FLC/FRC | RC | RL/RR | FC | LFE1 | FL/FR |
| PB4 | TpBC | TpSIL/TpSIR | TpBL/TpBR | LFE2 | SiL/SiR | FCM | TC | FLH/FRH |
| PB5 | 0 | 0 | 0 | LSd/LRd | LS/RS | TpLS/TpRS | BtFC | BtFL/BtFR |
| PB6 | ACAT(Audio Channel Allocation Type) | | | | 0 | 0 | 0 | 0 |

**Table 61-2 ACAT Description**

| ACAT3 | ACAT2 | ACAT1 | ACAT0 | Description |
|---|---|---|---|---|
| 0 | 0 | 0 | 0 | Refer to CEA861-D(or E, F) |
| 0 | 0 | 0 | 1 | Refer to 10.2 channels (TTA Standard) |
| 0 | 0 | 1 | 0 | Refer to 22.2 channels (SMRTE 2036-2) |
| 0 | 0 | 1 | 1 | Refer to 30.2 channels (IEC62574Ed 1) |
| 0 | 1 | 0 | 0 | Reserved |
| | | | | |
| 1 | 1 | 1 | 1 | |

In this exemplary embodiment, a payload of an extended speaker allocation data block is illustrated in the following table 62. A shaded area is used for speaker allocation of each channel allocation type.

**Table 62 - Channel Allocation Compatibility**

| Byte#/bit | 7 | 6 | 5 | 4 | 3 | 2 | 1 | 0 |
|---|---|---|---|---|---|---|---|---|
| PB1 | **FLW/FRW** | **RLC/RRC** | **FLC/FRC** | **RC** | **RL/RR** | **FC** | **LFE1** | **FL/FR** |
| PB2 | TpBC | TpSIL/TpSIR | TpBL/TpBR | LFE2 | SIL/SIR | **FCH** | **TC** | **FLH/FRH** |
| PB3 | 0 | 0 | 0 | LSd/LRd | LS/RS | TpLS/TpRS | BtFC | BtFL/BtFR |
| PB4 | ACAT(Audio channel Allocation Type) | | | | 0 | 0 | 0 | 0 |
| | | | | | | | | |

| Byte#/bit | 7 | 6 | 5 | 4 | 3 | 2 | 1 | 0 |
|---|---|---|---|---|---|---|---|---|
| PB1 | FLW/FRW | RLC/RRC | FLC/FRC | RC | **RL/RR** | **FC** | **LFE1** | **FL/FR** |
| PB2 | TpBC | TpSIL/TpSIR | TpBL/TpBR | LFE2 | SIL/SIR | FCH | **TC** | **FLH/FRH** |
| PB3 | 0 | 0 | 0 | LSd/LRd | LS/RS | TpLS/TpRS | BtFC | BtFL/BtFR |
| PB4 | ACAT(Audio channel Allocation Type) | | | | 0 | 0 | 0 | 0 |
| | | | | | | | | |

| Byte#/bit | 7 | 6 | 5 | 4 | 3 | 2 | 1 | 0 |
|---|---|---|---|---|---|---|---|---|
| PB1 | FLW/FRW | RLC/RRC | **FLC/FRC** | **RC** | **RL/RR** | **FC** | **LFE1** | **FL/FR** |
| PB2 | **TpBC** | **TpSIL/TpSIR** | **TpBL/TpBR** | **LFE2** | **SIL/SIR** | **FCH** | **TC** | **FLH/FRH** |
| PB3 | 0 | 0 | 0 | LSd/LRd | LS/RS | TpLS/TpRS | **BtFC** | **BtFL/BtFR** |
| PB4 | ACAT(Audio channel Allocation Type) | | | | 0 | 0 | 0 | 0 |
| | | | | | | | | |

| Byte#/bit | 7 | 6 | 5 | 4 | 3 | 2 | 1 | 0 |
|---|---|---|---|---|---|---|---|---|
| PB1 | **FLW/FRW** | RLC/RRC | **FLC/FRC** | **RC** | **RL/RR** | **FC** | **LFE1** | **FL/FR** |
| PB2 | **TpBC** | **TpSIL/TpSIR** | **TpBL/TpBR** | **LFE2** | **SIL/SIR** | **FCH** | **TC** | **FLH/FRH** |
| PB3 | 0 | 0 | 0 | **LSd/LRd** | **LS/RS** | **TpLS/TpRS** | **BtFC** | **BtFL/BtFR** |
| PB4 | ACAT(Audio channel Allocation Type) | | | | 0 | 0 | 0 | 0 |

### EDID/CEC for new Speaker Position

According to exemplary embodiments, a speaker position data block for transmitting new speaker position information to the source may be defined. The speaker position data block comprises arranged coordinate values and placement angle values of every speaker that is connected to the sink. The source may be used to perform various processing operations, such as down mixing or object audio coding, through this information. Since the value of an extended tag code shown in the table 63 below is an exemplary embodiment, a speaker position data block may be used by being defined with several data blocks that are defined above.

**Table 63 - Speaker Position Data Block**

| Extended Tag Codes | Type of Data Block |
|---|---|
| 0 | Video Capability Data Block |
| 1 | Vendor-Specific Video Data Block |
| 2 | Reserved for VESA Video Display Device Information Data Block |
| 3 | Reserved for VESA Video Data Block |
| 4 | Reserved for HDMI Video Data Block |
| 5 | Colorimetry Data Block |
| 6... 15 | Reserved for video=released blocks |
| 16 | CEA Miscellaneous Audio Fields |
| 17 | Vendor -Specific Audio Data Block |
| 18 | Reserved for HDMI Audio Data Block |
| 19 | Reserved for audio-related blocks |
| **20** | **Speaker Position Data Block 1** |
| **21** | **Speaker Position Data Block 2** |
| **22** | **Speaker Position Data Block 3** |
| **23** | **Speaker Position Data Block 4** |
| | |
| 31 | Reserved for audio-related blocks |
| 32... 255 | Reserved for general |

A speaker position data block may be defined according to the following table 64. Byte [1] ∼ [5] store position information of one speaker. Byte [6] ∼ [30] store speaker position information in accordance with the same method. Byte 31 and 32 are defined as a reserved area.

When using the configuration according to this exemplary embodiment, since one data block may transmit information related to a maximum of six speakers, (N/6) speaker position data blocks may be needed to correspond with N channels.

**Table 64 - Speaker Position Data Block**

| Byte#/bit | 7 | 6 | 5 | 4 | 3 | 2 | 1 | 0 |
|---|---|---|---|---|---|---|---|---|
| 1 | height | | **Speaker_id** | | | | | Ang.8 |
| 2 | Ang.7 | Ang.6 | Ang.5 | Ang.4 | Ang.3 | Ang.2 | Ang.1 | Ang.0 |
| 3 | Offset_x | | | | | | | |
| 4 | Offset_y | | | | | | | |
| 5 | Offset_z | | | | | | | |
| 6∼10 | **2^{nd} speaker position data** | | | | | | | |
| 11∼15 | **3th speaker position data** | | | | | | | |
| 16∼20 | **4^{th} speaker position data** | | | | | | | |
| 21∼25 | **5^{th} speaker position data** | | | | | | | |
| 26∼30 | **6^{th} speaker position data** | | | | | | | |
| 31∼32 | reserved | | | | | | | |

**Table 64-1 Speaker_id field**

| Speaker_id | Description |
|---|---|
| 00000 | FL |
| 00001 | FR |
| 00010∼11111 | ... |

### Transmission of speaker position information using CEC

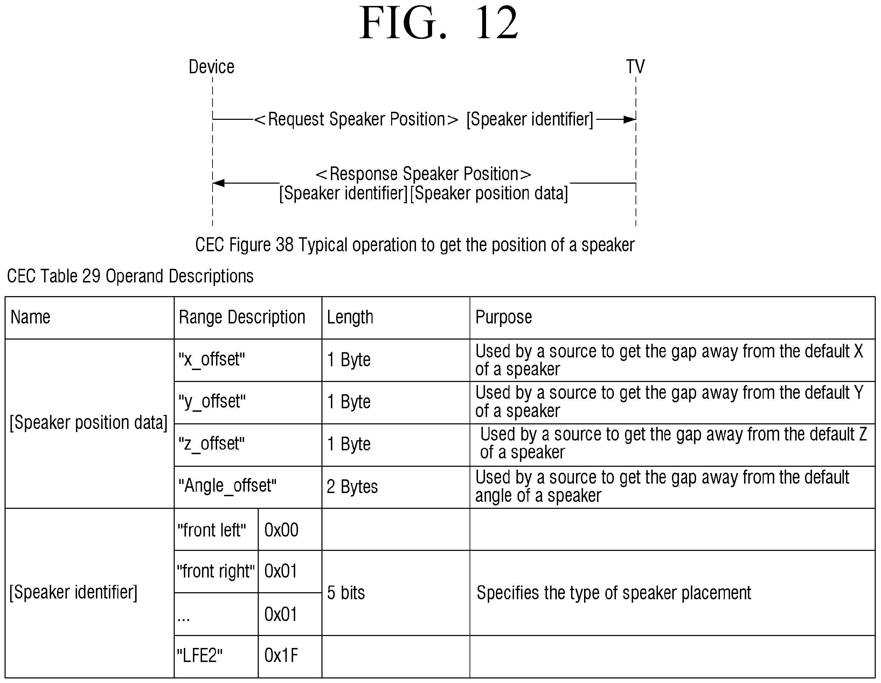

Figure 12 is a schematic diagram showing the transmission of speaker position information using the CEC.

As illustrated in Figure 12, when the source requests the speaker position from the sink, the sink may transmit the information about the speaker position.

### 3.2. EDID for Multi-stream Audio

A new data block for multi-stream audio may be defined in an extended tag code. A multi-stream audio data block comprises a Max_stream_count-1 field, and a CEA Short Audio Descriptor area. Max_stream_count-1 indicates the number of streams to be transmitted. The CEA Short Audio Descriptor may be provided plurally, and may be defined in accordance with CEA861-D.

**Table 65 - Multi-stream Audio Data Block**

| Byte#/bit | 7 | 6 | 5 | 4 | 3 | 2 | 1 | 0 |
|---|---|---|---|---|---|---|---|---|
| 1 | Reserved | | | | | | Max_stream_count-1 | |
| 2 | CEA Short Audio Descriptor 1 | | | | | | | |
| 3 | | | | | | | | |
| 4 | | | | | | | | |
| ... | ... | | | | | | | |
| N | CEA Short Audio Descriptor X | | | | | | | |

**Table 65-1 CEA Data Block Tag Codes**

| Extended Tag Codes | Type of Data Block |
|---|---|
| 0 | Video Capability Data Block |
| 1 | Vendor-Specific Video Data Block |
| 2 | Reserved for VESA Video Display Device Information Data Block |
| 3 | Reserved for VESA Video Data Block |
| 4 | Reserved for HDMI Video Data Block |
| 5 | Colorimetry Data Block |
| 6... 15 | Reserved for video=released blocks |
| 16 | CEA Miscellaneous Audio Fields |
| 17 | Vendor -Specific Audio Data Block |
| 18 | Reserved for HDMI Audio Data Block |
| 19... | Reserved for audio-related blocks |
| **XX** | **Multiple Audio Stream Data Block** |
| ...31 | Reserved for audio-related blocks |
| 32... 255 | Reserved for general |

The Vendo-specific Data Block is able to display whether multi-stream video/audio is provided or not. This uses multistream_in indicator field. When the sink supports multi-stream, multistream_indicator = 1. However, multistream_indicator field may be defined in other areas of data block as well as HDMI VSDB.

**Table 66 - Vendor-specific Data Block**

| Byt e# | 7 | 6 | 5 | 4 | 3 | 2 | 1 | 0 |
|---|---|---|---|---|---|---|---|---|
| 0 | Vendor-specific tag code(=3) | | | Length(=N) | | | | |
| 1 | 24-bit IEEE Registration (0x000c03) | | | | | | | |
| 2 | | | | | | | | |
| 3 | | | | | | | | |
| 4 | A | | | | B | | | |
| 5 | C | | | | D | | | |
| 6 | Suppors_AI | DC_40bit | DC_30bit | DC_30bit | DC_Y444 | Rsvd(0) | RSCD(0) | DVI_Dual |
| 7 | Max_TMDS_Clock | | | | | | | |
| 8 | Latency_Fields Present | I_Latency_Fields_Present | HDMI_Video_Presen | Rsvd(0) | CNC3 | CNC2 | CNC1 | CNC0 |
| (9) | Video_Latency | | | | | | | |
| (10) | Audio_Latency | | | | | | | |
| (11) | Interacted_Video_Latency | | | | | | | |
| (12) | Interacted_Audio_Latency | | | | | | | |
| (13) | 3D_present | 3D_Multi_Present | | Image_size | | Rsvd(0) | Rsvd(0) | Multistream_indicator |
| (14) | HDMI_VIC_LEN | HDMI_3D_LEN | | | | | | |
| (15) | (if HDMI_VIC_LEN>0) | | | | | | | |
| | HDMI_VIC_1 | | | | | | | |
| ... | ... | | | | | | | |
| | HDMI_VIC_M | | | | | | | |
| | (if 3D_Multi_present 01 or 10) | | | | | | | |
| | 3D_Structure_ALL_15...8 | | | | | | | |
| | 3D_Structure_ALL_7...0 | | | | | | | |
| | (if 3D_Multi_present 10) | | | | | | | |
| | 3D_MASK_7...0 | | | | | | | |
| | 3D_MASK_7...0 | | | | | | | |
| | 3D_VIC_1 | | | | 3D_Structura_1 | | | |

Various multi-streams may be identified by defining the multistream_indicator using more than bits.

**Table 67 - Vendor-specific Data Block**

| Byte# | 7 | 6 | 5 | 4 | 3 | 2 | 1 | 0 |
|---|---|---|---|---|---|---|---|---|
| 0 | Vendor-specific tag code(=3) | | | Length(=N) | | | | |
| 1 | 24-bit IEEE Registration (0x000c03) | | | | | | | |
| 2 | | | | | | | | |
| 3 | | | | | | | | |
| 4 | A | | | | B | | | |
| 5 | C | | | | D | | | |
| 6 | Suppors_AI | DC_40bit | DC_30bit | DC_30bit | DC_Y444 | Rsvd(0) | RSCD(0) | DVI_Dual |
| 7 | Max_TMDS_Clock | | | | | | | |
| 8 | Latency_Fields Present | I_Latency_Fields_Present | HDMI_Video_Presen | Rsvd(0) | CNC3 | CNC2 | CNC1 | CNC0 |
| (9) | Video_Latency | | | | | | | |
| (10) | Audio_Latency | | | | | | | |
| (11) | Interacted_Video_Latency | | | | | | | |
| (12) | Interacted_Audio_Latency | | | | | | | |
| (13) | 3D_present | 3D_Multi_Present | | Image_size | | Multistream mode | | |
| (14) | HDMI_VIC_LEN | | HDMI_3D_LEN | | | | | |
| (15) | (if HDMI_VIC_LEN>0) | | | | | | | |
| | HDMI_VIC_1 | | | | | | | |
| ... | ... | | | | | | | |
| | HDMI_VIC_M | | | | | | | |
| | (if 3D_Multi_present 01 or 10) | | | | | | | |
| | 3D_Structure_ALL_15...8 | | | | | | | |
| | 3D_Structure_ALL_7...0 | | | | | | | |
| | (if 3D_Multi_present 10) | | | | | | | |
| | 3D_MASK_7...0 | | | | | | | |
| | 3D_MASK_7...0 | | | | | | | |
| | 3D_VIC_1 | | | | 3D_Structure_1 | | | |

### First Exemplary Embodiments

The first exemplary embodiment newly defines a multi-audio stream data block using an extended tag code. The newly defined multi-audio stream data block comprises a CEA short audio descriptor area, the length of an audio stream, and a Max_stream_count field. Since each field may be the same as other exemplary embodiments described above, an overlapping description thereof is omitted.

**Table 68 - Multi-audio Stream Data Block**

| Extended Tag Codes | Type of Data Block |
|---|---|
| 0 | Video Capability Data Block |
| 1 | Vendor-Specific Video Data Block |
| 2 | Reserved for VESA Video Display Device Information Data Block |
| 3 | Reserved for VESA Video Data Block |
| 4 | Reserved for HDMI Video Data Block |
| 5 | Colorimetry Data Block |
| 6... 15 | Reserved for video=released blocks |
| 16 | CEA Miscellaneous Audio Fields |
| 17 | Vendor -Specific Audio Data Block |
| 18 | Reserved for HDMI Audio Data Block |
| 19 | Extended Audio Data Block (includes one or more Extended Short Audio Descriptors) |
| 20 | Extended Speaker Allocation Data Block |
| 21 | **Multiple Audio Stream Data Block** |
| 22... 31 | Reserved for audio-related blocks |
| 32... 255 | Reserved for general |

**Table 68-1 Multiple Audio Stream Data Block**

| Byte#/bit | 7 | 6 | 5 | 4 | 3 | 2 | 1 | 0 |
|---|---|---|---|---|---|---|---|---|
| PB1 | Tag Code=7 (USE Extended Tag) | | | Length = total number of extension audio bytes following this byte | | | | |
| PB2 | Extended data Block Tag Code =13h | | | | | | | |
| PB3 | 0 | 0 | 0 | 0 | 0 | 0 | Max_Stream_count-1 | |
| PB4 | CEA Short Audio Descriptor 1 | | | | | | | |
| PB5 | | | | | | | | |
| PB6 | | | | | | | | |
| ... | - | | | | | | | |
| PB N-2 | CEA Short Audio Descriptor 1 X | | | | | | | |
| PB N-1 | | | | | | | | |
| PB N | | | | | | | | |

Second Exemplary EmbodimentOther methods using an HDMI audio data block may be considered similar to the first exemplary embodiment.

An extended tag code is newly defined. As the first exemplary embodiment, tag code 18 may be used to add an extended HDMI audio data block.

The table below shows the structure of an extended HDMI audio data block. An extended HDMI audio data block in accordance with the third exemplary embodiment comprises ECSAD (Extended CEA Short Audio Descriptor), ESAD (Extended Speaker Allocation Descriptor), and MASD (Multiple Audio Stream Descriptor).

An extended CEA short audio descriptor (ECSAD) comprises descriptors, a number of which is as much as a value of Num_ECSAD field when the sink supports a 3D audio function. The Extended speaker allocation descriptor (ESAD) comprises one descriptor when the value of Num_ECSAD field is more than 0, when the sink supports a 3D-audio-channel function. A multi-audio stream descriptor (MASD) comprises descriptors, a number of which is as much as the value of a Num_MASD field when the sink supports a multi-stream audio function.

Max Stream_Count -1 field is defined as the number of maximum streams which the sink may receive, minus one stream. An audio stream for each view shows the same audio feature of having the same coding type and sampling frequency since the audio stream transmits multi-stream audio with one audio sample packet.

Num_MASD field defines the number of extended short audio descriptors. The Num_MASD field may comprise up to seven extended short audio descriptors. When Num_MASD field is 0, this indicates that this field does not support a 3D audio function.

The Num_ECSAD field defines the number of multi-stream audio descriptors that are comprised in this data block. The Num_ECSAD field may comprise up to a maximum of four multi-stream audio descriptors. If this field is 0, this indicates that the field does not support multi-stream audio, and if Max Stream_Count-1 is not 0, at least more than one MASD may certainly be defined. If ECSAD is defined as 4 bytes, up to a maximum of 6 MASDs may be defined.

**Table 69 - Extended HDMI Audio Data Block**

| Byte#/bit | 7 | 6 | 5 | 4 | 3 | 2 | 1 | 0 |
|---|---|---|---|---|---|---|---|---|
| PB1 | Tag Code=7 (USE Extended Tag) | | | Length = total number of extension audio bytes following this byte | | | | |
| PB2 | Extended data Block Tag Code =13h | | | | | | | |
| PB3 | Max Stream Count-1 | | Num MASD | | | Num ECSAD | | |
| PB4∼PB6 | (if Num_ECSAD(X)>0) | | | | | | | |
| | Extended CEA Short Descriptor 1 | | | | | | | |
| ... | | | | | | | | |
| PB(N-3)∼ | (if Num_ECSAD(X)>0) | | | | | | | |
| PB(N-1) | Extended CEA Short Descriptor X | | | | | | | |
| PB(N)∼ | (if Num_ECSAD(X)>0) | | | | | | | |
| PB(N+3) | Extended Speaker Allocation Descriptor | | | | | | | |
| PB(N+4)∼ | (if Max Stream_Count-1>0 and Num MASD(Y)>0) | | | | | | | |
| PB(N+6) | Multiple Audio Stream Descriptor 1 | | | | | | | |
| ... | | | | | | | | |
| PB(L-1)∼PB(L+1) | (if Max Stream_Count-1>0 and Num MASD(Y)>0) | | | | | | | |
| | Multiple Audio Stream Descriptor Y | | | | | | | |

| | | | | | | | | |
|---|---|---|---|---|---|---|---|---|
| X : The number of ECSAD Y: the number of MASD | | | | | | | | |

**Table 69 - 1 Stream Count-1 field**

| MaxStream Count-1 | Description |
|---|---|
| 00 | Do not support multiple audio stream |
| 01 | 2 audio streams |
| 10 | 3 audio streams |
| 11 | 4 audio streams |

The third exemplary embodiment may consider alternatives that are transformed as follows.

For example, the method of comprising only ECSAD in an extended HDMI audio data block, and of defining ESAD and MASD using other extended tag codes, may be considered.

In this case, two descriptors that are defined as other extended tag code may be defined as one separate data block or as a different data block. Max Stream_count -1 in a field that is defined in PB3 is comprised in a data block in which a multi-stream audio descriptor is defined in the table described above.

Unlike the above, ECSAD and ESAD that are related to 3D audio are comprised in an extended HDMI audio data block, and MASD may be defined by using other extended tag codes.

The structure of ECSAD is described by referring to the table below. The structure corresponds to the shaded part of the table.

As shown in the table at the bottom left, this descriptor may currently select only two coding types of LPCM and DSD. However, other uncompressed audio formats may be comprised additionally by using a reserved area of a UAFC field.

The number of channels may be selected up to a maximum of 32, since 5 bits are allocated.

### Table 70 - Extended CEA Short Audio Descriptor

**Table 70-1 Extended HDMI Audio Data Block Structure**

| Byte#/bit | 7 | 6 | 5 | 4 | 3 | 2 | 1 | 0 |
|---|---|---|---|---|---|---|---|---|
| PB1 | Tag Code=7 (USE Extended Tag) | | | Length = total number of extension audio bytes following this byte | | | | |
| PB2 | Extended data Block Tag Code =13h | | | | | | | |
| PB3 | Max Stream Count-1 | | Num MASD | | | Num ECSAD | | |
| PB4∼PB6 | **(if Num_ECSAD(X)>0)** | | | | | | | |
| | **Extended CEA Short Descriptor 1** | | | | | | | |
| ... | | | | | | | | |
| PB(N-3)∼ | **(if Num_ECSAD(X)>0)** | | | | | | | |
| PB(N-1) | **Extended CEA Short Descriptor X** | | | | | | | |
| PB(N)∼ | (if Num_ECSAD(X)>0) | | | | | | | |
| PB(N+3) | Extended Speaker Allocation Descriptor | | | | | | | |
| PB(N+4)∼ | (if Max Stream_Count-1>0 and Num MASD(Y)>0) | | | | | | | |
| PB(N+6) | Multiple Audio Stream Descriptor 1 | | | | | | | |
| ... | | | | | | | | |
| PB(L-1)∼PB(L+1) | (if Max Stream_Count-1>0 and Num MASD(Y)>0) | | | | | | | |
| | Multiple Audio Stream Descriptor Y | | | | | | | |

**Table 70-2 Uncompressed Audio Format Code field**

| UAFC(Uncompressed Audio Format Code) | Description |
|---|---|
| 00 | LPCM |
| 01 | DSD |
| 10 | Reserved |
| 11 | |

**Table 70-3 Extended CEA Short Audio Descriptor**

| Byte/Bit# | 7 | 6 | 5 | 4 | 3 | 2 | 1 | 0 |
|---|---|---|---|---|---|---|---|---|
| PB1 | 0 | UAFC | | Max Number of channels - 1 | | | | |
| PB2 | 0 | 192 kHz | 176.4 kHz | 96 kHz | 88.2 kHz | 48 kHz | 44.1 kHz | 32 kHZ |
| PB3 | 0 | 0 | 0 | 0 | 0 | 24bit | 20bit | 16bit |

The following alternative may also be considered.

The table below has extended the total size of descriptors to 4 Bytes. In addition, an audio format code referred to in the table is defined in CEA861-E. Therefore, all compression / non-compression coding types that are defined in CEA861-E may be designated.

Since the size of a descriptor is increasing, the number of extended CEA short audio descriptors (ECSAD) that may be comprised within a data block is limited to a maximum of six descriptors. Meanwhile, up to four descriptors may be comprised in the exemplary embodiment described above.

In response to changes in each audio format code type, a syntax of PB3 and PB4 are defined in the same manner as the Byte 2 and 3 of Table 45 ∼ 49 of CEA861-E.

### Table 71 - Extended CEA Short Audio Descriptor

**Table 71-1 Extended HDMI Audio Data Block Structure**

| Byte#/bit | 7 | 6 | 5 | 4 | 3 | 2 | 1 | 0 |
|---|---|---|---|---|---|---|---|---|
| PB1 | Tag Code=7 (USE Extended Tag) | | | Length = total number of extension audio bytes following this byte | | | | |
| PB2 | Extended data Block Tag Code =13h | | | | | | | |
| PB3 | Max Stream Count-1 | | Num MASD | | | Num ECSAD | | |
| PB4∼PB6 | **(if Num_ECSAD(X)>0)** | | | | | | | |
| | **Extended CEA Short Descriptor 1** | | | | | | | |
| ... | | | | | | | | |
| PB(N-3)∼ | **(if Num_ECSAD(X)>0)** | | | | | | | |
| PB(N-1) | **Extended CEA Short Descriptor X** | | | | | | | |
| PB(N)∼ | (if Num_ECSAD(X)>0) | | | | | | | |
| PB(N+3) | Extended Speaker Allocation Descriptor | | | | | | | |
| PB(N+4)∼ | (if Max Stream_Count-1>0 and Num MASD(Y)>0) | | | | | | | |
| PB(N+6) | Multiple Audio Stream Descriptor 1 | | | | | | | |
| ... | | | | | | | | |
| PB(L-1)∼PB(L+1) | (if Max Stream_Count-1>0 and Num MASD(Y)>0) | | | | | | | |
| | Multiple Audio Stream Descriptor Y | | | | | | | |

**Table 71-2 Extended CEA Short Audio Descriptor**

| Byte/Bit# | 7 | 6 | 5 | 4 | 3 | 2 | 1 | 0 |
|---|---|---|---|---|---|---|---|---|
| PB1 | 0 | 0 | 0 | Max Number of channels - 1 | | | | |
| PB2 | 0 | 0 | 0 | 0 | Audio Format Code | | | |
| PB3 | 0 | 192 kHz | 176.4 kHz | 96 kHz | 88.2 kHz | 48 kHz | 44.1 kHz | 32 kHZ |
| PB4 | 0 | 0 | 0 | 0 | 0 | 24bit | 20bit | 16bit |

The structure of ESAD is described in the third exemplary embodiment.

The structure corresponds to the shaded area in the table below.

ESAD may currently select speaker allocation information of up to a max of 30.2 channels. However, other speaker placement formats may be comprised additionally by using the reserved area of an ACAT field.

### Table 72 - Extended Speaker Allocation Descriptor

**Table 72-1 Extended HDMI Audio Block Structure**

| Byte#/bit | 7 | 6 | 5 | 4 | 3 | 2 | 1 | 0 |
|---|---|---|---|---|---|---|---|---|
| PB1 | Tag Code=7 (USE Extended Tag) | | | Length = total number of extension audio bytes following this byte | | | | |
| PB2 | Extended data Block Tag Code =13h | | | | | | | |
| PB3 | Max Stream Count-1 | | Num MASD | | | Num ECSAD | | |
| PB4∼PB6 | (if Num_ECSAD(X)>0) | | | | | | | |
| | Extended CEA Short Descriptor 1 | | | | | | | |
| ... | | | | | | | | |
| PB(N-3)∼ | (if Num_ECSAD(X)>0) | | | | | | | |
| PB(N-1) | Extended CEA Short Descriptor X | | | | | | | |
| PB(N)∼ | **(if Num_ECSAD(X)>0)** | | | | | | | |
| PB(N+3) | **Extended Speaker Allocation Descriptor** | | | | | | | |
| PB(N+4)∼ | (if Max Stream_Count-1>0 and Num MASD(Y)>0) | | | | | | | |
| PB(N+6) | Multiple Audio Stream Descriptor 1 | | | | | | | |
| ... | | | | | | | | |
| PB(L-1)∼PB(L+1) | (if Max Stream_Count-1>0 and Num MASD(Y)>0) | | | | | | | |
| | Multiple Audio Stream Descriptor Y | | | | | | | |

**Table 72-2 Audio Channel Allocation Type filed**

| | | | | |
|---|---|---|---|---|
| A | A | A | A | Description |
| C | C | C | C | |
| A | A | A | A | |
| T | T | T | T | |
| 3 | 2 | 1 | 0 | |
| 0 | 0 | 0 | 0 | Refer to CEA861-D(or E,F) |
| 0 | 0 | 0 | 1 | Refer to 10.2 channels(TTA Standard) |
| 0 | 0 | 1 | 0 | Refer to 22.2 channels(SMPTE2036-2) |
| 0 | 0 | 1 | 1 | Refer to 30.2 channels(IEC62574/Ed 1) |
| 0 | 1 | 0 | 0 | Reserved |
| ... | | | | |
| 1 | 1 | 1 | 1 | |

**Table 72-3 Extended Speaker Allocation Descriptor**

| Byte#/bit | 7 | 6 | 5 | 4 | 3 | 2 | 1 | 0 |
|---|---|---|---|---|---|---|---|---|
| PB1 | FLW/FRW | RLC/RRC | FLC/FRC | RC | RL/RR | FC | LFE1 | FL/FR |
| PB2 | TpBC | TpSIL/TpSIR | TpBL/TpBR | LFE2 | SIL/SIR | FCH | TC | FLH/FRH |
| PB3 | 0 | 0 | 0 | LSd/LRd | LS/RS | TpLS/TpR | BtFC | BtFL/BtFR |
| PB4 | ACAT(Audio Channel Allocation Type) | | | | 0 | 0 | 0 | 0 |

The following table shows an example of ESAD. The shaded part of each table is used to indicate speaker allocation of a channel allocation type.

**Table 73 - Extended Speaker Allocation Descriptors**

| Byte#/bit | 7 | 6 | 5 | 4 | 3 | 2 | 1 | 0 |
|---|---|---|---|---|---|---|---|---|
| PB1 | **FLW/FRW** | **RLC/RRC** | **FLC/FRC** | **RC** | **RL/RR** | **FC** | **LFE1** | **FL/FR** |
| PB2 | TpBC | TpSIL/TpSIR | TpBL/TpBR | LFE2 | SIL/SIR | **FCH** | **TC** | **FLH/FRH** |
| PB3 | 0 | 0 | 0 | LSd/LRd | LS/RS | TpLS/TpR | BtFC | BtFL/BtFR |
| PB4 | ACAT(Audio Channel Allocation Type) | | | | 0 | 0 | 0 | 0 |
| | | | | | | | | |

| Byte#/bit | 7 | 6 | 5 | 4 | 3 | 2 | 1 | 0 |
|---|---|---|---|---|---|---|---|---|
| PB1 | FLW/FRW | **RLC/RRC** | FLC/FRC | RC | **RL/RR** | **FC** | **LFE1** | **FL/FR** |
| PB2 | TpBC | TpSIL/TpSIR | TpBL/TpBR | **LFE2** | SIL/SIR | FCH | **TC** | **FLH/FRH** |
| PB3 | 0 | 0 | 0 | LSd/LRd | LS/RS | TpLS/TpR | BtFC | BtFL/BtFR |
| PB4 | ACAT(Audio Channel Allocation Type) | | | | 0 | 0 | 0 | 0 |
| | | | | | | | | |
| PB1 | FLW/FRW | RLC/RRC | **FLC/FRC** | **RC** | **RL/RR** | **FC** | **LFE1** | **FL/FR** |
| PB2 | **TpBC** | **TpSIL/TpSIR** | **TpBL/TpBR** | **LFE2** | **SIL/SIR** | **FCH** | **TC** | **FLH/FRH** |
| PB3 | 0 | 0 | 0 | LSd/LRd | LS/RS | TpLS/TpR | **BtFC** | **BtFL/BtFR** |
| PB4 | ACAT(Audio Channel Allocation Type) | | | | 0 | 0 | 0 | 0 |
| | | | | | | | | |

| Byte#/bit | 7 | 6 | 5 | 4 | 3 | 2 | 1 | 0 |
|---|---|---|---|---|---|---|---|---|
| PB1 | **FLW/FRW** | RLC/RRC | **FLC/FRC** | **RC** | **RL/RR** | **FC** | **LFE1** | **FL/FR** |
| PB2 | **TpBC** | **TpSIL/TpSIR** | **TpBL/TpBR** | **LFE2** | **SIL/SIR** | **FCH** | **TC** | **FLH/FRH** |
| PB3 | 0 | 0 | 0 | **LSd/LRd** | **LS/RS** | **TpLS/TpR** | **BtFC** | **BtFL/BtFR** |
| PB4 | ACAT(Audio Channel Allocation Type) | | | | 0 | 0 | 0 | 0 |

The following describes the structure of ESAD of the third exemplary embodiment. The structure corresponds to the shaded area of the table.

A CEA short audio descriptor that is defined in CEA861-E is still used. However, a new format that has partially modified/changed the placement or the size of an existing field may be defined by comprising each field that is comprised in a CEA short audio descriptor. This descriptor is comprised only in transmitting multi-stream audio, and at least one descriptor may be comprised when it is being used.

### Table 74 - Multiple Audio Stream Descriptor

**Table 74-1 Extended HDMI Audio Data Block Structure**

| Byte#/bit | 7 | 6 | 5 | 4 | 3 | 2 | 1 | 0 |
|---|---|---|---|---|---|---|---|---|
| PB1 | Tag Code=7 (USE Extended Tag) | | | Length = total number of extension audio bytes following this byte | | | | |
| PB2 | Extended data Block Tag Code =13h | | | | | | | |
| PB3 | Max Stream Count-1 | | Num MASD | | | Num ECSAD | | |
| PB4∼PB7 | (if Num_ECSAD(X)>0) | | | | | | | |
| | Extended CEA Short Descriptor 1 | | | | | | | |
| ... | | | | | | | | |
| PB(N-4)∼ | (if Num_ECSAD(X)>0) | | | | | | | |
| PB(N-1) | Extended CEA Short Descriptor X | | | | | | | |
| PB(N)∼ | (if Num_ECSAD(X)>0) | | | | | | | |
| PB(N+3) | Extended Speaker Allocation Descriptor | | | | | | | |
| PB(N+4)∼ | **(if Max Stream_Count-1>0 and Num MASD(Y)>0)** | | | | | | | |
| PB(N+6) | **Multiple Audio Stream Descriptor 1** | | | | | | | |
| ... | | | | | | | | |
| PB(L-1)∼ | **(if Max Stream_Count-1>0 and Num MASD(Y)>0)** | | | | | | | |
| PB(L+1) | **Multiple Audio Stream Descriptor Y** | | | | | | | |

**Table 74-2 Multiple Audio Stream Descriptor**

| Byte#/bit | 7 | 6 | 5 | 4 | 3 | 2 1 | | 0 |
|---|---|---|---|---|---|---|---|---|
| PB1 | CEA Short Audio Descriptor for each Audio Format Code | | | | | | | |
| PB2 | | | | | | | | |
| PB3 | | | | | | | | |

The table below is a table that has newly defined the structure of a multi-stream audio descriptor. Instead of using a CEA short audio descriptor as normally used, a new descriptor is used here.

The number of channels of multi-stream audio is limited to two. Therefore, an unnecessary channel count field is removed from the descriptor, and instead, a Max Number of Stream -1 is defined as 2-bit. At this time, Max_Stream_Count-1 that is defined in an extended HDMI audio data block is defined as a maximum value among Max_Stream_Count -1 of each descriptor.

Each table shows the descriptors for each audio format code.

### Table 75 - Multiple Audio Stream Descriptor

**Table 75-1 Multiple Audio Stream Descriptor for Audio Format Code 1 (LPCM)**

| Byte/Bit# | 7 | 6 | 5 | 4 | 3 | 2 | 1 | 0 |
|---|---|---|---|---|---|---|---|---|
| PB1 | 0 | Audio Format Code = 0001 | | | | 0 | Max Stream_Count-1 | |
| PB2 | 0 | 192 kHz | 176.4 kHz | 96 kHz | 88.2 kHz | 48 kHz | 44.1 kHz | 32 kHZ |
| PB3 | 0 | 0 | 0 | 0 | 0 | 24bit | 20bit | 16bit |

**Table 75-2 Multiple Audio Stream Descriptor for Audio Format Code 2 to 8**

| Byte/Bit# | 7 | 6 | 5 | 4 | 3 | 2 | 1 | 0 |
|---|---|---|---|---|---|---|---|---|
| PB1 | 0 | Audio Format Code | | | | 0 | Max Stream_Count-1 | |
| PB2 | 0 | 192 kHz | 176.4 kHz | 96 kHz | 88.2 kHz | 48 kHz | 44.1 kHz | 32 kHZ |
| PB3 | Maximum bit rate divided by 8kHz | | | | | | | |

**Table 75-3 Multiple Audio Stream Descriptor for Audio Format Code 9 to 13**

| Byte/Bit# | 7 | 6 | 5 | 4 | 3 | 2 | 1 | 0 |
|---|---|---|---|---|---|---|---|---|
| PB1 | 0 | Audio Format Code | | | | 0 | Max Stream Count-1 | |
| PB2 | 0 | 192 kHz | 176.4 kHz | 96 kHz | 88.2 kHz | 48 kHz | 44.1 kHz | 32 kHZ |
| PB3 | Audio Format Code dependent value | | | | | | | |

**Table 75-4 Multiple Audio Stream Descriptor for Audio Format Code 14 (WMA Pro)**

| Byte/Bit# | 7 | 6 | 5 | 4 | 3 | 2 | 1 | 0 |
|---|---|---|---|---|---|---|---|---|
| PB1 | 0 | Audio Format Code = 1110 | | | | 0 | Max Stream_Count-1 | |
| PB2 | 0 | 192 kHz | 176.4 kHz | 96 kHz | 88.2 kHz | 48 kHz | 44.1 kHz | 32 kHZ |
| PB3 | Reserved | | | | | Profile | | |

**Table 75-5 Multiple Audio Stream Descriptor for Audio Format Code 15 (extension)**

| Byte/Bit# | 7 | 6 | 5 | 4 | 3 | 2 | 1 0 | |
|---|---|---|---|---|---|---|---|---|
| PB1 | 0 | Audio Format Code = 1111 | | | | 0 | Max Stream_Count-1 | |
| PB2 | 0 | 192 kHz | 176.4 kHz | 96 kHz | 88.2 kHz | 48 kHz | 44.1 kHz | 32 kHZ |
| PB3 | Audio Format Code Extension | | | | | 24 bit | 20 bit | 16 it |

### 4.1. Application scenario for 3D audio and multi-stream audio (informative)

In the following, application scenarios for 3D audio and multi-stream audio in accordance with the first exemplary embodiment are provided. These examples demonstrate the ability of a sink apparatus to accommodate a transmission of HDMI 2.0 data from a source, 3D audio and multi-stream audio.

### Scenario for 3D audio

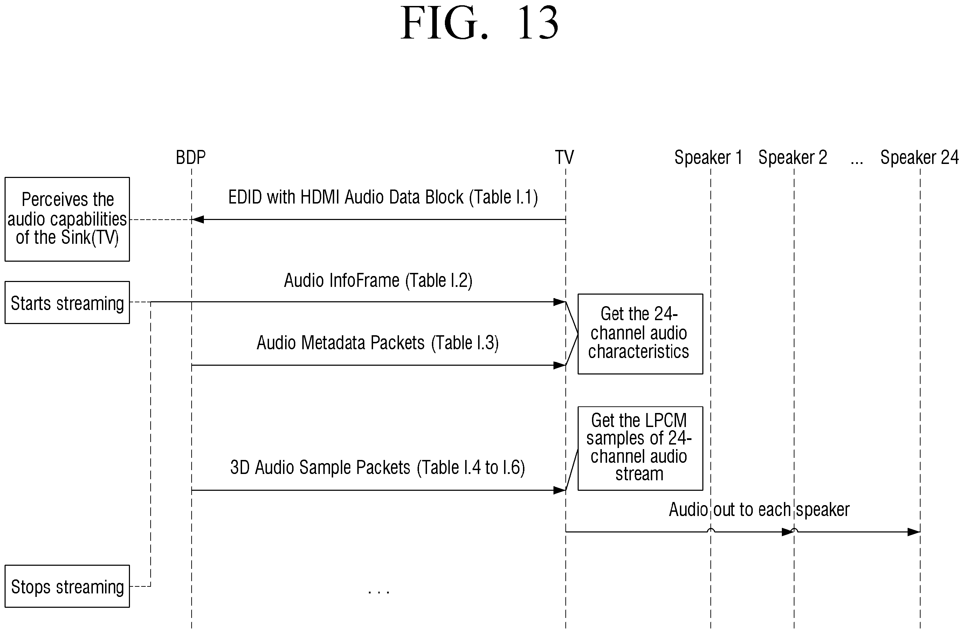

Figure 13 is a view showing how 3D audio samples may be transmitted from a blu-ray player (BDP) to a TV. This example proposes as follows.

Source (ex. BDP) and sink (ex. TV) are each high-speed wired interface apparatuses.

The source transmits L-PCM 48kHz 22.2 channel audio stream with the sink.

The sink may receive L-PCM 48kHz 22.2 channel audio samples, and may transmit each individual audio stream to the related speaker. The transmitted video packet is 1080p/60Hz.

The TV is configured to be compliant with a CEA-861-F(D or E) E-EDID data structure which may be accessed through DDC. E-EDID comprise an HDMI audio data block by adding it into another required data block to support 3D audio transmission. BDP receives the HDMI audio data block and recognizes the 3D audio ability of the TV described in Table 76.

**Table 76 - Example of the HDMI Audio Data Block for 22.2 channels**

| Byte/bit # | 7 | 6 | 5 | 4 | 3 | 2 | 1 | 0 |
|---|---|---|---|---|---|---|---|---|
| 1 | Tag Code=7 (Use Extended Tag) | | | L=10(1010b) | | | | |
| 2 | Extended Tag Code = 18(0x12) | | | | | | | |
| 3 | NUM_HDMI_3D_AD=001b | | | NUM_CEA_SAD=000b | | | Max_Stream_Count1 =oob | |
| 4 | 0 | 0 | 0 | 0 | Audio Format Code = 1 | | | |
| 5 | 0 | 0 | 0 | Max Number of channels -1 = 23 (10111b) | | | | |
| 6 | 0 | 192 kHZ | 176.4 kHz | 96 kHz | 88 2 kHz | 48 kHz | 44 1 kHz | 32 kHz |
| | | (0) | (0) | (1) | (1) | (1) | (1) | (1) |
| 7 | 0 | 0 | 0 | 0 | 0 | 24 bit | 20 bit | 16 bit |
| 8 | FLW/FRW | BLC/BRC | FLC/FRC | BC | BL/BR | FC | LFE1 | FL/FR |
| | (0) | (0) | (1) | (1) | (1) | (1) | (1) | (1) |
| 9 | TpSIL/TpSIR | SIL/SIR | TpBC | LFE2 | LS/RS | TpFC | TpC | TpFL/TpFR |
| | (1) | (1) | (1) | (1) | (0) | (1) | (1) | (1) |
| 10 | 0 | 0 | 0 | LSd/LRd | TpLS/TpRS | BtFL/BtFR | BtFC | TpBL/TpBR |
| | | | | (0) | (0) | (1) | (1) | (1) |
| 11 | ACAT=2(0010b) | | | | 0 | 0 | 0 | 0 |

Byte 1, 2, and 3 show the header of an HDMI audio data block. N UM_HDMI_3D_AD indicates that it supports 3D audio transmission by being set to 1. NUM_CEA_SAD, and Max_Stream_Coun t-1 are set to 0 because BDP does not handle multi-stream audio according to this exemplary scenario.

Byte 4, 5, 6, and 7 includes HDMI 3D audio descriptors that describe the features of 3D audio of TV. Audio format code, maximumnumber of channels -1, sampling frequency, and sample size are defined.

Byte 8, 9, 10, and 11 includes HDMI 3D speaker allocation descriptors that describe active speakers for 22. Channels (SMPTE 2036-2).

BDP transmits an audio infoframe and an audio metadata packet after receiving EDID from the TV. In this case, the channel count and channel/speaker allocation information are transmitted by using an audio metadata packet instead of using an audio info frame.

3D_CC and 3D_CA that are included in an audio metadata packet each describe a channel count and channel/speaker allocation information for 22.2 channel audio stream. Table 77 shows an example of an audio infoframe payload for 22.2 channel audio transmission. Table 78 also shows the payload of an audio metadata packet for 22.2 channel audio transmission.

**Table 77 - Example of the Audio InfoFrame payload for 22.2 channels**

| Packet Byte# | 7 | 6 | 5 | 4 | 3 | 2 | 1 | 0 |
|---|---|---|---|---|---|---|---|---|
| PB0 | Checksum | | | | | | | |
| PB1 | CT3 | CT2 | CT1 | CT0 | Reserved | CC2 | CC1 | CC0 |
| | (0) | (0) | (0) | (0) | (0) | (0) | (0) | (0) |
| PB2 | Reserved (0) | | | SF2 | SF1 | SF0 | SS1 | SS0 |
| | | | | (0) | (0) | (0) | (0) | (0) |
| PB3 | Format depends on coding type (i.e CT0...CT3) | | | | | | | |
| PB4 | CA7 | CA6 | CA5 | CA4 | CA3 | CA2 | CA1 | CA0 |
| | (0) | (0) | (0) | (0) | (0) | (0) | (0) | (0) |
| PB5 | DM_INH | LSV3 | LSV2 | LSV1 | LSV0 | Rscd(0) | LFEPBL1 | LFEPBL0 |
| PB6 | Reserved (0) | | | | | | | |
| PB7 | Reserved (0) | | | | | | | |
| PB8 | Reserved (0) | | | | | | | |
| PB9 | Reserved (0) | | | | | | | |
| PB10 | Reserved (0) | | | | | | | |
| PB11-PB27 | Reserved (0) | | | | | | | |

**Table 78 - Audio Metadata Packet payload**

| Byte/Bit# | 7 | 6 | 5 | 4 | 3 | 2 | 1 | 0 |
|---|---|---|---|---|---|---|---|---|
| PB0 | Rsvd (0) | Rsvd (0) | Rsvd (0) | 3D_CC4 (1) | 3D_CC3 (0) | 3D_CC2 (1) | 3D_CC1 (1) | 3D_CC0 (1) |
| PB1 | Rsvd (0) | Rsvd (0) | Rsvd (0) | Rsvd (0) | ACAT = 0x02 | | | |
| PB2 | 3D_CA7 | 3D_CA6 | 3D_CA5 | 3D_CA4 | 3D_CA3 | 3D_CA2 | 3D_CA1 | 3D_CA0 |
| | (0) | (0) | (0) | (0) | (0) | (1) | (0) | (0) |
| PB2...PB27 | Reserved (0) | | | | | | | |

The BDP transmits 22.2 channel audio samples through a 3D audio sample packet. Each 3D audio sample packet supports up to 8 audio channels, therefore three consecutive 3D audio sample packets are needed to transmit a 22.2 channel audio sample. Sample_start is used to specify the first 3D audio sample packet. As shown in the Tables 79∼ 81, three 3D audio sample packets may be defined in this exemplary embodiment.

**Table 79 - Example of the first 3D Audio Sample Packet for 22.2 channels**

| Byte/bit# | 7 | 6 | 5 | 4 | 3 | 2 | 1 | 0 |
|---|---|---|---|---|---|---|---|---|
| HB0 | 0 | 0 | 0 | 0 | 1 | 0 | 1 | 1 |
| HB1 | 0 | 0 | 0 | Sample_Start (1) | Sample_Present sp3 (1) | Sample_Present sp2 (1) | Sample_Present sp1 (1) | Sample_Present sp0 (1) |
| HB2 | B3 | B2 | B1 | B0 | Sample_flat sp3(0) | Sample_flat sp2(0) | Sample_flat sp1 (0) | Sample_flat sp0(0) |
| SB0∼SB2 | Channel 1 / Sample N | | | | | | | |
| SB3∼SB5 | Channel 2 / Sample N | | | | | | | |
| SB6 | PCUV of Ch 2 | | | | PCUV of Ch 1 | | | |
| SB7∼SB9 | Channel 3 / Sample N | | | | | | | |
| SB10∼SB12 | Channel 4 / Sample N | | | | | | | |
| SB13 | PCUV of Ch 4 | | | | PCUV of Ch 3 | | | |
| SB14∼SB16 | Channel 5 / Sample N | | | | | | | |
| SB17∼SB19 | Channel 6 / Sample N | | | | | | | |
| SB20 | PCUV of Ch 6 | | | | PCUV of Ch 5 | | | |
| SB21∼SB23 | Channel 7 / Sample N | | | | | | | |
| SB24∼SB26 | Channel 8 / Sample N | | | | | | | |
| SB27 | PCUV of Ch 8 | | | | PCUV of Ch 7 | | | |

**Table 80 - Example of the second 3D Audio Sample Packet for 22.2 channels**

| Byte/bit# | 7 | 6 | 5 | 4 | 3 | 2 | 1 | 0 |
|---|---|---|---|---|---|---|---|---|
| HB0 | 0 | 0 | 0 | 0 | 1 | 0 | 1 | 1 |
| HB1 | 0 | 0 | 0 | Sample_Start (0) | Sample_Present sp3 (1) | Sample_Present sp2 (1) | Sample_Present sp1 (1) | Sample_Present sp0 (1) |
| HB2 | B 3 | B 2 | B 1 | B 0 | Sample_flatsp3(0) | Sample_flat sp2(0) | Sample_flat sp1 (0) | Sample_flat sp0(0) |
| SB0∼SB2 | Channel 9 / Sample N | | | | | | | |
| SB3∼SB5 | Channel 10 / Sample N | | | | | | | |
| SB6 | PCUV of Ch 10 | | | | PCUV of Ch 9 | | | |
| SB7∼SB9 | Channel 11 / Sample N | | | | | | | |
| SB10∼SB12 | Channel 12 / Sample N | | | | | | | |
| SB13 | PCUV of Ch 12 | | | | PCUV of Ch 11 | | | |
| SB14∼SB16 | Channel 13 / Sample N | | | | | | | |
| SB17∼SB19 | Channel 14 / Sample N | | | | | | | |
| SB20 | PCUV of Ch 14 | | | | PCUV of Ch 13 | | | |
| SB21∼SB23 | Channel 15 / Sample N | | | | | | | |
| SB24∼SB26 | Channel 16 / Sample N | | | | | | | |
| SB27 | PCUV of Ch 16 | | | | PCUV of Ch 15 | | | |

**Table 81 - Example of the third 3D Audio Sample Packet for 22.2 channels**

| Byte/bit# | 7 | 6 | 5 | 4 | 3 | 2 | 1 | 0 |
|---|---|---|---|---|---|---|---|---|
| HB0 | 0 | 0 | 0 | 0 | 1 | 0 | 1 | 1 |
| HB1 | 0 | 0 | 0 | Sample_Start (0) | Sample_Present sp3 (1) | Sample_Present sp2 (1) | Sample_Present sp1 (1) | Sample_Present sp0 (1) |
| HB2 | B 3 | B 2 | B 1 | B 0 | Sample_flat sp3(0) | Sample_flat sp2(0) | Sample_flat sp1 (0) | Sample_flat sp0(0) |
| SB0∼SB2 | Channel 17 / Sample N | | | | | | | |
| SB3∼SB5 | Channel 18 / Sample N | | | | | | | |
| SB6 | PCUV of Ch 18 | | | | PCUV of Ch 17 | | | |
| SB7∼SB9 | Channel 19 / Sample N | | | | | | | |
| SB10∼SB12 | Channel 20 / Sample N | | | | | | | |
| SB13 | PCUV of Ch 20 | | | | PCUV of Ch 19 | | | |
| SB14∼SB16 | Channel 21 / Sample N | | | | | | | |
| SB17∼SB19 | Channel 22 / Sample N | | | | | | | |
| SB20 | PCUV of Ch 22 | | | | PCUV of Ch 21 | | | |
| SB21∼SB23 | Channel 23 / Sample N | | | | | | | |
| SB24∼SB26 | Channel 24 / Sample N | | | | | | | |
| SB27 | PCUV of Ch 24 | | | | PCUV of Ch 23 | | | |

### 4.2 Scenario example for multi-stream audio

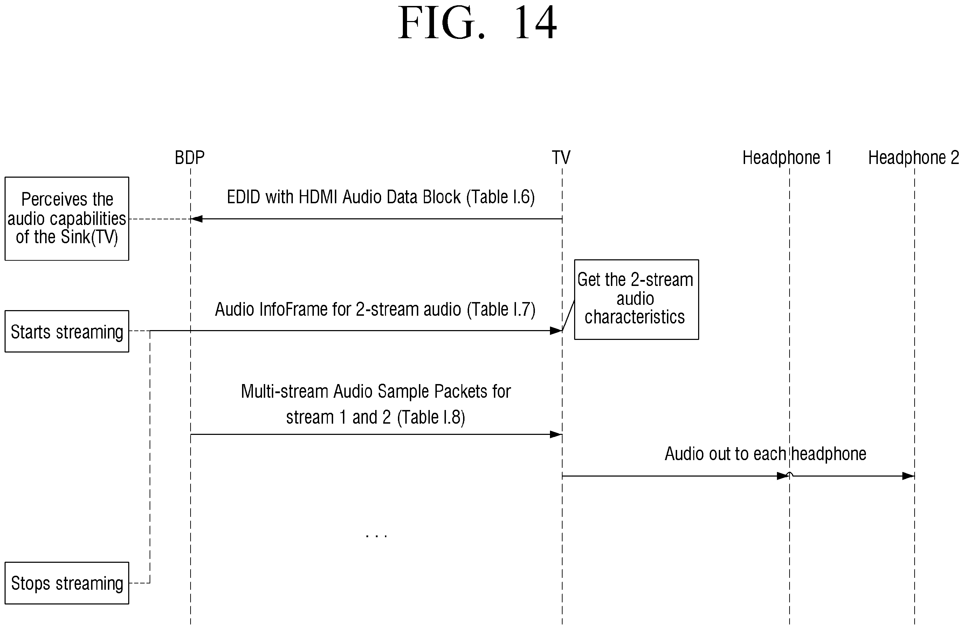

Figure 14 is a view showing how multi-stream audio is transmitted from BDP to TV. Figure 14 proposes the example below.

Source (ex.BDP) and sink (ex. TV) are each high-speed wired interface apparatuses. The source / sink enter into a dual -view game mode. The source transmits two audio streams of each view. The sink may transmit two audio streams to two different headphones. For example, a video format that is transmitted is HDMI 3D 1080p/60Hz.

The TV is compatible with an E-EDID data structure which conforms to CEA-861-F (or E or D) which can be accessed via the DDC. In order to support multiple audio streams, in addition to other required data blocks, E-EDID is available to include a block of HDMI audio data. BDP receives the HDMI audio data blocks, and recognizes the ability of the TV to handle audio multi-stream, such as described in table 76. The TV is compatible with a CEA-861-F (or D or E) E-EDID data structure which may be accessed through the DDC. In order to support multi-stream audio, E-EDID may comprise an HDMI audio data block by adding E-DID to other required data blocks. BDP receives HDMI audio data block and recognizes the multi-stream audio ability of TV that is the same as described in Table 76.

**Table 82 - Example of the HDMI Audio Data Block for two audio streams**

| Byte/bit # | 7 | 6 | 5 | 4 | 3 | 2 | 1 | 0 |
|---|---|---|---|---|---|---|---|---|
| 1 | Tag Code=7 (Use Extended Tag) | | | L=8(1010b) | | | | |
| 2 | Extended Tag Code = 18(0x12) | | | | | | | |
| 3 | NUM_HDMI_3D_AD=000b | | | NUM_CEA_SAD=010b | | | Max_Stream_Count1 =01b | |
| 4 | 0 | Audio Format Code=0001b | | | | Max Number of channel 1 = 001b | | |
| 5 | 0 | 192 kHZ (1) | 176.4 kHz (1) | 96 kHz (1) | 88 2 kHz (1) | 48 kHz (1) | 441kHz (1) | 32 kHz (1) |
| 6 | 0 | 0 | 0 | 0 | 0 | 24 bit | 20 bit | 16 bit |
| 7 | 0 | Audio Format Code=0110b | | | | Max Number of channel 1 = 001b | | |
| 8 | 0 | 192 kHZ (1) | 176.4 kHz (1) | 96 kHz (1) | 88 2 kHz (1) | 48 kHz (1) | 441kHz (1) | 32 kHz (1) |
| 9 | Maximum bit rate divided by 8kHz | | | | | | | |

Bytes 1, 2, and 3 show the header of an HDMI audio data block. NUM_CEA_SAD is set to 2, because sink supports two types of audio format codes for multi-stream audio. Max_Stream_Count-1 is set to 1, because sink may handle two independent audio streams described above. NUM_HDMI_3D_A is set to 0, because BDP does not handle 3D audio transmissions in this exemplaryscenario.

Bytes 4, 5, and 6 include the first CEA short audio descriptors that describe audio features. In the case of multi-stream audio transmission, a maximum channel count is limited to 2. For these reasons, Max Number of channels-1 will be 1.

Bytes 7, 8, and 9 include the second CEA short audio descriptors that describe audio features. Max Number of channels-1 will be 1 as described above. After receiving the EDID from TV, the BDP may transmit an audio infoframe to the TV. In contrast with a 3D audio transmission scenario, CC and CA each may be used to transmit a channel count and channel/speaker allocation information. That is, an audio metadata packet may not be used for multi-stream audio transmission. Table 83 shows an example of an audio info frame payload for transmitting two audio streams.

**Table 83 - Example of the Audio InfoFrame payload for two audio streams**

| Packet Byte# | 7 | 6 | 5 | 4 | 3 | 2 | 1 | 0 |
|---|---|---|---|---|---|---|---|---|
| PB0 | Checksum | | | | | | | |
| PB1 | CT3 | CT2 | CT1 | CT0 | Reserved | CC2 | CC1 | CC0 |
| | (0) | (0) | (0) | (0) | (0) | (0) | (0) | (0) |
| PB2 | Reserved (0) | | | SF2 | SF1 | SF0 | SS1 | SS0 |
| | | | | (0) | (0) | (0) | (0) | (0) |
| PB3 | Format depends on coding type (i.e CT0...CT3) | | | | | | | |
| PB4 | CA7 | CA6 | CA5 | CA4 | CA3 | CA2 | CA1 | CA0 |
| | (0) | (0) | (0) | (0) | (0) | (0) | (0) | (0) |
| PB5 | DM_INH | LSV3 | LSV2 | LSV1 | LSV0 | Rscd(0) | LFEPBL1 | LFEPBL0 |
| PB6 | Reserved (0) | | | | | | | |
| PB7 | Reserved (0) | | | | | | | |
| PB8 | Reserved (0) | | | | | | | |
| PB9 | Reserved (0) | | | | | | | |
| PB10 | Reserved (0) | | | | | | | |
| PB11-PB27 | Reserved (0) | | | | | | | |

BDP transmits the multi-stream audio sample packets including stereo audio samples for two independent audio streams. That is, the first sub-packet includes the stereo audio sample of the first audio stream, and the second sub-packet comprises the stereo audio sample of the second audio stream. In this example, a multi-stream audio sample packet may be defined as shown in Table 84.

**Table 84 - Example of the Multi-Stream Audio Sample Packet for two audio streams**

| Byte/bit# | 7 | 6 | 5 | 4 | 3 | 2 | 1 | 0 |
|---|---|---|---|---|---|---|---|---|
| HB0 | 0 | 0 | 0 | 0 | 1 | 0 | 1 | 1 |
| HB1 | 0 | 0 | 0 | 0 | Stream present sp3 (0) | Stream present sp2 (0) | Stream present sp1 (1) | Stream present sp0 (1) |
| HB2 | B3 | B2 | B 1 | B0 | Stream_flat sp3(0) | Stream_flat sp2(0) | Stream_flat sp1 (0) | Stream_flat sp0(0) |
| SB0∼SB2 | Channel 1 / Sample N (Stream 0) | | | | | | | |
| SB3∼SB5 | Channel 2 / Sample N (Stream 0) | | | | | | | |
| SB6 | PCUV of Ch 2 (Stream 0) | | | | PCUV of Ch 1 (Stream 0) | | | |
| SB7∼SB9 | Channel 1 / Sample N (Stream 1) | | | | | | | |
| SB10∼SB12 | Channel 2 / Sample N (Stream 1) | | | | | | | |
| SB13 | PCUV of Ch 2 (Stream 1) | | | | PCUV of Ch 1 (Stream 1) | | | |
| SB14∼SB16 | Empty (0) | | | | | | | |
| SB17∼SB19 | | | | | | | | |
| SB20 | | | | | | | | |
| SB21∼SB23 | Empty (0) | | | | | | | |
| SB24∼SB26 | | | | | | | | |
| SB27 | | | | | | | | |

### 3D audio speaker replacement & channel allocation (informative)

According to the following feature, the speaker replacement and channel allocation information for 3D audio transmission are provided.

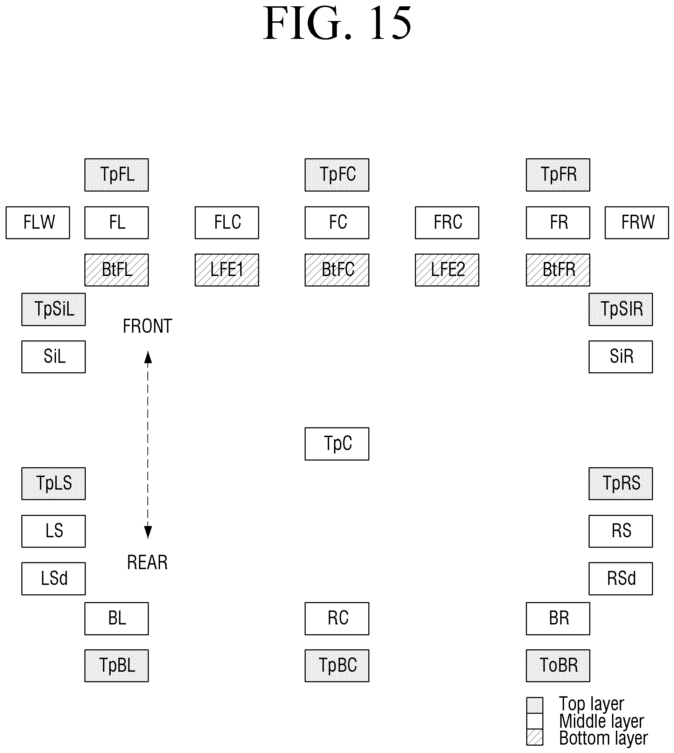

Figure 15 is a view showing a speaker placement for a channel of 3D audio.

In the case of a 30.2 channel standard type of IEC among examples that are described in Table 85, FL indicates front left speaker, FR indicates front right speaker, LFF indicates low frequency effect 1 speaker, FC indicates front center speaker, BL indicates back left speaker, BR indicates back right speaker, FLW indicates front left wide speaker, FRW indicates front right wide speaker, TpFL indicates top front left speaker, TpFR indicates top front right speaker, BC indicates back center speaker, LS indicates left surround speaker, RS indicates right surround speaker, LFE2 indicates low frequency effect 2 speaker, FLC indicates front left center speaker, FRC indicates front right center speaker, TpFC indicates top front center speaker, TpC indicates top center speaker, SiL indicates side left speaker, SiR indicates side right speaker, TpBL indicates top back left speaker, TpBR indicates top back right speaker, TpSiL indicates top side left speaker, TpSiR indicates top side right speaker, BtFC indicates bottom front center speaker, BtFL indicates bottom front left speaker, BtFR indicates bottom front right speaker, TpBC indicates top back center speaker, TpLS indicates top left surround speaker, TpRS indicates top right surround speaker, LSd indicates left surround direct speaker, and RSd indicates right surround direct speaker.

However, the names of the speakers may differ in accordance with types of standards. For example, the front center speaker may be written as FC in the IEC standard described above, but the front center speaker may also be written as C in the TTA standard. Various speaker names may be used besides the names that are illustrated in the tables below. That is, the contents illustrated in the table below and in Figure 15 are examples only, and speaker and channel allocation may be included differently.

3D audio data in which multi-channel is supported has a common feature of having different speakers for each upper part, center part, and lower part area of 3D space, unlike 2D audio data. Examples of spatial placement of these speakers are described in Figure 15.

**Table 85 - Audio Channel Description & Abbreviation Comparison (CEA/TTA/SMPTE/IEC)**

| Abbreviation | | | | Description |
|---|---|---|---|---|
| CEA_861 | TTA(10.2ch) | SMPTE (22.2ch) | IEC (30.2ch) | |
| FL | L | FL | FL | Front left |
| FR | R | FR | FR | Front right |
| LFE | LFE1 | LFE1 | LFE1 | Low Frequency Effect 1 |
| FC | C | FC | FC | Front center |
| RL | LB | BL | BL | Back Left |
| RR | RB | BR | BR | Back Right |
| FLW | | | FLW | Front Left Wide |
| FRW | | | FRW | Front Right Wide |
| FLH | LH | TpFL | TpFL | Top Front Left |
| FRH | RH | TpFR | TpFR | Top Front right |
| RC | | BC | BC | Back Center |
| | LS | | LS | Left Surround |
| | RS | | RS | Right Surround |
| | LFE2 | LFE2 | LFE2 | Low Frequency Effect 2 |
| FLC | | FLC | FLC | Front Left center |
| FRC | | FRC | FRC | Front right Center |
| RLC | | | | Rear Left Center |
| RRC | | | | Rear Right Center |
| FCH | | TpFC | TpFC | Top Front Center |
| TC | | TpC | TpC | Top Center |
| | | SiL | SiL | Side Left |
| | | SiR | SiR | Side Right |
| | | TpBL | TpBL | Top Back Left |
| | | TpBR | TpBR | Top Back Right |
| | | TpSiL | TpSiL | Top Side Left |
| | | TpSiR | TpSiR | Top Side Right |
| | | BtFC | BtFC | Bottom Front Center |
| | | BtFL | BtFL | Bottom Front Left |
| | | BtFR | BtFR | Bottom Front Right |
| | CH | TpBC | TpBC | Top Back Center |
| | | | TpLS | Top Left Surround |
| | | | TpRS | Top right Surround |
| | | | LSd | Left surround direct |
| | | | RSd | Right Surround direct |

### 5. Data transmitting method and data receiving method

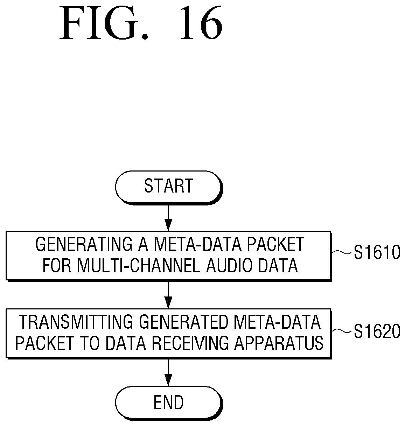

With reference to Figures 16 to 17, the following describes a data transmitting method and a data receiving in standard described above.

Figures 16 to 17 are flow diagrams of a data transmitting method and a data receiving method in accordance with various exemplary embodiments.

As shown in FIG. 16, a data transmitting method in accordance with an exemplary embodiment includes an operation S1610 of generating a metadata packet for multi-channel audio data, and a step S1620 of transmitting the generated metadata packet to a data receiving apparatus. Here, the generated metadata packet comprises an ACAT (Audio Channel Allocation Standard Type) field indicating channel allocation standard type information of the multi-channel audio data.

Since each step is described in section 2.1 of the first exemplary embodiment of the present specification, an overlapping description thereof will be omitted.

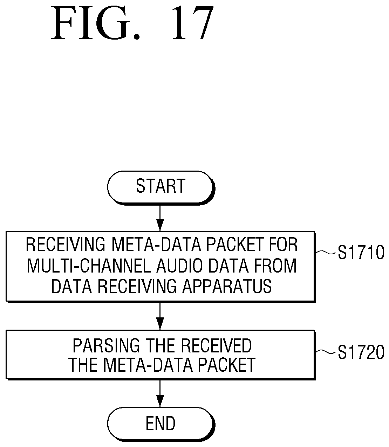

As shown in FIG. 17, a data receiving method in accordance with an exemplary embodiment includes an operation S1710 of receiving a metadata packet for multi-channel audio data, and an operation S1720 of parsing the received metadata packet. Here, the received metadata packet comprises an ACAT (Audio Channel Allocation Standard Type) field indicating channel allocation standard type of the multi-channel audio data.

Since each step is described in section 2.1 of the first exemplary embodiment of this specification, an overlapping description thereof will be omitted.

### 6. Multi-audio

Supporting of multi-audio may be conducted in a high-speed wired interface environment. The multi-audio environment refers to an environment that supports multi-audio for one content. For example, if two users are playing a game with the same screen, then each user should receive different audio. In the following, a transmission packet structure of a sink apparatus and a source apparatus is described when multi-audio is supported as described above.

### 6.1. Audio Sample Packet Modification Plan

First Exemplary EmbodimentAs shown below in the table 86, the structure of a multi-stream audio sample packet may be utilized.

**Table 86 - Multi-Stream Audio Sample Packet**

| Byte/Bit # | 7 | 6 | 5 | 4 | 3 | 2 | 1 | 0 |
|---|---|---|---|---|---|---|---|---|
| HB0 | 0 | 0 | 0 | 0 | 1 | 1 | 1 | 0 |
| HB1 | Rsvd (0) | Rsvd (0) | MS_Layout | | Stream_present.Sp3 | Stream_present.Sp2 | Stream_present.Sp1 | Stream_present.Sp0 |
| HB2 | B3 | B2 | B1 | B0 | Stream_flat sp3 | Stream_flat sp2 | Stream_flat sp 1 | Stream_flat sp0 |
| PB0∼PB6 | Subpacket 0 | | | | | | | |
| PB7∼PB13 | Subpacket 1 | | | | | | | |
| PB14∼PB20 | Subpacket 2 | | | | | | | |
| PB21∼PB27 | Subpacket 3 | | | | | | | |

"MS_Layout" field for transmission of Multi-Audio for each view is newly defined in the header, but a Multi-Stream ASP structure is still used. It is defined so that the layout structure of a sub-packet may differ in accordance with the MS_Layout field value. Additional information on each audio stream is transmitted through InfoFrame, Audio Metadata Packet, or a newly defined audio description packet in the structure of transmitting multi-audio. The definition of remaining fields may be the same as described above in the defined Multi-Stream ASP.

The below table indicates an MS_Layout value.

**Table 87 - MS_Layout**

| MS_Layout | | Description |
|---|---|---|
| 0 | 0 | Normal Multi-Stream Audio Sample Packet |
| 0 | 1 | Dual View only |
| 1 | 0 | Multi-Audio only |
| 1 | 1 | Dual View and Multi-Audio |

| | | |
|---|---|---|
| * When the MS_Layout supports dual views, audio data for a left bank (content 1) is transmitted through sub-packets 0 and 1, and audio data for a right bank (content 2) is transmitted through sub-packets 2 and 3. Up to two samples per each piece of audio data may be transmitted using one multi-stream. ** Multi-audio for single view may be transmitted through sub-packet 0∼3. Multi-stream ASP may transmit only audio data for one single view. For example, only an audio signal for a left bank may be transmitted in case of 3D video. Up to a maximum of four pieces of multi-audio data for one single view may be transmitted. *** Audio data on left bank (content 1) may be transmitted through sub-packets 0 and 1 in case of dual view multi-audio. Sub-packets 0 and 1 hold two different audio streams. For example, one stream comprises Korean audio data and another stream comprises an English audio stream. | | |

However, the exemplary embodiments described above are examples only, and the number of sub-packets for describing audio data may be extended. In addition, the order of sub-packets may be included differently from the above.

Second Exemplary EmbodimentThe second exemplary embodiment defines a new ASP apart from a Multi-Stream ASP, according to the below table, and uses the new ASP only for multi-audio.

**Table 88 - Multi-Audio Audio Sample Packet**

| Byte/Bit # | 7 | 6 | 5 | 4 | 3 | 2 | 1 | 0 |
|---|---|---|---|---|---|---|---|---|
| HB0 | New packet Type (TBD) | | | | | | | |
| HB1 | Rsvd (0) | Rsvd (0) | Rsvd (0) | Rsvd (0) | Sample_present.sp3 | Sample_present.sp2 | Sample_present.sp1 | Sample_present.sp0 |
| HB2 | B3 | B2 | B1 | B0 | Sample_flat sp3 | Sample_flat sp2 | Sample_flat sp1 | Sample_flat sp0 |
| PB0∼PB6 | Subpacket 0 | | | | | | | |
| PB7∼PB13 | Subpacket 1 | | | | | | | |
| PB14∼PB20 | Subpacket 2 | | | | | | | |
| PB21∼PB27 | Subpacket 3 | | | | | | | |

The second exemplary embodiment defines a new packet apart from the Multi-Stream ASP and uses the new packet for transmission of multi-audio data for each view. However, the new packet may not be used in 3D Video format and may be used only when single video is transmitted. Sample data of one type of audio stream may be transmitted per each sub-packet and a different type of audio stream may be used per sub-packet. In this case, a maximum of four pieces of audio steam sample data may be transmitted simultaneously in terms of a single video. Additional information for each audio stream is transmitted through InfoFrame, Audio Metadata Packet, or a (newly defined) Audio Description Packet.

Third Exemplary EmbodimentThe third exemplary embodiment uses a multi-stream ASP structure which has defined an AS_ID(Audio stream Identifier) field as the below table.

**Table 89 - Multi-Audio Audio Sample Packet**

| Byte/Bit # | 7 | 6 | 5 | 4 | 3 | 2 | 1 | 0 |
|---|---|---|---|---|---|---|---|---|
| HB0 | Packet Type = 0x0E 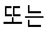 0xXX (Newly defined packet type) | | | | | | | |
| HB1 | AS_ID (Audio Stream identifier) | | | | Sample_present.sp3 | Sample_present.sp2 | Sample_present.sp1 | Sample_present.sp0 |
| HB2 | B3 | B2 | B1 | B0 | Sample_flat sp3 | Sample_flat sp2 | Sample_flat sp1 | Sample_flat sp0 |
| PB0∼PB6 | Subpacket 0 | | | | | | | |
| PB7∼PB13 | Subpacket 1 | | | | | | | |
| PB14∼PB20 | Subpacket 2 | | | | | | | |
| PB21∼PB27 | Subpacket 3 | | | | | | | |

Each ASP transmits only one type of audio stream sample data. For dual-view, one ASP will transmit audio data of any one piece of content (left or right). For quad-view, one ASP will transmit audio stream that is related to one view (content) among left odd, left even, right odd, or right even views (contents).

When transmitting multi-audio for each view, one ASP will transmit sample data of an audio stream corresponding to AS_ID among more than one audio stream that is related to a left view (or a right view). Additional information on which audio stream is an audio stream of which view that is transmitted from each ASP may be determined using an InfoFrame, an Audio Metadata Packet, or a (newly defined) Audio Description Packet.

As an another alternative to this exemplary embodiment, a method may be implemented of allocating different packet types in multi-stream audio and multi-audio ASP for each single view. Here, two ASP structures may be identical or may have differences in some fields, but the "AS_ID" field may be comprised in both.

Fourth Exemplary Embodiment The fourth exemplary embodiment is different from the third exemplary embodiment, in that the fourth exemplary embodiment distinguishes an ID at two levels, as shown in the below table. That is, AS_ID is defined by dividing into AS_Major_ID and AS_Minor_ID.

**Table 90 - Multi-Audio Audio Sample Packet**

| Byte/Bit # | 7 | 6 | 5 | 4 | 3 | 2 | 1 | 0 |
|---|---|---|---|---|---|---|---|---|
| HB0 | Packet Type = 0x0E 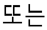 0xXX (Newly defined packet type) | | | | | | | |
| HB1 | AS_Major_ID | | AS_Minor_ID | | Sample_present.sp3 | Sample_present.sp2 | Sample_present.sp1 | Sample_present.sp0 |
| HB2 | B3 | B2 | B1 | B0 | Sample_flat sp3 | Sample_flat sp2 | Sample_flat sp1 | Sample_flat sp0 |
| PB0∼PB6 | Subpacket 0 | | | | | | | |
| PB7∼PB13 | Subpacket 1 | | | | | | | |
| PB14∼PB20 | Subpacket 2 | | | | | | | |
| PB21∼PB27 | Subpacket 3 | | | | | | | |

AS_Major_ID is an ID that identifies multi-stream audio, and AS_Minor_ID is an ID that identifies multi-audio for each view. AS_Major_ID is an ID of higher level and AS_Minor_ID is defined per each value of AS_Major_ID.

The below table describes a definition per each ID value.

**Table 91 - AS_Major_ID and AS_Minor_ID fields**

| AS_Major_ID | | AS_Minor_ID | | Description |
|---|---|---|---|---|
| 0 | 0 | 0 | 0 | 1^{st} audio stream Left Odd view |
| 0 | 0 | 0 | 1 | 2^{nd} audio stream Left Odd view |
| 0 | 0 | 1 | 0 | 3^{rd} audio stream Left Odd view |
| 0 | 0 | 1 | 1 | 4^{th} audio stream Left Odd view |
| 0 | 1 | 0 | 0 | 1^{st} audio stream Right Odd view |
| 0 | 1 | 0 | 1 | 2^{nd} audio stream Right Odd view |
| 0 | 1 | 1 | 0 | 3^{rd} audio stream Right Odd view |
| 0 | 1 | 1 | 1 | 4^{th} audio stream Right Odd view |
| 1 | 0 | 0 | 0 | 1^{st} audio stream Left Even view |
| 1 | 0 | 0 | 1 | 2^{nd} audio stream Left Even view |
| 1 | 0 | 1 | 0 | 3^{rd} audio stream Left Even view |
| 1 | 0 | 1 | 1 | 4^{th} audio stream Left Even view |
| 1 | 1 | 0 | 0 | 1^{st} audio stream Right Even view |
| 1 | 1 | 0 | 1 | 2^{nd} audio stream Right Even view |
| 1 | 1 | 1 | 0 | 3^{rd} audio stream Right Even view |
| 1 | 1 | 1 | 1 | 4^{th} audio stream Right Even view |

As an another alternative, a method may be implemented which includes allocating different packet types in multi-stream audio and multi-audio ASP for each view. Here, two ASP structures may be identical or may have differences in some fields, but "AS_Major _ID" and "AS_Minor_ID" fields may be comprised in both.

### 6.2. Signaling data modification plan - 1

First Exemplary EmbodimentThe first exemplary embodiment comprises a field (MS_Audio_Type) indicating whether multi-stream audio is transmitted to audio metadata packet or not, a field (Aux_Audio) indicating whether multi-audio data for each view is transmitted or not, and more than portion of audio/video mapping information (A/V Mapping Descriptor).

**Table 92 - Audio Metadata Packet Header**

| Byte/bit# | 7 | 6 | 5 | 4 | 3 | 2 | 1 | 0 |
|---|---|---|---|---|---|---|---|---|
| HB0 | Packet Type = 0x0D 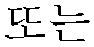 0xXX (Newly defined packet type) | | | | | | | |
| HB1 | Rsvd(0) | Rsvd(0) | Rsvd(0) | Rsvd(0) | Rsvd(0) | Rsvd(0) | Rsvd(0) | Rsvd(0) |
| HB2 | Rsvd(0) | Rsvd(0) | Rsvd(0) | Rsvd(0) | Rsvd(0) | Rsvd(0) | Rsvd(0) | Rsvd(0) |

**Table 93 - Audio Metadata Packet Contents**

| Byte/bit # | 7 | 6 | 5 | 4 | 3 | 2 | 1 | 0 |
|---|---|---|---|---|---|---|---|---|
| PB0 | Rsvd(0) | Rsvd(0) | Rsvd(0) | 3D_CC4 | 3D_CC3 | 3D_CC2 | 3D_CC1 | 3D_CC0 |
| PB1 | Rsvd(0) | Rsvd(0) | Rsvd(0) | Rsvd(0) | ACAT3 | ACAT2 | ACAT1 | ACAT0 |
| PB2 | 3D_CA7 | 3D_CA6 | 3D_CA5 | 3D_CA4 | 3D_CA3 | 3D_CA2 | 3D_CA1 | 3D_CA0 |
| PB3 | MS_Audio_Type | | Aux_Audio | Num_AV_Mapping_Descriptor (=N) | | | | |
| PB4 | AV Mapping Descriptor 1 | | | | | | | |
| ... | ... | | | | | | | |
| PB(4+N) | AV Mapping Descriptor N | | | | | | | |
| PB(4+N)...PB27 | Reserved (0) | | | | | | | |

MS_Audio_Type indicates whether multi-stream audio is transmitted or not as described above. Field value is shown as the below table.

**Table 94 - MS_Audio_Type field**

| MS_Audio_Type | | Description |
|---|---|---|
| 0 | 0 | Reserved |
| 0 | 1 | Transmits 2 audio streams for Dual view |
| 1 | 0 | Transmits 3 audio streams for Dual view |
| 1 | 1 | Transmits 4 audio streams for Dual view |

That is, the exemplary embodiment transmits two audio streams for dual-view when the value of the field is 01, three audio streams for tri-view when the value is 10, and four audio streams for quad-view.

When the field value of Aux_Audio is 1 in the audio metadata packet, this indicates that more than two audio streams are being transmitted from any view. If the value is 0, this indicates that all views are transmitting only one audio stream.

Num_AV_Mapping_Descriptor indicates the number of AV Mapping Descriptors that are to be described after the byte in which this field belongs to.

The AV Mapping Descriptor comprises information showing which audio data corresponding to a view each audio stream comprises. AV Mapping Descriptors that are described in order correspond to an Audio Stream ID (or Subpacket number) according to the order. That is, the first AV Mapping Descriptor becomes a descriptor on an audio stream that is transmitted through ASP with 0 of Audio Stream ID value, when ASP uses Audio Stream ID. When ASP uses a structure that identifies multi-stream audio with a sub-packet unit in similar way, the first AV Mapping Descriptor becomes a descriptor on audio stream that is transmitted through sub-packet 0. A detailed structure of an AV Mapping Descriptor is as follows.

**Table 95 - AV Mapping Descriptor**

| | | | | | | | | |
|---|---|---|---|---|---|---|---|---|
| PB(X) | Rsvd (0) | Rsvd (0) | Rsvd (0) | Rsvd (0) | RE | LE | R0 | L0 |

An audio stream in which LO is set to 1 indicates audio data of a Left View (the first content of Dual View) or a Left Odd View (the first content of Quad View).

Audio stream in which RO is set to 1 indicates audio data of a Right View (the second content of Dual View) or a Right Odd View (the third content of Quad View).

Audio stream in which LES is set to 1 indicates audio data of a Left Even View (the second content of Quad View). (This field is set to 0 in Dual View).

Audio stream in which RE is set to 1 indicates audio data of a Right Even View (the fourth content of Quad View). (This field is set to 0 in Dual View).

### Second Exemplary Embodiment

The second exemplary embodiment is similar to the first exemplary embodiment, but MS_Audio_Type, Aux_Audio, Num_AV_Mapping_Descriptor, and 3D_Audio field are defined in an Audio Metadata Packet header.

**Table 96 - Audio Metadata Packet header**

| Byte/bit # | 7 | 6 | 5 | 4 | 3 | 2 | 1 | 0 |
|---|---|---|---|---|---|---|---|---|
| HB0 | Packet Type = 0x0D 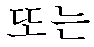 0xXX (Newly defined packet type) | | | | | | | |
| HB1 | Rsvd(0) | Rsvd(0) | Rsvd(0) | Rsvd(0) | Rsvd(0) | Rsvd(0) | Rsvd(0) | 3D_Audio |
| HB2 | Num_AV_Mapping_Descriptor (=N) | | | | | MS_Audio_Type | | Aux_Audio |

**Table 97 - Audio Metadata Packet contents**

| Byte/bit # | 7 | 6 | 5 | 4 | 3 | 2 | 1 | 0 |
|---|---|---|---|---|---|---|---|---|
| PB0 | Rsvd(0) | Rsvd(0) | Rsvd(0) | 3D_CC4 | 3D_CC3 | 3D_CC2 | 3D_CC1 | 3D_CC0 |
| PB1 | Rsvd(0) | Rsvd(0) | Rsvd(0) | Rsvd(0) | ACAT3 | ACAT2 | ACAT1 | ACAT0 |
| PB2 | 3D_CA7 | 3D_CA6 | 3D_CA5 | 3D_CA4 | 3D_CA3 | 3D_CA2 | 3D_CA1 | 3D_CA0 |
| PB3 | AV Mapping Descriptor 1 | | | | | | | |
| ... | ... | | | | | | | |
| PB(3+N) | AV Mapping Descriptor N | | | | | | | |
| PB(3+N)...PB27 | Reserved (0) | | | | | | | |

3D_Audio shows whether 3D audio is transmitted to Sink from Source. PB0∼PB2 of an audio metadata packet are comprised when the field value is set to 1. On the other hand, PB0∼PB2 are omitted when the field value is set to 0. The definitions of other fields may be the same as the first exemplary embodiment.

### Third Exemplary Embodiment

The third exemplary embodiment is similar to the second exemplary embodiment but an Audio Metadata Descriptor is defined instead of an AV Mapping Descriptor. This descriptor comprises AV Mapping information and Audio feature information (e.g. Channel Count, Sampling Frequency, Channel/Speaker Allocation, Level Shift Value, Downmix Inhibit, LFE Playback level information) for multi-audio on multi-stream and each view.

**Table 98 - Audio Metadata Packet Header**

| Byte/bit # | 7 | 6 | 5 | 4 | 3 | 2 | 1 | 0 |
|---|---|---|---|---|---|---|---|---|
| HB0 | Packet Type = 0x0D 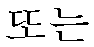 0xXX (Newly defined packet type) | | | | | | | |
| HB1 | Rsvd(0) | Rsvd(0) | Rsvd(0) | Rsvd(0) | Rsvd(0) | Rsvd(0) | Rsvd(0) | 3D_Audio |
| HB2 | Num_AV_Mapping_Descriptor (=N) | | | | | MS_Audio_Type | | Aux_Audio |

**Table 99 - Audio Metadata Packet contents**

| Byte/bit # | 7 | 6 | 5 | 4 | 3 | 2 | 1 | 0 |
|---|---|---|---|---|---|---|---|---|
| PB0 | Rsvd(0) | Rsvd(0) | Rsvd(0) | 3D_CC4 | 3D_CC3 | 3D_CC2 | 3D_CC1 | 3D_CC0 |
| PB1 | Rsvd(0) | Rsvd(0) | Rsvd(0) | Rsvd(0) | ACAT3 | ACAT2 | ACAT1 | ACAT0 |
| PB2 | 3D_CA7 | 3D_CA6 | 3D_CA5 | 3D_CA4 | 3D_CA3 | 3D_CA2 | 3D_CA1 | 3D_CA0 |
| PB3∼PB6 | AV Mapping Descriptor 1 | | | | | | | |
| ... | ... | | | | | | | |
| PB(3+4^{∗}N)∼P B(7+4^{∗}N) | AV Mapping Descriptor N | | | | | | | |
| PB(7+4^{∗}N)...PB 27 | Reserved (0) | | | | | | | |

**Table 100 - Audio Metadata Descriptor**

| PB(X+0) | Rsvd (0) | Rsvd (0) | Rsvd (0) | Rsvd (0) | RE | LE | R0 | L0 |
|---|---|---|---|---|---|---|---|---|
| PB(X+1) | LFEPBL1 | LFEPBL0 | SF2 | SF1 | SF0 | CC2 | CC1 | CC0 |
| PB(X+2) | CA7 | CA6 | CA5 | CA4 | CA3 | CA2 | CA1 | CA0 |
| PB(X+3) | Rsvd (0) | Rsvd (0) | Rsvd (0) | DM_INH | LSV3 | LSV2 | LSV1 | LSV0 |

Each field of RE, LE, RP, and LO that are defined in PB(X+0) are used as they are defined in the second exemplary embodiment.

Each field that is defined in PB(X+1)∼PB(X+3) is used in the same way as the respective field is defined in the Audio InfoFrame of CEA-861-F standard.

The following may be considered as an alternative of the third exemplary embodiment.

The structure of an Audio Metadata Packet is maintained in a form of the second exemplary embodiment.

An Audio Stream ID is added to reserved area of a Header of Audio InfoFrame or Payload Byte. The Audio InfoFrame should be transmitted in a number corresponding to a number of audio streams. That is, a method according to exemplary embodiments includes transmitting a plurality of Audio InfoFrames comprising Audio Stream ID in Audio InfoFrame, instead of these fields that are defined in an Audio Metadata Descriptor PB(X+1)∼PB(X+3) of the third exemplary embodiment that are from the fields existing in an Audio InfoFrame.

### Fourth Exemplary Embodiment

The fourth exemplary embodiment is similar to the third exemplary embodiment, but is distinct in that an audio metadata packet comprises only signaling information on one view (content) by comprising AS_Major_ID, instead of MS_Audio_Type, in a header of an audio metadata packet. According to this configuration, four audio metadata packets should be transmitted when transmitting Quad View, and each packet may be identified as AS_Major_ID.

**Table 101 - Audio Metadata Packet Header**

| Byte/bit # | 7 | 6 | 5 | 4 | 3 | 2 | 1 | 0 |
|---|---|---|---|---|---|---|---|---|
| HB0 | Packet Type = 0x0D 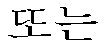 0xXX (Newly defined packet type) | | | | | | | |
| HB1 | Rsvd(0) | Rsvd(0) | Rsvd(0) | Rsvd(0) | Rsvd(0) | Rsvd(0) | Rsvd(0) | 3D_Audio |
| HB2 | Num_AV_Mapping_Descriptor (=N) | | | | | AS_MAJOR_ID | | Aux_Audio |

**Table 102 - Audio Metadata Packet contents**

| Byte/bit # | 7 | 6 | 5 | 4 | 3 | 2 | 1 | 0 |
|---|---|---|---|---|---|---|---|---|
| PB0 | Rsvd(0) | Rsvd(0) | Rsvd(0) | 3D_CC4 | 3D_CC3 | 3D_CC2 | 3D_CC1 | 3D_CC0 |
| PB1 | Rsvd(0) | Rsvd(0) | Rsvd(0) | Rsvd(0) | ACAT3 | ACAT2 | ACAT1 | ACAT0 |
| PB2 | 3D_CA7 | 3D_CA6 | 3D_CA5 | 3D_CA4 | 3D_CA3 | 3D_CA2 | 3D_CA1 | 3D_CA0 |
| PB3∼PB6 | AV Mapping Descriptor 1 | | | | | | | |
| ... | ... | | | | | | | |
| PB(3+4^{∗}N)∼P B(7+4^{∗}N) | AV Mapping Descriptor N | | | | | | | |
| PB(7+4^{∗}N)...PB27 | Reserved (0) | | | | | | | |

In this configuration, Audio Metadata Descriptors that are comprised in a payload comprise feature information of multi-audio that are related to one view. Therefore, the first Byte comprising LO, RO, LE, and RE fields is not needed, unlike audio metadata descriptors that are defined in the third exemplary embodiment.

Here, audio metadata descriptors that are placed in order indicate that they are descriptors that correspond to AS_Minor_ID according to the order. That is, the first audio metadata descriptor is a descriptor of an audio stream in which AS_Minor_ID is 0. In the same way, the second audio metadata descriptor is a descriptor of an audio stream in which AS_Minor_ID is 1.

In contrast to the configuration reflecting AS_Minor_ID implicitly as above, a plan of explicitly comprising AS_Minor_ID field having 1 bit or more in the first Byte of each audio metadata descriptor may be considered. For example, if it is desired to use an ASP comprising 2 bits of an AS_Minor_ID field, this configuration should be defined by allocating 2 bits with AS_Minor_ID that is to be defined in an audio metadata descriptor.

### 4-1 Exemplary Embodiment

An audio metadata descriptor may be defined according to the following table. Here, each field that is defined PB(X+0)∼PB(X+2) may be used according to the fields that are defined in an audio infoframe of CEA-861-F standard.

**Table 103 - Audio Metadata Descriptor**

| PB(X+0) | LFEPBL 1 | LFEPBL 0 | SF2 | SF1 | SF0 | CC2 | CC1 | CC0 |
|---|---|---|---|---|---|---|---|---|
| PB(X+1) | CA7 | CA6 | CA5 | CA4 | CA3 | CA2 | CA1 | CA0 |
| PB(X+2) | Rsvd (0) | Rsvd (0) | Rsvd (0) | DM_INH | LSV3 | LSV2 | LSV1 | LSV0 |

### 4-2 Exemplary Embodiment

An audio metadata descriptor may be defined by comprising AS_Minor_ID according to the following table, unlike the 4-1 exemplary embodiment. Here, each field that is defined in PB(X+0)∼PB(X+2) may be defined according to an audio infoframe of CEA-861-F standard.

**Table 104 - Audio Metadata Descriptor**

| PB(X+0) | Rsvd (0) | Rsvd (0) | Rsvd (0) | Rsvd (0) | Rsvd (0) | Rsvd (0) | AS_Minor_ID | |
|---|---|---|---|---|---|---|---|---|
| PB(X+1) | LFEPBL1 | LFEPBL0 | SF2 | SF1 | SF0 | CC2 | CC1 | CC0 |
| PB(X+2) | CA7 | CA6 | CA5 | CA4 | CA3 | CA2 | CA1 | CA0 |
| PB(X+3) | Rsvd (0) | Rsvd (0) | Rsvd (0) | DM_INH | LSV3 | LSV2 | LSV1 | LSV0 |

There may be a configuration of defining the AS_Minor_ID field in a reserved area existing in the structure of the 4-1 exemplary embodiment without allocating a separate Byte.

In addition, there may be a configuration of defining the size of the AS _Minor_ID field bigger or smaller than 2 bits. Here, it is needed to define the field to be the same size as the bit size of other packets (e.g. Multi-Stream Audio Sample Packet, Audio Clock Regeneration Packet) that defines AS_Minor_ID field.

There may also be the following configuration as an alternative of the fourth exemplary embodiment.

AS_Major_ID and AS_Minor_ID are added in a reserved area of a header of an audio infoframe or payload byte. The audio infoframe should be transmitted in the number of audio streams. Fields that are defined in an Audio Metadata Descriptor PB(X+1)∼PB(X+3) are from fields existing in the audio infoframe, and instead a method of transmitting a plurality of audio infoframes comprising AS_Major_ID and AS_Minor_ID may be implemented.

### 6.3 Signaling data modification plan -2

An audio description packet comprising information that describes features of data (e.g. language, type, title, supplement) that are comprised in each audio stream is defined.

### First Exemplary Embodiment

Information that describes features of data (e.g. language type, title, supplement) that are comprised in each audio stream is comprised as the below table.

**Table 105 - Audio Description Packet Header**

| Byte/bit # | 7 | 6 | 5 | 4 | 3 | 2 | 1 | 0 |
|---|---|---|---|---|---|---|---|---|
| HB0 | Packet Type = 0xXX (Newly defined packet type) | | | | | | | |
| HB1 | Rsvd(0) | Rsvd(0) | Rsvd(0) | Rsvd(0) | Audio Stream ID | | | |
| HB2 | EXD_Pressent | Audio_Information_Descriptors_Present | | | | | | |

Audio Stream ID is an identifier field to distinguish audio streams that are transmitted corresponding to each view, also this field is defined in a Multi-Stream Audio Sample Packet and an Audio Metadata Packet. Packets with the same value of this field are used in audio stream transmission.

Since EXD_Present (Extended Descriptors Present) is not defined in Audio_Information_Descriptors_Present, the field value is set to 1 when an extension of descriptor is needed. Here, the first Byte of Audio Description Packet Payload is defined as Extended_Audio _Information_Descriptors_Present field.

Audio_Information_Descriptors_Present is a field indicating whether to comprise certain descriptors in accordance with a setting of each bit. A sub-field as follows may be comprised.

**Table 106 - Audio_Information_Descriptors_Present**

| | | | | | | | | |
|---|---|---|---|---|---|---|---|---|
| HB2 | EXD_Presen | Rsvd (0) | Rsvd (0) | Rsvd (0) | CAD | APD | PSD | MLD |

MLD, PSD, PD, and CAD each are fields indicating whether a MultiLingual Descriptor, Primary/Supplementary Descriptor, Audible Position Descriptor, and Content Advisory Descriptor are comprised or not.

A detailed structure of a descriptor is described in the following. Reserved bits are allocated to indicate whether a descriptor to be added in the future is comprised or not.

**Table 107 - MLD(Multi-Lingual Descriptor)**

| | |
|---|---|
| PB(X+0) | ISO_639_Language_Code (3Bytes) |
| PB(X+1) | |
| PB(X+2) | |

A type of language that is used in an audio stream may be described through language code that is defined in the ISO 639 standard. However, exemplary embodiments do not exclude language codes in other standards.

**Table 108 - PSD (Primary-Supplementary Descriptor)**

| | | |
|---|---|---|
| PB(X+0) | PS | PS_Type |

The PS field indicates primary audio if PS field is 1, and supplementary audio if PS field is 0.

The PS_Type field indicates a type of primary audio if the value of PS_Type field is 1, and indicates a type of supplementary audio if the value of PS_Type field is 0.

**Table 109 - PS_Type field if PS is set to 1(primary audio)**

| PS-Type | Description |
|---|---|
| 00x00∼0x7E | Reserved (TBD) |
| 0x7F | Extends the PS_Type field |

If a field value of PS_Type is 0x00∼0x7E, each field value indicates a type of primary audio. If a field value of PS_Type is 0x7F, PSD is extended to 2 Bytes as follows and the second Byte is used as an Extended_PS_Type field.

**Table 110 - PSD(Primary-Supplementary Descriptor) is PS_Type is set to 0x7F**

| | | |
|---|---|---|
| PB(X+0) | PS | PS_Type = 0x7F |
| PX((X+1) | Extended PS_Type | |

If Extended_PS_Type needs an extension of PS_Type, the Extended PS_Type field may be added when the value of PS_Type is set to 0x7F.

If the field value of PS is set to 0, PS_Type works as a field indicating a type of supplementary audio. The field value of PS_Type may be implemented in accordance with the below table.

**Table 111 - PS_Type field if PS is set to 0(supplementary audio)**

| PS_Type | Description |
|---|---|
| 0x00 | Audio stream for Description Video (for visual impairment) |
| 0x01 | Audio stream shifted to High Freq (for hearing impairment) |
| 0x02 | Audio stream shifted to Low Freq (for hearingimpairment) |
| 0x03 | Audio stream amplified in High Freq (for hearing impairment) |
| 0x04 | Audio stream amplified in Low Freq (for hearing impairment) |
| 0x05∼0x07E | Reserved (TBD) |
| 0x07F | Extends the PS_Type field |

If the value of PS_Type is 0x7F, an Extended_PS_Type field is added and the specific method is the same as described above in the previous paragraph.

**Table 112 - APD (Audible Position Descriptor)**

| | | |
|---|---|---|
| PB(X+0) | Audible_Location | Position |

**Table 113 - Audible_Location field**

| Audible_Location | Description |
|---|---|
| 0x00 | Stadium |
| 0x01 | Indoor stadium |
| 0x02 | Concert Hall |
| 0x03∼0x0F | Reserved (TBD) |

Position field is the value indicating the position of an audio source within the place designated as Audible_Location.

**Table 114 - Position field**

| position | Description |
|---|---|
| 0x00 | 1 |
| 0x01 | 2 |
| 0x02 | 3 |
| ... | ... |
| 0x0F | 16(Farthest) |

There may be several ways of describing position. How far an audio source is apart from a position may be expressed in numbers (1, 2, 3...). According to other ways, position may be defined to express certain positions by displaying position value in accordance with Audible_Location. For example, if Audible_Location is stadium, it may be defined as a broadcasting booth.if position is 0x00, an infield bleacher may correspond to a position of 0x01, and as outfield bleacher may correspond to a position of 0x02..

CAD (Content Advisory Descriptor) is defined as a descriptor displaying a listening rating of an audio stream as follows.

**Table 115 - CAD (Content Advisory Descriptor)**

| | | |
|---|---|---|
| PB(X+0) | Rating_type (4 bits) | Rating_value (4bits) |

Rating_type is a field displaying a rating standard type by country and contents. Rating_value displays a type of each rating that is determined in accordance with a standard of Rating type.

CAD may be used as the purpose for comprising rating information of a video stream as well as an audio stream. To do so, an additional modification of a packet transmitting CAD or a new definition is needed. For example, there may be a way of comprising descriptor holding information as CAD by newly defining a video description packet, separate from an audio description packet in which CAD is comprised. Another alternative is to comprise description information on Audio/Video stream contents by redefining an audio description packet as an AV description packet.

When newly defining a Video Description Packet, at least the following information should be comprised.
(1) ID information connecting a Video Description Packet and a video stream (view) related to the video description packet.
(2) ID information that may connect a Video Description Packet and an audio stream related to the video description packet. The ID may have the same value as an ID defined in the first exemplary embodiment or may allocate separate ID values.
(3) The number of descriptors, type of comprised descriptor, and extension flag of a header or payload are comprised to load more than one descriptor to payload.
(4) Various information related to video contents, such as type of each video content, position information of view in multi-view, and information for immersive media, may be defined and comprised in various types of descriptors.

**Table 116 - Rating_type field**

| Rating_type | Description |
|---|---|
| 0x00 | Film ratng (US) |
| 0x01 | TV rating (US) |
| 0x02 | Video Game rating (US) |
| 0x03 | Film ratin (EU) |
| 0x04 | TV rating (EU) |
| .. | ... |
| 0x0F | Reserved |

**Table 117 - Rating_value field**

| Rating_type | 0x00 | 0x01 | 0x02 | ... |
|---|---|---|---|---|
| 0x00 | G | TV-Y | EC | ... |
| 0x01 | PG | TY-Y7 | E | ... |
| 0x02 | PG-13 | TV-Y7-FV | T | ... |
| 0x03 | R | TV-G | M | ... |
| 0x04 | NC-17 | TV-PG | AO | ... |
| ... | ... | | | |
| 0x0F | | | | |

Another alternative for describing CAD is as follows.

**Table 118 - Country_Code, Rating_Type, Rating_Value**

| | |
|---|---|
| PB(X+0) | Country_Code |
| PB(X+1) | Rating_Type |
| PB(X+2) | Rating_Value |

This example defines aCountry_Code by diving it separately. There is a way of defining Country_Code field by allocating one bit or more. In addition, this field may be defined according to the below table, or may be described as 3 bytes in accordance with the ISO 3166 standard.

**Table 119 - Country Code field**

| Rating-Type | Description |
|---|---|
| 0x00 | ABW (Aruba Island) |
| 0x01 | AFG (Afghanistan) |
| ... | ... |
| 0xXX | KOR(Republic of Korea) |
| ... | ... |
| 0xYY | USA(United States of America) |
| ... | ... |
| 0xFF | ZWE(Zimbabwe) |

**Table 120 - Rating_Type field**

| Rating_type | Description |
|---|---|
| 0x00 | Flim |
| 0x01 | TV |
| 0x02 | Video Game |
| ... | ... |
| 0Xff | Reserved (TBD) |

**Table 121 - Rating value field (if Country_Code is set to 0xYY(USA))**

| Rating_type | 0x00 | 0x01 | 0x02 | ... |
|---|---|---|---|---|
| 0x00 | G | TV-Y | EC | ... |
| 0x01 | PG | TY-Y7 | E | ... |
| 0x02 | PG-13 | TV-Y7-FV | T | ... |
| 0x03 | R | TV-G | M | ... |
| 0x04 | NC-17 | TV-PG | AO | ... |
| .. | ... | | | |
| 0x0F | Reserved (TBD) | | | |

### 6.4. EDID modification plan

A flag that indicates whether multi-audio for a single view of a sink is supported or not is added in EDID. The flag may be comprised in an HDMI Audio Data Block and VSIF(LLC or Forum), or may be comprised in a newly defined data block. 6.5. Definition of multi view field

A field is added to describe support information of a Dual/Tri/Quad-View or an additional Multi-view in a Vendor-Specific InfoFrame and Vendor-Specific Data Block.

### First Exemplary Embodiment

The first exemplary embodiment adds a 3D_MultiView field to describe support information of Dual/Tri/Quad-View or an additional Multi-View in PB5 area of a Vendor-Specific InfoFrame.

**Table 122 - Vendor-Specific InfoFrame Packet Contents**

| Packet Byte# | 7 | 6 | 5 | 4 | 3 | 2 | 1 | 0 |
|---|---|---|---|---|---|---|---|---|
| PB0 | Checksum | | | | | | | |
| PB1 | 24bit IEEE Registration Identifier (0x000C03) ( least significant byte first) | | | | | | | |
| PB2 | | | | | | | | |
| PB3 | | | | | | | | |
| PB4 | HDMI_Video_Format | | | Rsvd(0) | Rsvd(0) | Rsvd(0) | Rsvd(0) | Rsvd(0) |
| PB5 | HDMI_VIC | | | | | | | |
| | 3D_Structure | | | | Rsvd(0) | 3D_MultiView | | Rsvd(0) |
| (PB6) | 3D_Ext_Data | | | | Rsvd(0) | | | |
| ...PB(Nv) | Reserved (0) | | | | | | | |

The 3D_MultiView field indicates whether video data transmitted in a 3D format is data of a normal 3D mode (transmission from before HDMI 1.4b) or data of Multi-View (Dual/Tri/Quad). The content meaning in accordance with this field value is described in the below table.

**Table 123 - 3D_MultiView field**

| 3D MultiView | | Description |
|---|---|---|
| 0 | 0 | Normal 3D Mode |
| 0 | 1 | Dual-View |
| 1 | 0 | Tri-View |
| 1 | 1 | Quad-View |

Meanwhile, this field may be modified to express Multi-View over Quad-View by defining the size of this field as more than 3 bits. In this case, the above table may also be extended.

### Second Exemplary Embodiment

The second exemplary embodiment adds a 3D_MultiView field to describe support information of Dual /Tri/Quad-View or additional Multi-View in a PB7 area of a Vendor-Specific InfoFrame.

**Table 124 - Vendor-Specific InfoFrame Packet Contents**

| Packet Byte# | 7 | 6 | 5 | 4 | 3 | 2 | 1 | 0 |
|---|---|---|---|---|---|---|---|---|
| PB0 | Checksum | | | | | | | |
| PB1 | 24bit IEEE Registration Identifier (0x000C03) | | | | | | | |
| PB2 | (least significant byte first) | | | | | | | |
| PB3 | | | | | | | | |
| PB4 | HDMI_Video_Format | | | Rsvd(0) | Rsvd(0) | Rsvd(0) | Rsvd(0) | Rsvd(0) |
| PB5 | HDMI_VIC | | | | | | | |
| | 3D_Structure | | | | Rsvd(0) | 3D_MultiView | | Rsvd(0) |
| (PB6) | 3D_Ext_Data | | | | Rsvd(0) | | | |
| (PB7) | 3D_ AdditionalInfo | | | | | | | |
| | Rsvd(0) | Rsvd(0) | 3D_MultiView | | 3D_ViewDependency | | 3D_Preferred2DView | |
| ...PB(Nv) | Reserved (0) | | | | | | | |

The second exemplary embodiment adds a 3D_MultiView field which is the same as the first exemplary embodiment. However, there is a difference in the position that the 3D_MultiView field is added to. The 3D_MultiView field is defined specifically in bit[5:4] within the structure of PB7.

In addition, 3D_MultiView may be defined in a Vendor-Specific Data Block according to the below table.

**Table 125 - Vendor-Specific Data Block**

| Byte# | 7 | 6 | 5 | 4 | 3 | 2 | 1 | 0 |
|---|---|---|---|---|---|---|---|---|
| 0 | Vendor-specific tag code(=8) | | | Length (=N) | | | | |
| 1 | 24-bit IEEE Registration Identifier (0x000C03) | | | | | | | |
| 2 | (least significant byte first) | | | | | | | |
| 3 | | | | | | | | |
| 4 | A | | | | B | | | |
| 5 | C | | | | D | | | |
| 6 | Supports AI | DC_45bit | DC_ 36bit | DC_30bit | DC_Y444 | Rsvd(0) | Rsvd(0) | DVI_Dual |
| 7 | Max_TMDS_ Clock | | | | | | | |
| 8 | Latency_Fields_ Present | I_Latency_ Fields Present | HDMI_ Video_presnt | Rsvd(0) | CNC3 | CNC2 | CNC1 | CNCO |
| 9 | Video_Latency | | | | | | | |
| 10 | Audio_Latency | | | | | | | |
| 11 | Interlaced_Video_Latency | | | | | | | |
| 12 | Interlaced_Audio_Latency | | | | | | | |
| 13 | 3D_present | 3D_Multi_present | | Image_site | | MultiView | | Rsvd(0) |
| 14 | HDMI_VIC_LEN | | | HDMI_3D_LEN | | | | |
| 15 | (if HDMI_VIC_LEN>0) | | | | | | | |
| | HDMI_ VIC_1 | | | | | | | |
| ... | ... | | | | | | | |
| | HDMI_VIC_M | | | | | | | |
| | (if 3D_Multi_present=01 or 10) | | | | | | | |
| | 3D_Structure_ALL_15...S | | | | | | | |
| | 3D_Structure_ALL_7...0 | | | | | | | |

The Multi-View field indicates Multi-View Capability of sink. A description for the field values may be implemented according to the following table.

In addition, the field may be modified to define the size of the field as more than 3 bits, and to express Multi-View over Quad-View the size of the field. In this case, the below table should also be extended.

**Table 126 - Multi View field**

| 3D_MultiView | | Description |
|---|---|---|
| 0 | 0 | Reserved |
| 0 | 1 | Dual_view |
| 1 | 0 | Tri-View |
| 1 | 1 | Quad-View |

References herein to HDMI 1.4b may, where appropriate, be equivalent to references to the same or similar parts or sections of HDMI 1.4a.

The foregoing exemplary embodiments and advantages are merely exemplary only and are not to be construed as limiting the present disclosure. The present teachings may be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification.

## Claims

1. A data transmitting apparatus (100) **characterised by**:
a packet generation unit (110) for generating a metadata packet for 3D multi-channel audio data; and
a transmission unit (120) for transmitting the generated metadata packet to a receiving apparatus (200); and
wherein the generated metadata packet comprises:
an audio channel allocation standard type field that indicates a channel allocation standard type of the multi-channel audio data; and
a 3D channel / speaker allocation field indicating a channel information of the multi-channel audio data and an allocation of speaker locations for the channel allocation standard type indicated in the audio channel allocation standard type field, the 3D channel / speaker allocation field being 1 byte,
a channel count field indicating the number of the 3D multi-channel audio data, and the channel count field being 5 bits, and
wherein the audio channel allocation standard type field indicates an audio channel allocation of one from among 10.2 channels, 22.2 channels and 30.2 channels.

2. The data transmitting apparatus as claimed in claim 1, wherein, the generated metadata packet further comprises at least one of fields indicating both a stream identification information corresponding to the multi-channel audio data and the number of streams, if the data receiving apparatus supports the multi-streams audio, the multi-stream audio being arranged to correspond to multi-stream video of a multi-view environment.

3. The data transmitting apparatus as claimed in claim 1, wherein, the multi-channel audio data comprising an audio signal of more than 9 channels.

4. A data receiving apparatus (200) **characterised by**:
a receiving unit (210) for receiving a metadata packet for 3D multi-channel audio data from a data transmitting apparatus (100); and
a packet parsing unit (220) for parsing the received metadata packet;
wherein the received metadata packet comprises:
an audio channel allocation standard type field that indicates a channel allocation standard type of the multi-channel audio data; and
a 3D channel / speaker allocation field indicating a channel information of the multi-channel audio data and an allocation of speaker locations for the channel allocation standard type indicated in the audio channel allocation standard type field, the 3D channel / speaker allocation field being 1 byte,
a channel count field indicating the number of the 3D multi-channel audio data, and the channel count field being 5 bits, and
wherein the audio channel allocation standard type field indicates an audio channel allocation of one from among 10.2 channels, 22.2 channels and 30.2 channels.

5. The data receiving apparatus as claimed in claim 4, wherein the received metadata packet further comprises at least one of fields indicating both a stream identification information corresponding to the multi-channel audio data and the number of streams, if the data receiving apparatus supports the multi-streams audio, the multi-stream audio being arranged to correspond to multi-stream video of a multi-view environment.

6. The data receiving apparatus as claimed in claim 4, wherein the multi-channel audio data comprises an audio signal of more than 9 channels.

7. A data transmitting method **characterised by**:
generating a metadata packet for 3D multi-channel audio data (S1610); and
transmitting the generated metadata packet to a data receiving apparatus (S1620);
wherein the generated metadata packet comprises:
an audio channel allocation standard type field that indicates a channel allocation standard type of the multi-channel audio data; and
a 3D channel / speaker allocation field indicating a channel information of the multi-channel audio data and an allocation of speaker locations for the channel allocation standard type indicated in the audio channel allocation standard type field, the 3D channel / speaker allocation field being 1 byte,
a channel count field indicating the number of the 3D multi-channel audio data, and the channel count field being 5 bits, and
wherein the audio channel allocation standard type field indicates an audio channel allocation of one from among 10.2 channels, 22.2 channels and 30.2 channels.

8. A data receiving method **characterised by**:
receiving a metadata packet for 3D multi-channel audio data from a data transmitting apparatus (S1710); and
parsing the received the metadata packet (S1720);
wherein the received metadata packet comprises:
an audio channel allocation standard type field that indicates a channel allocation standard type of the multi-channel audio data; and
a 3D channel / speaker allocation field indicating a channel information of the multi-channel audio data and an allocation of speaker locations for the channel allocation standard type indicated in the audio channel allocation standard type field, the 3D channel / speaker allocation field being 1 byte,
a channel count field indicating the number of the 3D multi-channel audio data, and the channel count field being 5 bits, and
wherein the audio channel allocation standard type field indicates an audio channel allocation of one from among 10.2 channels, 22.2 channels and 30.2 channels.

## Patentansprüche

1. Datenübertragungseinrichtung (100), **gekennzeichnet durch**:
eine Paketerzeugungseinheit (110) zum Erzeugen eines Metadatenpakets für 3D-Mehrkanalaudiodaten und
eine Sendeeinheit (120) zum Senden des erzeugten Metadatenpakets an eine Empfangseinrichtung (200) und
wobei das erzeugte Metadatenpaket Folgendes umfasst:
ein Audiokanalzuweisungsstandardart-Feld, das eine Kanalzuweisungsstandardart der Mehrkanalaudiodaten angibt, und
ein 3D-Kanal/Lautsprecher-Zuweisung-Feld, das Kanalinformationen der Mehrkanalaudiodaten und eine Zuweisung von Lautsprecherstandorten für die in dem Audiokanalzuweisungsstandardart-Feld angegebene Kanalzuweisungsstandardart angibt, wobei das 3D-Kanal/Lautsprecher-Zuweisung-Feld 1 Byte ist,
ein Kanalzählung-Feld, das die Anzahl der 3D-Mehrkanalaudiodaten angibt, und wobei das Kanalzählung-Feld 5 Bit sind, und
wobei das Audiokanalzuweisungsstandardart-Feld eine Audiokanalzuweisung von 10.2-Kanälen oder 22.2-Kanälen oder 30.2-Kanälen angibt.

2. Datenübertragungseinrichtung nach Anspruch 1, wobei das erzeugte Metadatenpaket ferner mindestens eines von Feldern umfasst, die sowohl Stream-Identifikationsinformationen entsprechend den Mehrkanalaudiodaten als auch die Anzahl von Streams angeben, falls die Datenempfangseinrichtung das Multi-Stream-Audio unterstützt, wobei das Multi-Stream-Audio dazu eingerichtet ist, Multi-Stream-Video einer Multi-View-Umgebung zu entsprechen.

3. Datenübertragungseinrichtung nach Anspruch 1, wobei die Mehrkanalaudiodaten ein Audiosignal von mehr als 9 Kanälen umfassen.

4. Datenempfangseinrichtung (200), **gekennzeichnet durch**:
eine Empfangseinheit (210) zum Empfangen eines Metadatenpakets für 3D-Mehrkanalaudiodaten von einer Datenübertragungseinrichtung (100) und
eine Paketparsingeinheit (220) zum Parsen des empfangenen Metadatenpakets;
wobei das empfangene Metadatenpaket Folgendes umfasst:
ein Audiokanalzuweisungsstandardart-Feld, das eine Kanalzuweisungsstandardart der Mehrkanalaudiodaten angibt, und
ein 3D-Kanal/Lautsprecher-Zuweisung-Feld, das Kanalinformationen der Mehrkanalaudiodaten und eine Zuweisung von Lautsprecherstandorten für die in dem Audiokanalzuweisungsstandardart-Feld angegebene Kanalzuweisungsstandardart angibt, wobei das 3D-Kanal/Lautsprecher-Zuweisung-Feld 1 Byte ist,
ein Kanalzählung-Feld, das die Anzahl der 3D-Mehrkanalaudiodaten angibt, und wobei das Kanalzählung-Feld 5 Bit sind, und
wobei das Audiokanalzuweisungsstandardart-Feld eine Audiokanalzuweisung von 10.2-Kanälen oder 22.2-Kanälen oder 30.2-Kanälen angibt.

5. Datenempfangseinrichtung nach Anspruch 4, wobei das erzeugte Metadatenpaket ferner mindestens eines von Feldern umfasst, die sowohl Stream-Identifikationsinformationen entsprechend den Mehrkanalaudiodaten als auch die Anzahl von Streams angeben, falls die Datenempfangseinrichtung das Multi-Stream-Audio unterstützt, wobei das Multi-Stream-Audio dazu eingerichtet ist, Multi-Stream-Video einer Multi-View-Umgebung zu entsprechen.

6. Datenempfangseinrichtung nach Anspruch 4, wobei die Mehrkanalaudiodaten ein Audiosignal von mehr als 9 Kanälen umfassen.

7. Datenübertragungsverfahren, **gekennzeichnet durch**:
Erzeugen eines Metadatenpakets für 3D-Mehrkanalaudiodaten (S1610) und
Senden des erzeugten Metadatenpakets an eine Datenempfangseinrichtung (S1620),
wobei das erzeugte Metadatenpaket Folgendes umfasst:
ein Audiokanalzuweisungsstandardart-Feld, das eine Kanalzuweisungsstandardart der Mehrkanalaudiodaten angibt, und
ein 3D-Kanal/Lautsprecher-Zuweisung-Feld, das Kanalinformationen der Mehrkanalaudiodaten und eine Zuweisung von Lautsprecherstandorten für die in dem Audiokanalzuweisungsstandardart-Feld angegebene Kanalzuweisungsstandardart angibt, wobei das 3D-Kanal/Lautsprecher-Zuweisung-Feld 1 Byte ist,
ein Kanalzählung-Feld, das die Anzahl der 3D-Mehrkanalaudiodaten angibt, und wobei das Kanalzählung-Feld 5 Bit sind, und
wobei das Audiokanalzuweisungsstandardart-Feld eine Audiokanalzuweisung von 10.2-Kanälen oder 22.2-Kanälen oder 30.2-Kanälen angibt.

8. Datenempfangsverfahren, **gekennzeichnet durch**:
Empfangen eines Metadatenpakets für 3D-Mehrkanalaudiodaten von einer Datenübertragungseinrichtung (S1710) und
Parsen des empfangenen Metadatenpakets (S1720),
wobei das empfangene Metadatenpaket Folgendes umfasst:
ein Audiokanalzuweisungsstandardart-Feld, das eine Kanalzuweisungsstandardart der Mehrkanalaudiodaten angibt, und
ein 3D-Kanal/Lautsprecher-Zuweisung-Feld, das Kanalinformationen der Mehrkanalaudiodaten und eine Zuweisung von Lautsprecherstandorten für die in dem Audiokanalzuweisungsstandardart-Feld angegebene Kanalzuweisungsstandardart angibt, wobei das 3D-Kanal/Lautsprecher-Zuweisung-Feld 1 Byte ist,
ein Kanalzählung-Feld, das die Anzahl der 3D-Mehrkanalaudiodaten angibt, und wobei das Kanalzählung-Feld 5 Bit sind, und
wobei das Audiokanalzuweisungsstandardart-Feld eine Audiokanalzuweisung von 10.2-Kanälen oder 22.2-Kanälen oder 30.2-Kanälen angibt.

## Revendications

1. Appareil de transmission de données (100) **caractérisé par** :
une unité de génération de paquets (110) pour générer un paquet de métadonnées pour des données audio multi-canaux 3D ; et
une unité de transmission (120) pour transmettre le paquet de métadonnées généré à un appareil de réception (200) ; et
dans lequel le paquet de métadonnées généré comprend :
un champ de type de norme d'allocation de canaux audio qui indique un type de norme d'allocation de canaux audio des donnée audio multi-canaux ; et
un champ d'allocation de canaux / haut-parleurs 3D indiquant une information de canal des données audio multi-canaux et une allocation d'emplacements de haut-parleurs pour le type de norme d'allocation de canaux audio indiqué dans le champ de type de norme d'allocation de canaux audio, le champ d'allocation de canaux / haut-parleurs 3D étant de 1 octet,
un champ de compte de canaux indiquant le nombre des données audio multi-canaux 3D, et le champ de compte de canaux étant de 5 bits, et
dans lequel le champ de type de norme d'allocation de canaux audio indique une allocation de canaux audio parmi 10,2 canaux, 22,2 canaux et 30,2 canaux.

2. Appareil de transmission de données selon la revendication 1, dans lequel le paquet de métadonnées généré comprend en outre au moins un de champs indiquant à la fois une information d'identification de flux correspondant aux données audio multi-canaux et le nombre de flux, si l'appareil de réception de données prend en charge l'audio multiflux, l'audio multiflux étant agencée pour correspondre à une vidéo multiflux d'un environnement multivues.

3. Appareil de transmission de données selon la revendication 1, dans lequel les données audio multi-canaux comprennent un signal audio de plus de 9 canaux.

4. Appareil de réception de données (200) **caractérisé par** :
une unité de réception (210) destinée à recevoir un paquet de métadonnées pour des données audio multi-canaux 3D depuis un appareil de transmission de données (100) ; et
une unité d'analyse syntaxique de paquets (220) destinée à analyser syntaxiquement le paquet de métadonnées reçu ;
dans lequel le paquet de métadonnées reçu comprend :
un champ de type de norme d'allocation de canaux audio qui indique un type de norme d'allocation de canaux audio des donnée audio multi-canaux ; et
un champ d'allocation de canaux / haut-parleurs 3D indiquant une information de canal des données audio multi-canaux et une allocation d'emplacements de haut-parleurs pour le type de norme d'allocation de canaux audio indiqué dans le champ de type de norme d'allocation de canaux audio, le champ d'allocation de canaux / haut-parleurs 3D étant de 1 octet,
un champ de compte de canaux indiquant le nombre des données audio multi-canaux 3D, et le champ de compte de canaux étant de 5 bits, et
dans lequel le champ de type de norme d'allocation de canaux audio indique une allocation de canaux audio parmi 10,2 canaux, 22,2 canaux et 30,2 canaux.

5. Appareil de réception de données selon la revendication 4, dans lequel le paquet de métadonnées reçu comprend en outre au moins un de champs indiquant à la fois une information d'identification de flux correspondant aux données audio multi-canaux et le nombre de flux, si l'appareil de réception de données prend en charge l'audio multiflux, l'audio multiflux étant agencée pour correspondre à une vidéo multiflux d'un environnement multivues.

6. Appareil de réception de données selon la revendication 4, dans lequel les données audio multi-canaux comprennent un signal audio de plus de 9 canaux.

7. Procédé de transmission de données **caractérisé par** :
la génération d'un paquet de métadonnées pour des données audio multi-canaux 3D (S1610) ; et
la transmission du paquet de métadonnées généré à un appareil de réception de données (S1620) ;
dans lequel le paquet de métadonnées généré comprend :
un champ de type de norme d'allocation de canaux audio qui indique un type de norme d'allocation de canaux audio des donnée audio multi-canaux ; et
un champ d'allocation de canaux / haut-parleurs 3D indiquant une information de canal des données audio multi-canaux et une allocation d'emplacements de haut-parleurs pour le type de norme d'allocation de canaux audio indiqué dans le champ de type de norme d'allocation de canaux audio, le champ d'allocation de canaux / haut-parleurs 3D étant de 1 octet,
un champ de compte de canaux indiquant le nombre des données audio multi-canaux 3D, et le champ de compte de canaux étant de 5 bits, et
dans lequel le champ de type de norme d'allocation de canaux audio indique une allocation de canaux audio parmi 10,2 canaux, 22,2 canaux et 30,2 canaux.

8. Procédé de réception de données **caractérisé par** :
la réception d'un paquet de métadonnées pour des données audio multi-canaux 3D depuis un appareil de transmission de données (S1710) ; et
l'analyse syntaxique du paquet de métadonnées reçu (S1720) ;
dans lequel le paquet de métadonnées reçu comprend :
un champ de type de norme d'allocation de canaux audio qui indique un type de norme d'allocation de canaux audio des donnée audio multi-canaux ; et
un champ d'allocation de canaux / haut-parleurs 3D indiquant une information de canal des données audio multi-canaux et une allocation d'emplacements de haut-parleurs pour le type de norme d'allocation de canaux audio indiqué dans le champ de type de norme d'allocation de canaux audio, le champ d'allocation de canaux / haut-parleurs 3D étant de 1 octet,
un champ de compte de canaux indiquant le nombre des données audio multi-canaux 3D, et le champ de compte de canaux étant de 5 bits, et
dans lequel le champ de type de norme d'allocation de canaux audio indique une allocation de canaux audio parmi 10,2 canaux, 22,2 canaux et 30,2 canaux.
